# EUROPEAN PATENT SPECIFICATION

(11) **EP 4 196 937 B1**
(45) Date of publication and mention of the grant of the patent: **18.11.2026**
(21) Application number: 21766346.7
(22) Date of filing: 17.08.2021
(51) Int. Cl.: G06Q 10/08, G01C 21/20, H04W 4/024

(54) **METHODS USING ELECTRONIC SHELF LABELS TO IMPROVE ITEM GATHERING IN STORE AND WAREHOUSE SYSTEMS**
VERFAHREN MIT ELEKTRONISCHEN REGALETIKETTEN ZUR VERBESSERUNG DER ARTIKELSAMMLUNG IN LAGER- UND LAGERSYSTEMEN
PROCÉDÉS UTILISANT DES ÉTIQUETTES DE RAYONS ÉLECTRONIQUES POUR AMÉLIORER LA COLLECTE D'ARTICLES DANS DES SYSTÈMES DE MAGASINS ET D'ENTREPÔTS

(30) Priority: 17.08.2020 US 202063066623 P; 18.09.2020 US 202063080152 P; 16.08.2021 US 202117402860
(43) Date of publication of application: 21.06.2023
(73) Proprietor: QUALCOMM INCORPORATED, San Diego, California 92121-1714 (US)
(72) Inventor: GRAUBE, Nicolas, San Diego, California 92121-1714 (US); GANDHI, Ketal, San Diego, California 92121-1714 (US); MILLER, Arthur, San Diego, California 92121-1714 (US); JARVIS, Murray, San Diego, California 92121-1714 (US); TARLOW, Benjamin, San Diego, California 92121-1714 (US); SRINIVASAN, Ramji, San Diego, California 92121-1714 (US); HISCOCK, Paul Dominic, San Diego, California 92121-1714 (US); ALLAN, Thomas, San Diego, California 92121-1714 (US); VARELA, Mafalda Pereira, San Diego, California 92121-1714 (US); PRASAD, Abhishek, San Diego, California 92121-1714 (US); BURT, Stephen, San Diego, California 92121-1714 (US); SCAGNOL, Mauro, San Diego, California 92121-1714 (US); HEYDON, Robin, San Diego, California 92121-1714 (US); COELHO DE SOUZA, Aline, San Diego, California 92121-1714 (US)
(74) Representative: Reddie & Grose LLP
(86) International application number: PCT/US2021/046197
(87) International publication number: WO 2022/040113

(56) References cited:
- US-A1- 2020 132 470
- ANONYMOUS: "Electronic shelf label - Wikipedia", 28 July 2020 (2020-07-28), XP055860574, Retrieved from the Internet <URL:https://en.wikipedia.org/w/index.php?title=Electronic_shelf_label&oldid=970048706> [retrieved on 20211111]

## Description

### RELATED APPLICATIONS

### BACKGROUND

A growing segment of the economy worldwide involves services that require an efficient system of circulation of people and goods in a store to separate workers or customers from each other for social distancing purposes. Another growing segment of the economy involves services that enable customers to purchase items from stores and warehouses online while having the products delivered to their residence or available for pickup. Recent experiences with the global pandemic have accelerated this trend and placed strong demands on the retailers and middlemen who provide such services. US 2020132470 A1 describes a method useful to providing customized in-store navigation.

### SUMMARY

The present invention is defined by the appended claims. Further embodiments are provided by the description.

### BRIEF DESCRIPTION OF THE DRAWINGS

The accompanying drawings, which are incorporated herein and constitute part of this specification, illustrate exemplary embodiments of the claims, and together with the general description given above and the detailed description given below, serve to explain the features of the claims.
FIG. 1A is a system block diagram illustrating a store picker system suitable for implementing any of the various embodiments.
FIG. 1B is a system block diagram illustrating an example configuration of signal communications in a store picker system implementing some embodiments.
FIG. 1C is a system block diagram illustrating another example configuration of signal communications in a store picker system implementing some embodiments.
FIG. 1D is a system block diagram illustrating communications included in a store picker system according to various embodiments.
FIG. 2A is a process block diagram illustrating tasks performed in setting up a store picker system according to various embodiments.
FIG. 2B is a process block diagram illustrating tasks performed in two variants of a store picking process according to various embodiments.
FIG. 3 is a component block diagram illustrating an example computing and wireless modem system on a chip suitable for use in a user mobile device implementing any of the various embodiments.
FIG. 4 is a diagram illustrating inter-ESL communications used to determine locations of each ESL in a dense deployment of such devices on shelves within an aisle in accordance with various embodiments.
FIG. 5 is a diagram illustrating inter-ESL communications used to estimate the number of persons within an aisle in accordance with some embodiments.
FIG. 6 is a communication flow diagram illustrating example communications between ESLs and a user mobile device used to estimate the location of the user mobile device in accordance with some embodiments.
FIG. 7A is a process flow diagram illustrating a method for supporting in-store product picking performed by a processor of a store management entity server in accordance with various embodiments.
FIG. 7B is a process flow diagram illustrating a method for supporting in-store product picking performed by a processor of a store management entity server in accordance with various embodiments.
FIG. 7C is a process flow diagram illustrating a method for supporting in-store product picking performed by a processor of a store management entity server in accordance with various embodiments.
FIG. 8 is a process flow diagram illustrating a method for supporting in-store product picking performed by a processor of a store management entity server in accordance with various embodiments.
FIG. 9 is a process flow diagram illustrating a method for supporting in-store product picking performed by a processor of a store management entity server in accordance with various embodiments.
FIG. 10 is a process flow diagram illustrating a method for supporting in-store product picking performed by a processor of a store management entity server in accordance with various embodiments.
FIG. 11 is a process flow diagram illustrating a method for supporting in-store product picking performed by a processor of a store management entity server in accordance with various embodiments.
FIG. 12 is a process flow diagram illustrating a method for supporting in-store product picking performed by a processor of a store management entity server in accordance with various embodiments.
FIG. 13 is a process flow diagram illustrating a method for supporting in-store product picking performed by a processor of a store management entity server in accordance with various embodiments.
FIG. 14 is a process flow diagram illustrating a method for supporting in-store product picking performed by a processor of a store management entity server in accordance with various embodiments.
FIG. 15 is a process flow diagram illustrating a method for supporting in-store product picking performed by a processor of a store management entity server in accordance with various embodiments.
FIG. 16 is a process flow diagram illustrating a method for supporting in-store product picking performed by a processor of an ESL in accordance with various embodiments.
FIG. 17 is a process flow diagram illustrating a method for supporting in-store product picking performed by a processor of a store management entity server in accordance with various embodiments.
FIG. 18 is a process flow diagram illustrating a method performed by a processor of a store management entity server for controlling a network of ESLs in a store in accordance with various embodiments.
FIG. 19 is a process flow diagram illustrating a method for supporting in-store product picking performed by a processor of a store management entity server in accordance with various embodiments.
FIG. 20 is a process flow diagram illustrating a method performed by a processor of a store management entity server for controlling a network of ESLs in a store in accordance with various embodiments.
FIG. 21 is a process flow diagram illustrating a method performed by a processor of a store management entity server for controlling a network of ESLs in a store in accordance with various embodiments.
FIG. 22 is a component block diagram of an ESL suitable for use with various embodiments
FIG. 23 is a component block diagram of a user mobile device suitable for use with various embodiments.
FIG. 24 is a component block diagram of a server suitable for use with various embodiments.
FIG. 25 is a system block diagram illustrating a system for deploying and setting up a store picker system implementing some embodiments.
FIG. 26 is a system block diagram illustrating another system for deploying and setting up a store picker system implementing some embodiments.
FIG. 27. a component block diagram illustrating an ESL dispenser implementing some embodiments.
FIGS. 28A and 28B are component block diagrams illustrating an ESL cartridge in a closed and dispensing configuration, respectively, implementing some embodiments.
FIG. 29 is a component block diagram illustrating an ESL cartridge dispenser with micro-cartridge for retaining ESLs implementing some embodiments.
FIG. 30 is a process flow diagram illustrating a method of deploying and setting up a store picker system in accordance with various embodiments.
FIGS. 31A and 31B are process flow diagrams illustrating methods performed by a processor of an ESL dispenser in accordance with some embodiments.
FIGS. 32A-32D are process flow diagrams illustrating methods performed by a processor of store management entity server for exchanging information with an ESL dispenser in accordance with some embodiments.
FIGS. 33A-33E are process flow diagrams illustrating methods for supporting in-store product picking performed by a processor of a store management entity server in accordance with various embodiments.
FIGS. 34A-34E are process flow diagrams illustrating methods for supporting in-store product picking performed by a processor of a user mobile device in accordance with various embodiments.

### DETAILED DESCRIPTION

Various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the claims.

Various embodiments include methods, and systems implementing the methods, for improving the circulation of customers as well as improving the effectiveness and efficiency of individuals or entities that collect products on a shopping list from stores or other locations for themselves or on behalf of customers. The act of collecting products on a shopping list is referred to herein as "store picking." An individual doing the store picking is referred to herein as a "store picker." Various embodiments provide better tools for guiding store pickers to products and/or organizing those products on shelves and in aisles or other sections. Various embodiments provide an integrated, holistic approach to improving activities of online retailing by providing tools for organizing store shelving, electronic shelf labels, and user mobile device tools used by store pickers. Through the use of such an integrated, holistic approach, significant improvements in store picking, as well as the effectiveness of warehousing and shelf stocking may be achieved. Some embodiments may also be deployed to individual user mobile devices (e.g., smart phones or similar user equipment (UE)), which may improve the user experience while also improving power savings on the individual UEs.

Various embodiments may make better use of shelf space and store/warehouse volume by increasing the density of products in shelving. Placing products closer together in shelving makes better use of the store/warehouse volume but also places products in close proximity, enabling opportunistic deficiencies in selecting products with less foot traffic. Increasing the density of shelving and products stocking could reduce the store picker efficiency by making it more difficult to find particular products in the densely stocked shelves. To address this, various embodiments may include improvements to ESL devices, improvements to mapping ESLs for the creation and maintenance of detailed maps of the locations of products within a store (i.e., a planogram), and/or improvements to the user mobile device tools used by store pickers to locate particular products in a "shopping list." Further improvements provided by various embodiments support establishing and maintaining ESLs within a store/warehouse facility, thereby improving the efficiency and economics of such businesses.

The term "electronic shelf label" or "ESL" is used herein to refer to electronic displays that can be placed or secured to, in, on, or near store shelves. The ESL may include a processor, memory, a display, and one or more wireless transceivers, in which the processor may be programmed or provided data to render images (e.g., text, bar codes, trademarks, etc.) that communicate information (e.g., to people) regarding products near the device. In some aspects, ESLs may be battery powered to enable placement on or near products without the need for a power infrastructure. Alternatively, an ESL may be supplied power by the shelve to which the ESL is secured. ESLs may be reprogrammed or updated (e.g., via wireless communication link) so that product information rendered on the display can be updated at any time. Thus, the ESLs may serve the function of paper shelf labels with the added efficiency of enabling product information (e.g., prices) to be changed without physically replacing shelf labels. While various embodiments are described with reference to ESLs being placed on shelves within a store, ESLs may also be positioned on large goods (e.g., furniture, appliances, etc.), on or near stands or stacks of goods, on pallets on which products are positioned, and other locations where products may be offered for sale or selection. Further, ESLs may be used for other purposes, such as placed on doors to indicate vacant or occupied status. Thus, the "S" in ESL is not intended to limit the claims to labels that are only positioned on shelves. In addition or alternatively, ESLs may be extended reality (XR) tags configured to send signals to XR glasses (e.g., smart glasses, display screen of a smart phone, or other device configured to provide extended reality displays) that cause the XR glasses to generate a visible display. The content visible displays generated on XR glasses (and the like) based on signals of the XR tag (e.g., Lays Potato Chips $1.99) may be viewable while the user looks at the ESL. The information provided by the XR tags may be the same or different than what is viewable in the ESL to normal users that don't have XR glasses or another XR device. In some embodiments, the ESL may not include a display, but rather operate as an XR anchor to send operation messages and other information to XR devices. For example, when a user wearing XR glasses looks at a product (e.g., Lays Potato Chips), a small window appears on a user interface (UI) showing the product information (e.g., Lays Potato Chips $1.99).

The term "mobile wireless device" is used herein to refer to any one or all of customer smartphones, a store picker's mobile wireless device, cellular telephones, portable computing devices, laptop computers, tablet computers, smartbooks, ultrabooks, palmtop computers, multimedia Internet-enabled cellular telephones, wearable devices including smart watches, smart clothing, smart glasses, earbuds, headphones, smart wrist bands, and similar electronic devices that include a memory, wireless communication components and a programmable processor.

The term "user mobile device" is used to refer to a mobile wireless device that is specifically configured to support users within a store, such as the store picker job functioning within a store picker system according to various embodiments. A store picker wireless device may include a processor, memory, an electronic display, wireless transceiver(s) including a Bluetooth transceiver and Wi-Fi transceiver, a barcode scanner, and other components useful for store picking.

The term "store" when used herein with reference to a physical place refers to a wholesale, retail, or other building in which products are stored for sale and/or distribution. A store may include (but is not limited to) a warehouse, fulfillment center, department store, specialty store, market, supermarket, hypermarket, convenience store, discount store, super store, and/or other storage facility.

The term "product" is used herein to refer to one or more items, articles, merchandise, or substances that are collected, refined, manufactured, and/or assembled and are maintained in a store or the like, such as products that may be identified on a shopping list and picked by store pickers.

The term "shopping list" is used herein to refer to any list of multiple items to be picked up and/or purchased. A shopping list may include items for one order (e.g., one customer), items for multiple orders (e.g., multiple customers), items of a partial set of an order, items of partial sets of multiple orders, etc.

The term "system on chip" (SOC) is used herein to refer to a single integrated circuit (IC) chip that contains multiple resources and/or processors integrated on a single substrate. A single SOC may contain circuitry for digital, analog, mixed-signal, and radio-frequency functions. A single SOC may also include any number of general purpose and/or specialized processors (digital signal processors, modem processors, video processors, etc.), memory blocks (e.g., ROM, RAM, Flash, etc.), and resources (e.g., timers, voltage regulators, oscillators, etc.). SOCs may also include software for controlling the integrated resources and processors, as well as for controlling peripheral devices.

The term "system in a package" (SIP) may be used herein to refer to a single module or package that contains multiple resources, computational units, cores and/or processors on two or more IC chips, substrates, or SOCs. For example, a SIP may include a single substrate on which multiple IC chips or semiconductor dies are stacked in a vertical configuration. Similarly, the SIP may include one or more multichip modules (MCMs) on which multiple ICs or semiconductor dies are packaged into a unifying substrate. A SIP may also include multiple independent SOCs coupled together via high speed communication circuitry and packaged in close proximity, such as on a single motherboard or in a single mobile wireless device. The proximity of the SOCs facilitates high speed communications and the sharing of memory and resources.

In overview, various embodiments include methods, and systems implementing the methods supporting automatic ESL association to product through the combination of ESLs relative proximity with few item association and planogram reconciliation. Such systems and methods enable a management system to determine the locality and relative position of ESLs both "in shelves" and "across aisle." In addition, such systems and methods provide the management system information useful in mapping various ESLs to a planogram that may be maintained by a central system or server. Such a planogram may be used to guide store pickers to particular products. Such systems include user mobile devices used by store pickers that can inform store pickers of their proximity to a particular product, as well as provide guidance for efficiently navigating aisles or sections of a store to locate and select products on a shopping list. By using large-scale deployment of ESLs equipped with wireless transceivers, such systems provide an infra-structure of numerous anchoring points useful for determining the proximity of each user mobile device within the store/warehouse and with respect to particular products. The use of store picker and customer mobile wireless devices may enable a central system, such as a store management entity server, to determine the density and movements of individuals within the facility by tracing the location of their respective user mobile devices to the large-scale deployment of ESLs.

Various embodiments also provide tools for deploying and maintaining the store picker system by using the communication capabilities of the ESLs to assist in the deployment of ESL in the store more efficiently than can be achieved using manual mapping of devices, as well as using user mobile devices as moving Access Points to diagnose ESLs that have issues establishing communication with the fixed infrastructure. For example, a user mobile device may be repurposed by the store management entity server by configuring the user mobile device with a list of ESLs and or a route to follow through the store/warehouse so that the user mobile device can pass by selected ESLs to gather information as a mobile access point and communicate information to the store management entity server to enable the user mobile device to diagnose ESLs, such as establish communication with or obtain information regarding ESLs that are no longer communicating with the store management entity server.

As described in more detail with reference to the figures, various embodiments provide systems that include a store management entity server within a store that is coupled to a plurality of wireless access points (e.g., Wi-Fi, Bluetooth Low Energy (BLE) access points, and/or the like) that are deployed throughout the store/warehouse and configured to establish wireless communication links (e.g., Wi-Fi or BLE) with a large number of ESLs, which are configured to transmit and receive BLE messages that enable user mobile devices of store pickers and customers to quickly locate particular products in a shopping list. By using position information as well as identity information communicated through BLE messages, the store management entity server can track the location of a particular store picker or customer within the store/warehouse and, using a map of product ESLs, provide directions to a next item on a shopping list along a route through the store/warehouse based on product location as well as store picker/customer traffic.

In some embodiments, the store management entity server within a store (or other facility) may use the items in the shopping list to calculate or generate a route (or at least part of the route) that the user can follow in order to efficiently pick each item on the shopping list. In some embodiments, the store management entity server may calculate such a route in advance of the first item being picked, and transmit to the user mobile device a route for picking up items on the list. In some embodiments, no route may be calculated in advance by the store management entity server, and instead the store management entity server may determine a route and provide directions to the user via the user's mobile device to a next item on the shopping list. In some of these embodiments, the store management entity server may calculate or determine a route segment to the next item (e.g., using the strongest RF measurement) on the shopping list, such as after the user ups item A, the store management entity server may transmit to the user's mobile device a path or route through the store (or other facility) to item B, which has the strongest signal.

In some embodiments, the store management entity server may not use a map. For example, the store management entity server may determine the proximity of a user mobile device to any product can be estimated based on comparing the radio frequency (RF) signal measurements (e.g., RSSI) made by the user mobile device (which are reported via a wireless link to the server via an access point) to fingerprint measurement sets of ESLs associated with products that are stored in memory of the store management entity server. Similarly, closely positioned products may be derived this way and a route planned etc.

Various embodiments include tools that facilitate dense deployment of ESL and products within facility shelving, aisles, and sections of the store by supporting automatic determination of the location of many ESLs within a store. Such embodiments may include determining a coarse location of each ESL during a first phase using quick received signal strength indicator (RSSI) measurements between ESLs and APs to create approximately co-located sub-groups. In the second phase, measurements may be taken by ESLs in each sub-group using angle of arrival (AOA), high-accuracy-distance-measurements, ultrasonic ranging techniques, infrared ranging techniques, ultra-wideband (UWB) or RSSI to determine multiple range and/or angle measurements between subgroup ESLs from which the relative location of ESLs (and thus associated products) within each sub-group may be determined. In some embodiments, anchor points in each sub-group may be identified to enable each ESLs absolute location to be determined. Similarly, the location of one or more products to many ESLs in relation may be determined by using the coarse proximity measurements of each ESL towards each of its immediate neighbor, and then mapping a planogram representing physical placements of products in known aisles, sections, and shelfs to the ESL location. The association of few ESL with products may facilitate the entire reconciliation of the ESLs neighboring map against the planogram. This may further allow for all remaining ESLs to be associated with particular products.

Various embodiments include methods, and systems implementing the methods, for approximately locating a user mobile device within a store/warehouse leveraging wireless communications, such as BLE, Wi-Fi, or the like. Some embodiments include creating a schedule for ESLs to transmit a beacon with a unique code and identity. The unique code and identity may be known to the store management entity server and is mapped to the location of the ESL. To provide security against spoofing and non-authorized usage of the beacon signal by other parties/applications, as well as provide confidentiality for the contents of advertising packets and the address of the source of the transmission (e.g., the ESL), the unique code, as well as encryption keys used to encrypt the advertising packet can be protected by periodically rotating (i.e., time-varying) the unique code and advertisement encryption key. The identity of the ESL and the contents of the packet may be determined either in the user mobile device with knowledge of the rotation algorithm or opaquely forwarded to the store management entity server for processing. When the user mobile device detects a beacon, the user mobile device can estimate its proximity to the emitting ESL using measured RSSI of the detected signal. The user mobile device may communicate the time varying unique code to the store management entity server , which may use that information to map the code to the ESLs location within the store and hence determine an approximate location of the user mobile device.

Some embodiments enable accurately locating a user mobile device within a store/warehouse by leveraging information from sets of ESLs deployed on either side of an aisle and that wake up at about the same time (e.g., within seconds of one another). In some embodiments, one ESL in the group may transmits a special advertising packet (e.g., using BLE), that causes the user mobile device to transmit an advertising response packet. In such embodiments, the ESLs in the set of ESLs may receive the same packet. To resolve phase offsets due to drift in each ESL's local oscillator, the ESLs in the set of ESLs may continue to transmit a tone signal while receiving the tone signals of all other ESLs in the set, and process the received tone signals to synchronize their local oscillators, thereby correcting the phase of all the received packets. Each ESL may then know the relative phase of the signal from the user mobile device, which given the true location of each ESL, may be used by the store management entity server to determine an accurate location of the user mobile device. Alternatively or additionally, other methods may be used for determining ESL-to-ESL relative positions with varying accuracy, as well as positions with respect to user mobile devices. Similarly, relative positioning may be determined between user mobile devices and access points, as well as between each access point and the ESLs.

Informed of the accurate location of the user mobile device, the store management entity server can then provide precise guidance to the user mobile device (and user thereof) to the next item on a shopping list. In some embodiments, the shopping list may be dynamic and the "next" item on a shopping list may be determined by the store management entity server based on the location of the user mobile device with respect to the store's location of products on the shopping list. Thus, the next item on the list may change as the individual moves around, particularly if the person departs from the originally defined path through the store. For example, the next item on a displayed shopping list may be the item or items that are closest to the current location of the customer or store picker.

In some embodiments, when the store management entity server determines that the store picker is close enough to the ESL associated with the next item on the shopping list to see the ESL, the store management entity server may transmit an indication to that ESL to activate the visible display or generate another visible or audible indication to attract the user's attention. For example, the ESL may turn on or flash a light or other visible indication, such as from a light emitting diode (LED) or varying the brightness of a backlit display to attract the store picker to the product. Alternatively or additionally, the indication may include an audio indication (i.e., sound(s) and/or speech). In embodiments, the ESL may provide an audible or tactile (e.g., vibrating) indication. Also in some embodiments, as the picker approaches the ESL even closer, the notification (visual, audible, tactile) may change such as in frequency (e.g., color or tone), periodicity (e.g., flashes per second), or intensity (e.g., brightness or volume). For example, as the user mobile device approaches the ESL the intensity may increase. In some embodiments, the indication may be more intense (e.g., brighter, louder, or faster) or different types of indication may be used or added when the user mobile device is determined to be further away. Changing the indication in this way may help the user notice the indication from further away. In some embodiments, the notification may change based on time. For example, in response to determining that the user mobile device is close enough to see the ESL (i.e., within the predetermined distance) but remains an extended distance from the ESL for a predetermined length of time (e.g., the user is standing still in the aisle looking at other products), this may be an indication that the picker cannot find the item or ESL and needs additional assistance. Thus, in response to determining the user mobile device is within the predetermined distance from the ESL but has remained at least some other shorter distance from the ESL for a predetermined period, the indication may be modified to be more intense (e.g., brighter, louder, or faster) or a different types of indication may be rendered.

In some embodiments, the indication may change based on other factors, such as whether other individuals (e.g., customers) are nearby. For example, the indication may be more subtle (e.g., not as loud or bright as it otherwise would be) when others are determined to be present near the ESL so as not to disturb the other individuals.

In some embodiments, different indications or types of indications may be used for different circumstances. For example, an ESL may initially generate a blinking light, which may be difficult for a user to detect (e.g., because there is an object blocking line of sight between the picker and the ESL or because some other noise is being generated that makes audible alerts difficult to hear). Thus, after some time the ESO may emit a sound/vibration in addition or as an alternative to the initial indication.

When there are multiple products on the shopping list in a given aisle or other section, all ESLs associated with those products in a given aisle or section may flash at the same time, thereby informing the store picker of all product locations in the vicinity. In some embodiments, the store management entity server may control ESLs in the vicinity of a user mobile device to flash their LEDs, vary the brightness of a backlit display, and/or generate another visible/audible indication in a coordinated fashion to provide a guide the individual towards the ESL associated with the next product on the shopping list (e.g., as flashes LEDs, vary the brightness of a backlit display or generate another visible indication sequentially in a pattern that leads toward the ESL of the next product on the shopping list like runway landing lights). Alternatively or additionally, such coordinated indications may use sound (i.e., audio indications).

The determination as to whether the user mobile device is close enough to see the ESL may be made by the store management entity server may in response to detecting that the user mobile device is within a predetermined proximity of the ESL (e.g., 3 or 4 meters).

In some embodiments, the store management entity server may send navigation information to augmented reality (AR) devices or XR devices, such as smart glasses, worn by store pickers, which may be in addition to product information communicated to AR or XR devices by XR tags on or associated with ESLs. Such an AR display may include path indications and visual indications highlighting the ESL of a next item on the shopping list as the store picker approaches, thereby providing localizing signals to the user that are private. Alternatively or additionally, the indication may include an audio indication.

The store management entity server may leverage the accurate location information to improve the battery life of ESLs without delaying store pickers by increasing of time between successive ESL wake ups during normal passive operation when no store picker (or customer) is nearby, and reducing the time between wakeups when it is known that a store picker is nearby an ESL for a produce that is on the store picker's shopping list. In this way when the picker wants the next item in the list the user mobile device may have already been configured with a low-latency and so is able to wake up quickly and generate an appropriate indication (e.g., visual, audible, and/or tactile).

Various embodiment methods and systems enable improving the efficiency of the store picker processes by determining a most efficient route for one or more store pickers, for moving through the store, to obtain the items on their respective shopping lists. Such embodiments may include determining an efficient order of items on the shopping lists that minimizes overall travelled distance of the store picker completing the list. Some embodiments may include minimizing the overall time required to pick up every item in a given shopping list without consideration of travel distance, such as including identifying pathways that avoid congested areas. Some embodiments may include maximizing social distancing of all persons in the store, such as routing all individuals along pathways that avoid individuals crossing paths and/or maximize social distancing, or ensure everyone remains separated by a minimum separation distance. Such embodiments may further include determining the approximate position of the store pickers using wireless signaling as described above, and refining their positions using information from user mobile device inertial measurement units (IMUs) and map-fitting to create accurate positions.

By having information about the items on shopping lists and locations of store pickers and/or customers in the store, the store management entity server may further base or adjust the picking order of a particular shopping list, and overall travelled distance, while maintaining separation distances, avoiding congested aisles or sections of a store, avoiding interfering with other store pickers and/or customers (e.g., avoiding two people selecting the same product at the same time), avoiding personnel involved in replenishing stock, fixing equipment, cleaning floors or surfaces, and/or avoiding obstacles (e.g., pallets, cleaning robots, ladders, etc.). For example, the store management entity server may determine the level of congestion of an aisle or section by scheduling groups of ESLs on either side of that aisle or in a particular section to wake up concurrently and take turns transmitting and receiving wireless communication packets (e.g., BLE) to each other across the aisle to measure RSSI levels, which are reported to the store management entity server that knows the locations and paths between pairs of ESLs, and determines the location and level of congestion in the aisle. In some embodiments, a route (or at least part of the route) may be calculated in advance (e.g., before a first item is picked) by the store management entity server and communicated to the user's mobile device, while in other embodiments no route may be calculated in advance by the store management entity server and directions provided to the user's mobile device may be a route or path to the next item on the shopping list. In some embodiments, a route segment to the next item (e.g., with strongest RF measurement) may be calculated (e.g., after picking up an item) by the store management entity server, such as a path/route to a next item on the shopping list.

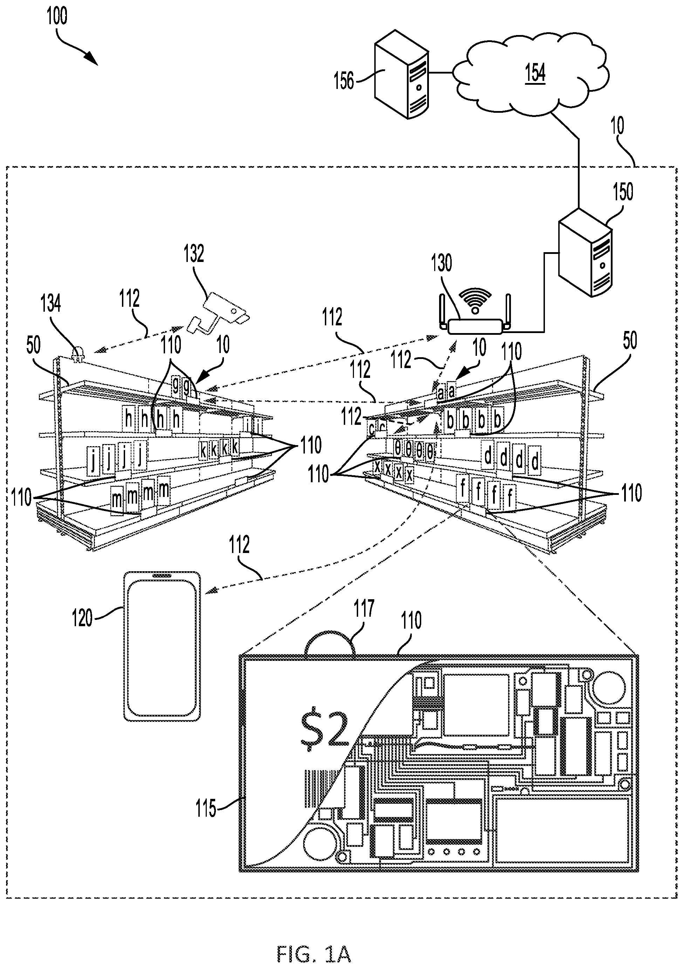

FIG. 1A is a component block diagram of an example store picker system 100 suitable for implementing various embodiments. System elements that may be deployed within a given store 10 may include a plurality of ESLs 110 deployed on shelves 50 that are configured to communicate with a number of access points 130 that are connected to a store management entity server 150. User mobile devices 120, which may be held, carried, or otherwise associated with a store picker may receive a beacon signal, such as through a wireless link 112 from ESLs and communicate with the store management entity server 150 via wireless communications, such as BLE, Wi-Fi, or cellular communications of various types.

ESLs110 may be positioned on shelves 50 associated with products (labeled a, b, c, d, e, f, g, h, i, j, k, and m). Each ESL 110 may include a display 115 on which is presented product name, product codes, prices, stocking information, barcodes, and the like. Some ESLs 110 may further include an LED 117 or other visible light generating devices configured to illuminate to draw the attention of a store picker and/or other customers as described herein. In some embodiments, some ESLs 110 may include a speaker or vibration-generating device to generate visual, audible, and/or tactile notifications. Each ESL 110 may include a beacon transmitter and be configured to detect neighboring ESLs, such as via BLE signals. Some ESLs 110 may include one or more sensors, such as (but not limited to) a proximity sensor to detect when an individual is standing near the ESL 110, a microphone for monitoring ambient noise as well as receiving speech from a customer or store picker in some embodiments, and/or the like. In some embodiments, not every ESL will be configured and/or equipped the same or with the same capabilities.

The ESLs 110 may be configured to receive communications from the store management entity server 150, such as through wireless links 112 that may be relayed via the access points 130. Thus, the store management entity server 150 may configure each ESL 110 with product information to be displayed, as well as duty cycles for when the ESL should activate to receive signals and transmit wireless beacons. The store management entity server 150 may control the periodicity of ESL duty cycles in order to minimize battery drain/usage, so as to extend the operating life, while ensuring the ESL is responsive to customers and store pickers, such as by increasing the duty cycle when individuals are within proximity of an ESL (e.g., close enough to see and/or read a display of the ESL). Further, management entity server 150 may configure ESLs 110 to generate an appropriate indications (e.g., visual, audible, and/or tactile indications) at an appropriate time, such as when an ESL is associated with a product that appears on a shopping list of a user that is nearby (e.g., within a predetermined distance). In various embodiments, the store management entity server 150 may be located within or near the store, or located remotely, such as in the Cloud, and accessed via a network, such as the Internet.

ESLs 110 may be configured to exchange wireless communications with each other through wireless links 112, such as wireless beacons or tones, for various purposes, including in particular for determining the relative and actual location of the ESLs on shelves 50 and with respect to one another as described herein.

In some embodiments, the store picker system 100 deployed within a store 10 may also include other mechanisms for determining the precise location of ESLs and individual store pickers or customers. For example, in some embodiments, the system may include ultrasonic emitters 134 that may be configured to periodically or episodically admit ultrasonic tones (for example) that can be received by a microphone on each ESL 110 for purposes of determining relative location of each ESL via sound ranging processes. As another example, in some embodiment, the system may include infrared emitters that may be configured to emit an infrared light beam that can be received by a photo-detector on each ESL for the purpose of determining relative location via IR ranging techniques. As another example, the system may include cameras 132 coupled to the store management entity server 150 that may be positioned to provide imaging of ESLs 110 as well as individuals (e.g., store pickers, customers, and/or other individuals). Image data received from such cameras 132 may be used by the store management entity server 154 to determining the location of each ESL and individuals. In some embodiments, the camera 132 may be positioned on the shelves so as to view products as well as individuals near the products. In some embodiments, ESLs 110 may include a camera and be configured to transmit images to the store management entity server 150 via a wireless link 112 with an access point 130.

By configuring wireless signal exchanges and, in some embodiments, ultrasound and/or visual data from cameras 132, the store management entity server 150 may determine the location of each ESL 110 on shelves 50 with sufficient precision to enable the server to provide guidance information to store pickers via their user mobile device 120. For example, the store management entity server 150 may order or reorder a shopping list into a sequence that may guide a store picker through a store in a most expeditious manner (e.g., shortest walking distance, shortest time, etc.) for obtaining all products on the list.

Further, when a store picker approaches a next product on the shopping list, the store management entity server 150 may send a signal to the associated ESL 110 prompting it to flash its LED 117, vary the brightness of a backlit display or generate some other form of visible signal to guide the individual to the product. For example, when the shopping list includes multiple products on a given shelf 50, the store management entity server 150 may cause each associated ESL 110 to flash its LED 117, vary the brightness of a backlit display, or generate another visible indication. Such visible changes may help any individuals near the ESL 110 to find the product and/or the particular shelf 50 holding the product.

In some embodiments, other mechanisms may be used to attract customers or store pickers to the ESL 110 associated with a next item on the shopping list. For example, ESLs may be configured to emit ultraviolet or infrared light that may not be visible to people but may be detected by a sensor on a user mobile device held by customers or store pickers. As another example, ESLs may emit a sound that can be heard by customers or store pickers when they are close to an ESL associated with a product. As another example, ESLs may be configured to emit ultrasound or infrasound that cannot be heard but may be detected by a sensor on a user mobile device carried by customers or store pickers. In some embodiments, the user mobile device carried by a customer or store picker may signal when a next item ESL is nearby, such as generating a display (e.g., an arrow pointing towards the ESL) or vibrating.

In some embodiments, ESLs 110 may be configured to generate a visible indication, such as flashing an LED or a backlit display, when the ESL 110 loses connection to the store management entity server. Alternatively or additionally, the indication may include an audio indication. Generating such indications, which may be configured to be a unique signal such as a double or triple flash and/or short sound pattern, may enable store workers to locate ESLs that require replacement or some attention (e.g., a new battery) to reestablish a wireless communication link with an access point to communicate with the store management entity server . In some cases, an ESL 110 may lose a wireless communication link with an access point due to an object (e.g., a forklift, scaffolding, etc.) positioned in the line of sight between the ESL and the access point. In such situations, when a store picker brings his/her user mobile device near the isolated ESL, the user mobile device may serve as an access point for the ESL enabling it to establish a communication link with the store management entity server . When this happens, the store management entity server may determine that the loss in communications with the ESL was caused by an obstacle. In response, the store management entity server may notify store personnel so that the obstacle can be moved.

The store management entity server 150 may be configured with detailed maps of the locations of products within the store, referred to as a planogram, that is correlated or calibrated to an indoor location system, such as supported by the ESLs 110 as described. The store management entity server 150 may include planning algorithms for determining efficient routes for store pickers based upon their respective shopping lists and provide navigational guidance to those individuals via their user mobile device 120. The store management entity server 150 may also incorporate information from an inventory system that keeps track of the products stocks in order to avoid sending a store picker to the location of a product that is out of stock. This information may also be combined with equivalent or comparable product information so that when a product is out of stock, the store management entity server 150 may transmit information to the user's mobile device that suggests or guides the user to an alternative product. In some situations, the store management entity server 150 may transmit information to the user's mobile device that guides the user to a different section of the store where the same or alternative products may be found or provide, such as in a sale or specials section or a store room. In some embodiments, the store management entity server 150 may transmit information to the user's mobile device information for rendering a display to be shown to a store employee, such as providing information for retrieving the product or an alternative product from a storeroom or other area that is inaccessible to the user.

The store management entity server 150 may also use location information received from ESLs 110 and user mobile devices 122 to keep track of the movement of store pickers and other individuals (e.g., customers or employees) within the store, identify areas of congestion, and provide navigation guidance to route store pickers around crowded aisles as part of efficiently guiding them through their shopping list in the facility.

The access points 130 may be configured to communicate with user mobile devices 120 and ESLs 110 to provide communications with the store management entity server 150. Access points may also provide customer user mobile devices 120 with access to external networks, such as the Internet 154 to enable customers to access remote servers 156, such as to comparison shop, research products, and otherwise provide Internet access support. In some embodiments, access points may be configured with cameras or be coupled to cameras to provide visual images of ESLs as well as customers and store pickers to provide more precise location information as described herein. Access points 130 may also be configured with antenna arrays that enable determining the angle of arrival (AOA) of wireless communications, providing further localization information to the store management entity server 150.

The user mobile devices 120 may be any form of mobile device, not just the smart phone as illustrated. For example, in addition to being personal mobile devices, the mobile devices 120 that may be used in the system 100 may include smart watches, body cams, augmented reality glasses (e.g., smart glasses), and facility-specific or enterprise-specific handheld devices that are configured specifically for store pickers.

Any user mobile device 120 may be configured with a software application that supports the functionality of various embodiments. For example, the software application may provide for BLE beacon receiver functionality, entering or receiving a shopping list that is provided to or received from the store management entity server 150, store maps and navigational guidance displays, product scanning capability (e.g., the ability to image and process barcodes on products), capabilities to recognize LED modulation, functionality to recognize store picker or customer gestures, shopping cart functionality (e.g., functionality to enable selecting particular products to add to the shopping list), check out functionality (e.g., functionality to enable paying for products via credit card or online account), and the like. The software application that runs in user mobile devices 120 may also function as a portable access point that can receive wireless (e.g., BLE) and other communications from ESLs 110 and provide diagnostic information to the store management entity server 150.

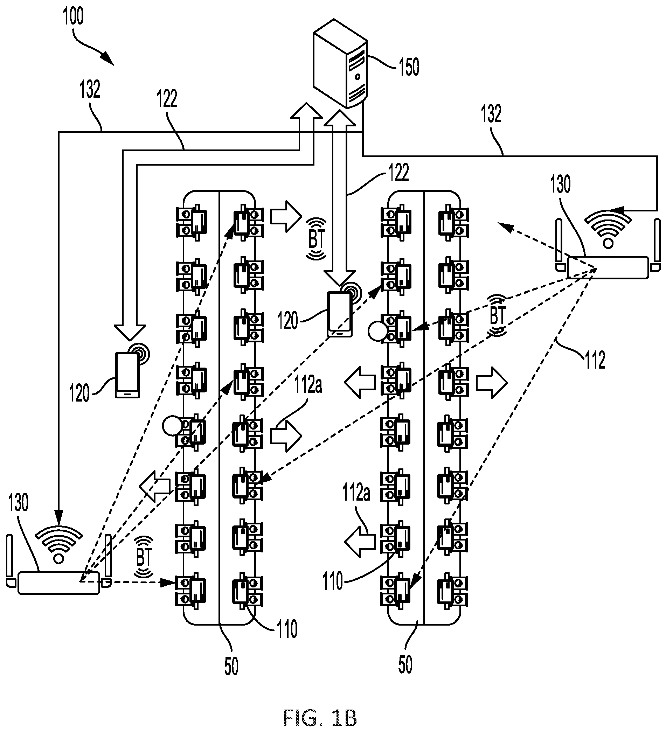

FIG 1B illustrates further details of the communication links that may be utilized in the store picker system 100 according to some embodiments in which localizing of the user mobile device 120 is based on signals received in the user mobile device 120. With reference to FIGs. 1A and 1B, ESLs 110 may be configured to communicate with access points 130 via wireless links 112, such as Bluetooth, and to exchange wireless signals with other ESLs 110. For example, ESLs 110 on opposite sides of an aisle (i.e., the separation between two shelves 50) may transmit certain BLE signals 112a that are configured to be received by a nearby ESL 110 and used for the purposes of determining relative positions of the respective devices. For example, BLE signals 112a may be broadcast at a set power level, enabling separation distances to the estimated based upon the measured RSSI of the signals received by other ESLs 110. Access points 130 may be coupled to the store management entity server 150 via wired connections 132. User mobile devices 120 used by store pickers may receive beacon signals (e.g., BT or BLE) from each of the ESLs 110 but also communicate received beacon information (e.g., identity code and RSS I information) directly to the store management entity server 150 via separate communications 122. Such separate communications 122 may be via Wi-Fi communications (e.g., via access points 130) or via cellular data networks (e.g., fifth generation (5G) cellular networks).

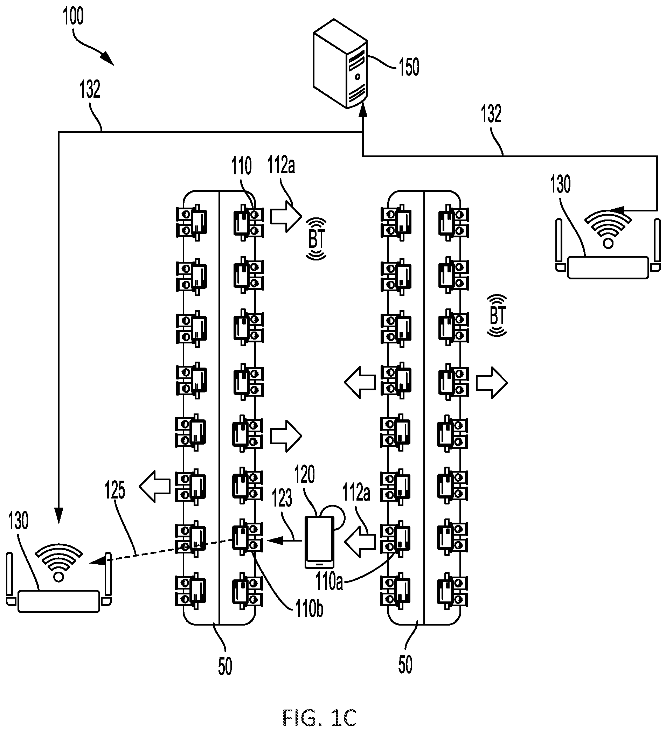

FIG. 1C illustrates further details of the communication links that may be utilized in the store picker system 100 according to some embodiments in which localizing of the user mobile device 120 is based on wireless signals received by ESLs 110 from the user mobile device 120 that were transmitted in response to wireless signals received from other ESLs 110. With reference to FIGs. 1A-1C, ESLs 110 may be configured to communicate with access points 130 via wireless links 112, such as Bluetooth, to transmit BLE signals 112a, and to receive BLE signals 123 transmitted by user mobile devices 120. In the embodiment illustrated in FIG. 1C, one ESL 110a is transmitting a BLE signal 112a (i.e., a beacon) that is received by the user mobile device 120. The BLE signal 112a may be coordinated with other ESLs 110, such as to have a unique code (e.g., a rotating code) that is relatable to its location on the shelf 50 and/or with respect to other nearby ESLs 110. The user mobile device 120 may respond to receiving the BLE signal 112a by transmitting a responsive BLE signal 123 that is picked-up by another ESL 110b (or several ESLs 110 in the same shelf 50 or aisle). Each ESL 110b receiving the responsive BLE signal 123 from the user mobile device 120 may report the received signal to the store management entity server 150 by communicating the information in a signal or message 125 that is sent via an access point 130. The information reported may include a unique code (e.g., a time varying unique code) of the emitting ESL 110a, a unique code (e.g., a time varying unique code) of the user mobile device 120, and a unique code (e.g., a time varying unique code) of the receiving ESL 110b.

The store management entity server 150 may then use the information in the relayed responsive BLE signal 123 to determine the location of the user mobile device 120 with respect to the known locations of the emitting and reporting ESLs 110. Using such a network-centric approach to determining the location of user mobile devices 120 may enable more precise localization of devices than using the device-centric embodiment described with reference to FIG. 1B.

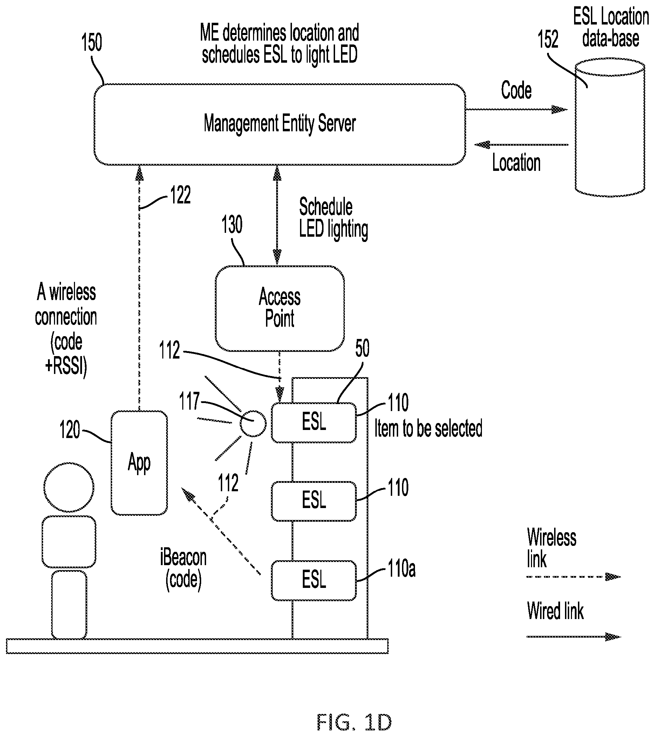

FIG 1D further illustrates communications may be ongoing during operation of various embodiments. With reference to FIGs. 1A-1D, the store management entity server 150 may signal individual ESLs 110, such as via an access point 130 that communicates via wireless links 112 to the ESL 110, to control lighting of the LED 117, vary the brightness of a backlit display or generate another visible indication when an individual or user mobile device 120 is within the vicinity of and product to be selected based on the shopping list. The store management entity server 150 may call on and ESL location database 152 stored in memory accessible by the server that maps products to ESL locations. For example, user mobile device 120 may receive a BLE beacon through a wireless link 112 from an ESL 110a, extract the time varying unique code for that ESL from the beacon, determine the RSSI of the beacon signal, and provide the code and RSSI information via a wireless connection 122 to the store management entity server 150. The store management entity server 150 may then use that information to determine that the mobile device 120 is close to a product to be selected and cause that ESL to flash it's LED 117, thereby indicating to the individual where the product may be found on the shelf 50.

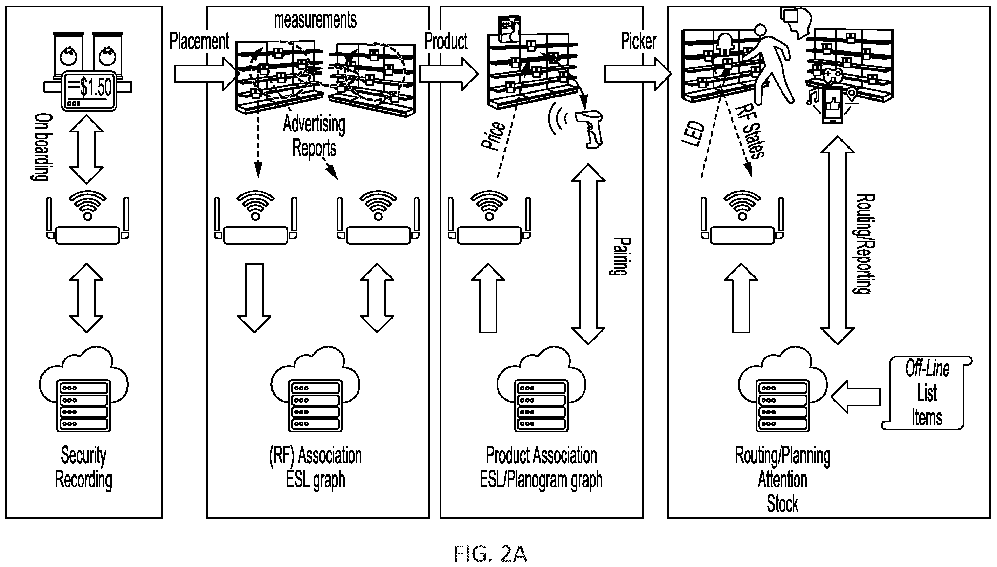

FIG. 2A illustrates four phases of deploying and operating a store picker system according to various embodiments. With reference to FIGs. 1A-2A, the first phase of onboarding, the various access points (e.g., 130) and management entity server (e.g., 150) may receive product information in terms of product codes, price, quantity and record that information in an inventory system. In the second phase, products may be placed on shelves and individual ESLs (e.g., 110) may be positioned on the shelf and associated with specific products. In this process, the individual ESL (e.g., 110) associated with a given product may be controlled by the store management entity server. The ESLs placed on the shelf may exchange BLE advertising reports (e.g., via wireless links 112) that may be individually processed by ESLs as well as access points in order to determine the location of each ESL. In a third phase, the ESLs, access points, and management entity server may perform operations to associate individual products with ESLs within a store planogram or graph. In a fourth phase, store pickers may be routed to particular ESLs associated with products under shopping list with the store management entity server providing routing and planning inputs to the user mobile devices (e.g., 120) of individuals while controlling ESL LEDs, backlit displays, etc. to provide visual indications with the customer or store picker is nearby. Alternatively or additionally, the indication may include an audio indication.

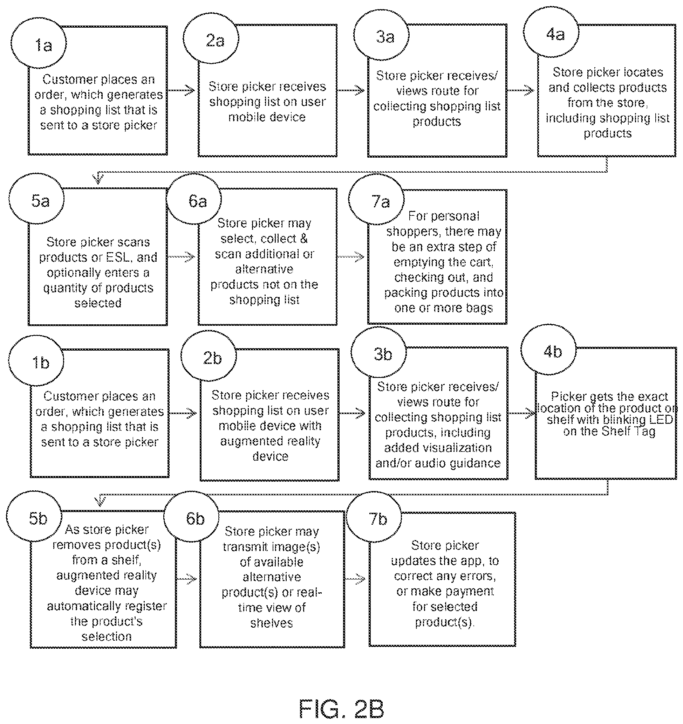

FIG. 2B is a process flow diagram illustrating basic operations of various embodiments. With reference to FIGs. 1A-2B, blocks 1a through 7a illustrate a process flow when an individual is using a user mobile device, such as a smart phone or facility-specific electronic device. Blocks 1b through 7b illustrate a process flow when the individual is using and augmented reality device, such as smart glasses, that can provide additional information to the individual.

Referring to block 1a, a customer may place an order for a number of products, such as by accessing a web site, online server, etc. and selects products that are placed into a virtual shopping cart, which forms a shopping list. Thus, in some embodiments the customer may be the store picker. For example, a customer may place an order on his/her user mobile device while in or near the store, and then pick up the item(s) when convenient using a route provided by the store management entity server rather than having to personally hunt for the items. The shopping list may then be sent to a store management entity server (e.g., 150) and/or directly to a store picker. The store management entity server and/or the store picker may alternatively download or request the shopping list. Eventually the store picker may receive the shopping list on his/her user mobile device (e.g., 120) in block 2a (e.g., through a smart phone app).

In block 3a, the store picker receives/views a route for collecting shopping list products. In some instances, or optionally, the received shopping list may include substitute or alternative products, for example if a shopping list product is not available or if the substitute or alternative product is on sale. The route may be displayed on the user mobile device of the store picker to guide the individual on an efficient path through the store. The route to collect shopping list products may not be in the same order as the original shopping list (i.e., the shopping list may be reordered). Also, the route to collect shopping list products may include an optimized path for the store picker to navigate through a store for collecting products. In some instances, or optionally, the route for collecting shopping list products may include any substitute or alternative products recommended by the store management entity server.

In block 4a, the store picker locates and collects products in the store, including shopping list products from the shelves. Locating and collecting products may involve spotting the associated ESL (e.g., 110), which may be flashing an LED (e.g., 117), varying the brightness of a backlit display, or generating another indication controlled by the store management entity server.

In block 5a, the store picker may scan each product as it is selected, such as with a camera or barcode scanner on the user mobile device. Alternatively, in block 5a, the store picker may scan an ESL associated with the product. Some products, such as produce, may not be easily labeled and thus the ESL may function as a scannable label for the product. Scanning products may be a way for the store picker to check items off a shopping list. Alternatively, items may be checked off any other way, including the store picker manually checking the item off a shopping list on the user mobile device. As a further alternative, items may be automatically checked off a shopping list in response to a store picker stopping in front of shelf and then walking away (after some period of time), which may be an indication that the item was collected. In a further alternative, other sensors may be used to determine that an item was picked and thus should be removed from the shopping list, such as one or more cameras or scales. For example, in response to a weight of items on a shelf reducing (ideally by a weight roughly matching item taken) or if a shopping basket/cart weight is increased (ideally by similar weight) the system may determine that the product associated with the ESL has been picked and thus should be removed from the shopping list. In some embodiments, a processor coupled to a scale on the shelf may check whether the reduction in weight to the shelf roughly matches a known weight of the corresponding item from the shopping list before that item is checked off the list. In some embodiments, a processor coupled to a scale in a cart may check whether an increase in weight in the cart roughly matches the known weight of the corresponding item from the shopping list before that item is checked off the shopping list. In some embodiments, billing for picked products may be entered as items are scanned or at another time, such as when the customer places an order (or at least some time before items get picked up), as items are picked up (e.g., as describe here), or later (e.g., at checkout). In some embodiments, the store picker or other individual may scan one or more products at a different location (e.g., a checkout counter).

In addition, in block 5a, the store picker may enter in the mobile device (e.g., through an app) a quantity of product selected. The mobile device may use this information to update the shopping list and/or the route to collect the remaining products from the shopping list. In addition, the store picker may enter an indication in the mobile device (e.g., through the app) that an item is unexpectedly out of stock or otherwise not available, which may trigger a query to the store picker through the mobile device whether a replacement product should be recommended. This information may also be communicated to the store management entity server by the mobile device, thereby enabling the store management entity server to maintain an up-to-date inventory and update the route for selecting the remaining products.

In block 6a, the store picker may select, collect, and scan additional or alternative products that are not on the shopping list. This may happen because the store picker could not find a product (e.g., the product is hard to find or is unavailable) or because the store picker has found a substitute product and coordinated the substitute selection with the ordering customers (e.g., via the user mobile device). As a further alternative, the ordering customer may have separately requested an add-on product not originally on the shopping list, which the store picker then collects from a shelf. The store picker may coordinate and/or communicate with the ordering customer through the user mobile device (e.g., through a phone call, messaging, or other communication function). Regardless, in block 6a the store picker may scan products not on the shopping list.

In block 7a, personal shoppers using the store picker system may perform an extra step of emptying their shopping cart, both physically and virtually in the application on the user mobile device. Additionally, the personal shopper may need to check out, as well as pack the products into one or more bags or boxes for removal from the store (e.g., for delivery to the ordering customer).

The operations in blocks 1b-4b may be similar to those described above except that the presentation of the shopping list and directions to the store picker may include the use of augmented reality, such as using visualizations or audio enhancements provided on smart glasses, electronic ear-pieces, or other electronic accessory used by or for the store picker that provide added visualization and/or audio guidance. For example, in blocks 2b and/or 3b, the received shopping list and route may appear virtually in the store picker's view through a heads-up display. Similarly, in block 4b, the product on the shelf or the ESL associated with that product may be emphasized to the store picker through visual enhancements provided only to the individual store picker through augmented reality.

In block 5b, as the store picker removes a given product from the shelf (i.e., collects a product), this may be automatically recorded by the electronic accessory (e.g., smart glasses or other augmented reality device). For example, when the electronic accessory performs optical scans and object recognition or automatically reads bar codes or other readable indicia, the electronic accessory may automatically record that the associated product has been removed from the shelves (for inventory control), which may update the store picker's shopping cart and change the status of items on the shopping list.

In block 6b, in addition to the store picker collecting additional or alternative products not on the shopping list, the user mobile device of the store picker or the store management entity server may transmit images or other information of available alternative products to the ordering customer. In addition, or alternatively, the user mobile device of the store picker or the store management entity server may transmit a live feed (i.e., a video feed) of the store shelves, on which one or more alternative products may be found. In block 7b, the store picker may make any corrections that need to be made in an app executing on the user mobile device regarding what or how many products have been pulled from the shelves. In addition, the store picker may make or supply payment for the collected product(s).

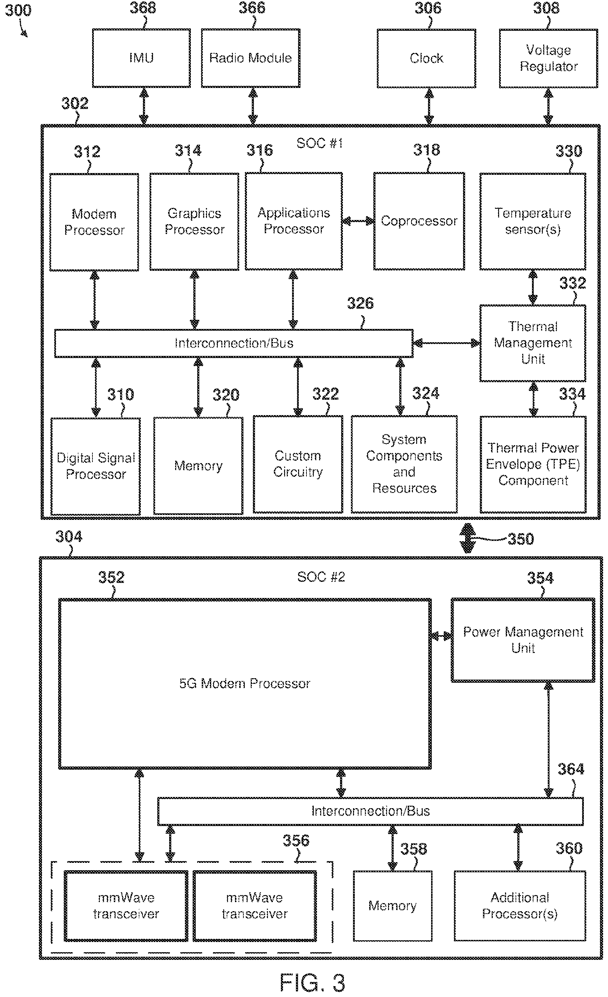

FIG. 3 is a component block diagram illustrating a non-limiting example of a computing and wireless modem system 300 suitable for implementing any of the various embodiments. Various embodiments may be implemented on a number of single processor and multiprocessor computer systems, including a system-on-chip (SOC) or system in a package (SIP).

With reference to FIGS. 1A-3, the illustrated example computing system 300 (which may be a SIP in some embodiments) includes a two SOCs 302, 304 coupled to a clock 306, a voltage regulator 308, a radio module 366 configured to send and receive wireless communications, including BLE messages, via an antenna (not shown and an inertial measurement unit) (IMU) 368. When the computing system 300 is used in ESLs, the radio module 366 may be configured to broadcast BLE beacons as described herein. In some implementations, the first SOC 302 may operate as central processing unit (CPU) of the user mobile device that carries out the instructions of software application programs by performing the arithmetic, logical, control and input/output (I/O) operations specified by the instructions. In some implementations, the second SOC 304 may operate as a specialized processing unit. For example, the second SOC 304 may operate as a specialized 5G processing unit responsible for managing high volume, high speed (such as 5 Gbps, etc.), or very high frequency short wave length (such as 38 GHz mmWave spectrum, etc.) communications.

The first SOC 302 may include a digital signal processor (DSP) 310, a modem processor 312, a graphics processor 314, an application processor 316, one or more coprocessors 318 (such as vector co-processor) connected to one or more of the processors, memory 320, custom circuitry 322, system components and resources 324, an interconnection/bus module 326, one or more temperature sensors 330, a thermal management unit 332, and a thermal power envelope (TPE) component 334. The second SOC 304 may include a 5G modem processor 352, a power management unit 354, an interconnection/bus module 364, a plurality of mmWave transceivers 356, memory 358, and various additional processors 360, such as an applications processor, packet processor, etc.

Each processor 310, 312, 314, 316, 318, 352, 360 may include one or more cores, and each processor/core may perform operations independent of the other processors/cores. For example, the first SOC 302 may include a processor that executes a first type of operating system (such as FreeBSD, LINUX, OS X, etc.) and a processor that executes a second type of operating system (such as MICROSOFT WINDOWS 10). In addition, any or all of the processors 310, 312, 314, 316, 318, 352, 360 may be included as part of a processor cluster architecture (such as a synchronous processor cluster architecture, an asynchronous or heterogeneous processor cluster architecture, etc.).

The first and second SOC 302, 304 may include various system components, resources and custom circuitry for managing sensor data, analog-to-digital conversions, wireless data transmissions, and for performing other specialized operations, such as decoding data packets and processing encoded audio and video signals for rendering in a web browser. For example, the system components and resources 324 of the first SOC 302 may include power amplifiers, voltage regulators, oscillators, phase-locked loops, peripheral bridges, data controllers, memory controllers, system controllers, access ports, timers, and other similar components used to support the processors and software clients running on a user mobile device. The system components and resources 324 or custom circuitry 322 also may include circuitry to interface with peripheral devices, such as cameras, electronic displays, wireless communication devices, external memory chips, etc.

The first and second SOC 302, 304 may communicate via interconnection/bus module 350. The various processors 310, 312, 314, 316, 318, may be interconnected to one or more memory elements 320, system components and resources 324, and custom circuitry 322, and a thermal management unit 332 via an interconnection/bus module 326. Similarly, the processor 352 may be interconnected to the power management unit 354, the mmWave transceivers 356, memory 358, and various additional processors 360 via the interconnection/bus module 364. The interconnection/bus module 326, 350, 364 may include an array of reconfigurable logic gates or implement a bus architecture (such as CoreConnect, AMBA, etc.). Communications may be provided by advanced interconnects, such as high-performance networks-on chip (NoCs).

The first or second SOCs 302, 304 may further include an input/output module (not illustrated) for communicating with resources external to the SOC, such as a clock 306 and a voltage regulator 308. Resources external to the SOC (such as clock 306, voltage regulator 308) may be shared by two or more of the internal SOC processors/cores.

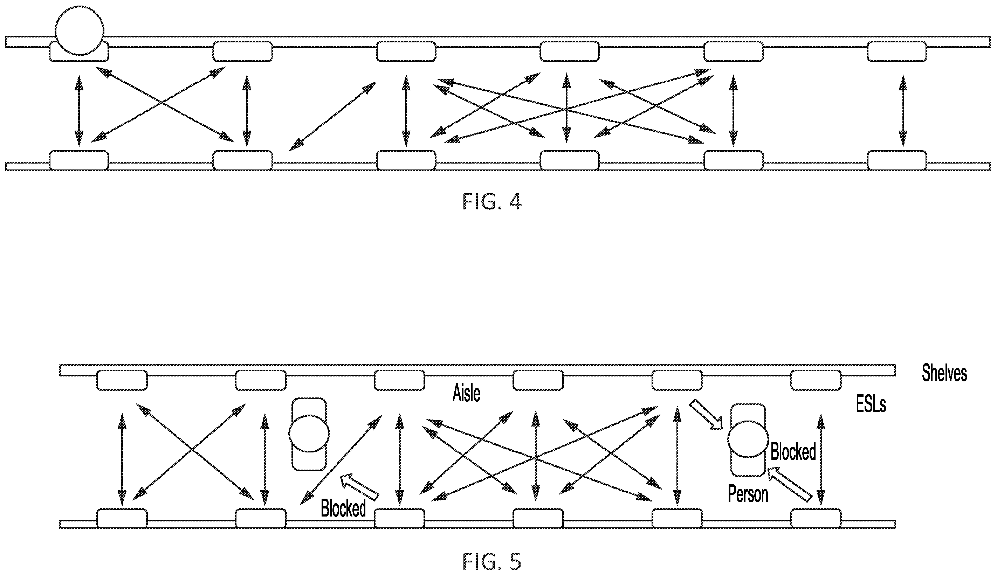

FIG. 4 illustrates exchanges of wireless signals (e.g., BLE signals) that may be used to perform ESL location determinations according to some embodiments. With reference to FIGs. 1-4, the process of determining the location of ESLs (e.g., 110) may be performed whenever ESLs are initially positioned or relocated. Once complete, minor updates in ESL location may be performed with confidence and fairly quickly given that initial information is already available to the system. In some embodiments, the ESL location determination process may be performed when the store is empty, such as overnight, in order to avoid interference with the signal measurement process from individuals (e.g., customers or employees) walking about in the store.

The first time the ESL location determination process is performed, the store management entity server (e.g., 150) may first determine the rough location of the ESLs. This may be facilitated by segregating ESLs by the access point (e.g., 130) through which each ESL is accessed. The store management entity server (e.g., 150) may use a divide and conquer approach to group ESLs depending on RSSI level between random pairs of devices.

When the process of roughly locating the ESLs is completed, the store management entity server may have determined the relative ESL locations to within about 5-10 meters root mean squared (rms). The store management entity server may than schedule pairs of ESLs to perform high accuracy distance measurements (HADM) (shown in the arrows), including for example AOA measurements, ultrasound time-of-flight measurements, round-trip time (RTT) ranging measurements, and the like. The result of the measurements, the HADM measurements may contain a confidence metric, which may show the channel information, and be used to determine if measurements are line-of-sight and reject bad outliers. The HADM measurements provide relative location information with accuracy of about 10-20cm rms.

A few ESLs may be assigned the role of anchor locations for example, ESLs located at the end of the shelf may be assigned the role of anchor locations. Near-by ESLs may then be able to determine their absolute position based on the anchor location. Every aisle may have at least one anchor location.

FIG. 5 illustrates how message signaling between the ESLs can be used to determine congestion in a given file within a store. With reference to FIGs. 1-5, pairs of ESL devices (e.g., 110) across an aisle from one another, may exchange wireless signals (e.g., BLE signals -- shown as arrows in the figure) and each ESL may measure the RSSI of received signals to determine the current path loss. For example, having measured the RSSI between pairs of ESL devices during the location determination phase as described with reference to FIG. 4, each ESL as a measure of the anticipated RSSI four corresponding ESL, thus any change in the measured RSSI indicates a change in the path loss that is most likely due to an object, such as an individual (e.g., a customer, a store picker, or other employee) walking between the pairs of ESLs. When an individual walks down an aisle, the path loss measured between any pair of cross-aisle ESLs will be reduced, and thus the number of ESL pairs experiencing a reduction in RSSI as well as an amount of reduction in the RSSI can be processed as an indication of occupancy/congestion (e.g., the number of individuals within the aisle).

The store management entity server (e.g., 150) may analyze the signal levels from multiple pairs of ESLs along an aisle to determine the approximate number of individuals in an aisle, including whether those individuals are pushing a cart/wagon, the approximate location of the individuals, and their directions of travel. To be able to identify the number of people in the aisle and their approximate locations, the store management entity server may utilize knowledge of the relative locations of ESLs to within about 1-2 meters and as well as the side of the aisle on which ESL is located. The store management entity server may control when each ESL is awake for normal synching (transmit and receive) as the server sets the sleep-wake cycle of all ESL. This enables the store management entity server to schedule some ESLs to perform an additional RSSI measurement (or measurements) during the same wake period. One transmitting ESL can be measured by multiple receive ESLs to save power. The store management entity server may organize the ESLs broadcasting wireless signals for purposes of RSSI measurements so that the power demands of such transmissions are spread among the various ESLs, so that the battery power of all ESLs is used most efficiently.

In addition to using RSSI measurements, the store picker system may use HADM techniques including phase-based ranging. This provides more accurate measure of the change in channel response as well as providing a confidence metric. The confidence metric may be used to reject outliers, which may be hard to accomplish using RSSI measurements alone. If ESLs are equipped with multiple antennas, then AOA measurements may also be used to provide more accurate readings of path loss between particular ESLs. Additionally, the system may implement security aspects that are available in the system. For example, only the store management entity server knows the schedule of wireless transmissions by individual ESLs, making it near impossible for an intruder to guess which ESL will be broadcasting a beacon (e.g., a BLE beacon) at a given instant. Further, the wireless beacon that is broadcast by a given ESL may include a pseudorandom time varying information that only the store management entity server can resolve. Additionally, the store management entity server may maintain a record of where each ESL is located, and thus the bounds for RSSI are known. As a further security measure, RSSI/HADM measurements may be returned to the store management entity server (via access points) in a secure link. Thus, an intruder could replace captured packets from an ESL, but could not control the position from which the beacon packets would be transmitted. As a result, the system can prevent a denial of service type of attack on this feature.

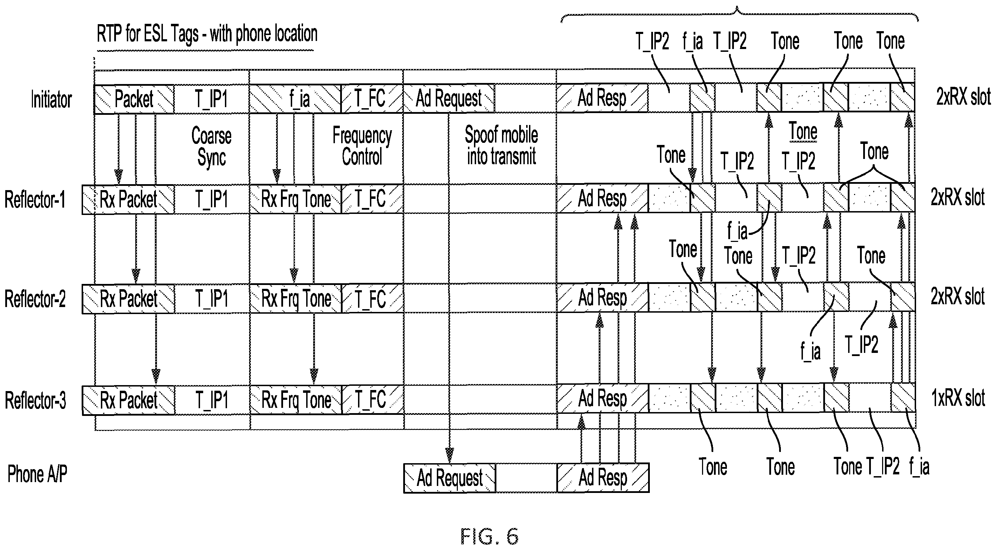

FIG. 6 illustrates signal exchanges and relays that may be used in determining the location of customers or store pickers using BLE beacons broadcast by ESLs that are received by the individual's user mobile device (e.g., 120). With reference to FIGs. 1A-6, the figure shows timelines of packets sent between multiple ESLs and a user mobile device, in which the top four lines are ESLs. In practice more than four ESLs may be used. The bottom line represents the user mobile device (e.g., a legacy smartphone). The user mobile device may have been scanning for some period beforehand the illustrated timeline.

The first sequence of messaging between the four ESLs, illustrates a process by which the ESLs may synchronize to one another. After synchronization between ESLs, the "initiator" ESL transmits a targeted advertising request packet that is received by the user mobile device. The user mobile device responds with an advertising response packet. All ESLs receive the advertising response packet and may measure the quadrature signals (i.e., IQ samples of packets) to measure the relative phase of the received signals. The ESLs may immediately go on to do a round-robin HADM measurement set, in which each ESL transmits signals for which the others listen as illustrated by the arrows. This process allows the unknown carrier phases to be eliminated so that the relative phase of the received packet can be determined, with that information used to determine the distance to the user mobile device. As the store management entity server knows the location of each ESL with precision based on the location measurements described above, the store management entity server can use the relative distance measurements provided by each ESL to locate the user mobile device (and thus the customer or store picker) through trilateration.

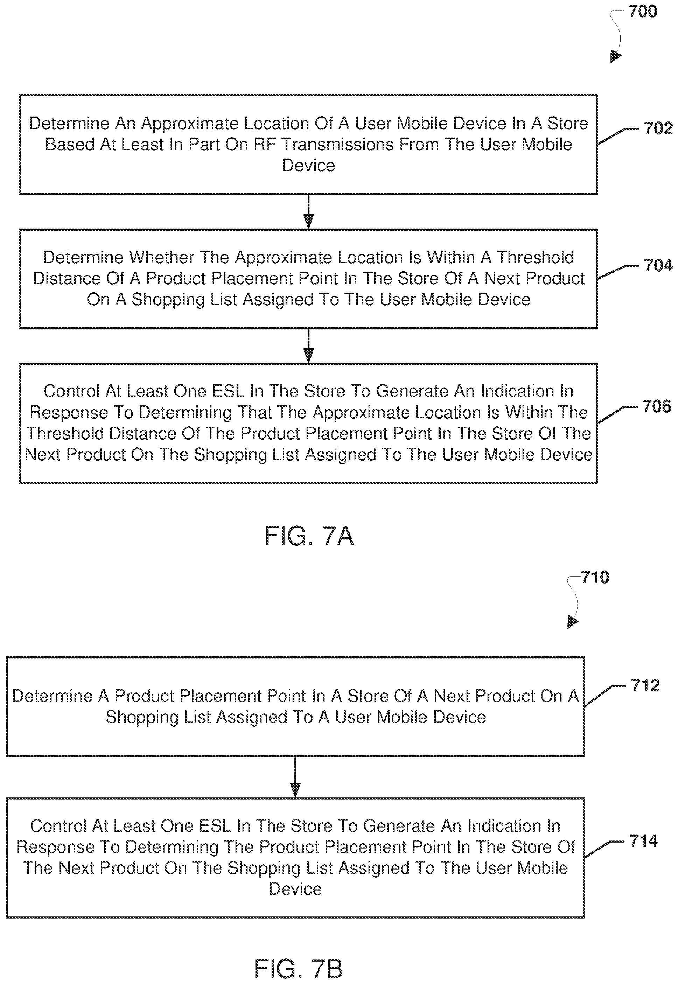

FIG. 7A is a process flow diagram illustrating a method 700 for supporting in-store product picking performed by a processor of a store management entity server in accordance with various embodiments. With reference to FIGS. 1A-7A, the method 700 may be implemented by a processor of a store management entity server (e.g., 150).

In block 702, the processor may perform operations including determining an approximate location of a user mobile device in a store based at least in part on RF transmissions from the user mobile device.

In block 704, the processor may perform operations including determining whether the approximate location of the user mobile device held by a customer or store picker is within a threshold distance of a product placement point in the store of a next product on a shopping list of a customer or assigned to the store picker. In some embodiments, the next product on the shopping list may be a high-sales rate product.

In block 706, the processor may perform operations including controlling at least one ESL (e.g., 110) in the store to generate an indication in response to determining that the approximate location is within the threshold distance of the product placement point in the store of the next product on the shopping list assigned to the user mobile device. In some embodiments, the at least one ESL may be an ESL associated with the product placement point in the store of the next product on the shopping list assigned to the user mobile device. In some embodiments, the at least one ESL may be an ESL associated with a product placement point in the store adjacent to the product placement point in the store of the next product on the shopping list assigned to the user mobile device. In some embodiments, the indication may be illuminating and/or flashing a light of the ESL. In some embodiments, the indication is illuminating a light of the ESL, flashing a light of the ESL, a visual indication perceptible by a user of the user mobile device (e.g., visible to the store picker's plain view or displayed to the store picker through one or more augmented reality devices), and/or an audible indication perceptible by a user of the user mobile device. In some embodiments, the indication may be an advertisement, such as a directed advertisement. In some embodiments, the generated indication may be a communication (e.g., a directed advertisement) transmitted by the ESL to a mobile wireless device, such as a user mobile device). In some embodiments, the indication may include or additionally include an audio indication.

In some embodiments, controlling at least one ESL in the store to generate the indication in response to determining that the approximate location is within the threshold distance of the product placement point in the store of the next product on the shopping list assigned to the user mobile device may include controlling ESLs between the approximate location and the product placement point in the store to flash respective visible indications repeatedly in sequence from a closest ESL to the approximate location to a closest ESL to the product placement point thereby generating a multiple ESL flashing pattern visually perceptible by a user of the user mobile device as a flashing path along the flashing ESLs from the approximate location to the product placement point in the store. Alternatively or additionally, the indication may include an audio indication.

FIG. 7B is a process flow diagram illustrating a method 710 for supporting in-store product picking performed by a processor of a store management entity server in accordance with various embodiments. With reference to FIGS. 1A-7B, the method 710 may be implemented by a processor of a store management entity server (e.g., 150).

In block 712, the processor may perform operations including determining a product placement point in a store of a next product on a shopping list assigned to a user mobile device.

In block 714, the processor may perform operations including controlling at least one ESL in the store to generate an indication in response to determining the product placement point in the store of the next product on the shopping list assigned to the user mobile device. In some embodiments, the at least one ESL may be an ESL associated with the product placement point in the store of the next product on the shopping list assigned to the user mobile device. In some embodiments, the at least one ESL may be an ESL associated with a product placement point in the store adjacent to the product placement point in the store of the next product on the shopping list assigned to the user mobile device. In some embodiments, the indication may be illuminating and/or flashing a light of the ESL. In some embodiments, the indication is illuminating a light of the ESL, flashing a light of the ESL, a visual indication perceptible by a user of the user mobile device (e.g., visible to the store picker's plain view or displayed to the store picker through one or more augmented reality devices), and/or an audible indication perceptible by a user of the user mobile device. Alternatively or additionally, the indication may include an audio indication.

In some embodiments, controlling at least one ESL in the store to generate the indication in response to determining that the approximate location is within the threshold distance of the product placement point in the store of the next product on the shopping list assigned to the user mobile device may include controlling ESLs between the approximate location and the product placement point in the store to flash respective visible indications repeatedly in sequence from a closest ESL to the approximate location to a closest ESL to the product placement point thereby generating a multiple ESL flashing pattern visually perceptible by a user of the user mobile device as a flashing path along the flashing ESLs from the approximate location to the product placement point in the store. Alternatively or additionally, the indication may include an audio indication.

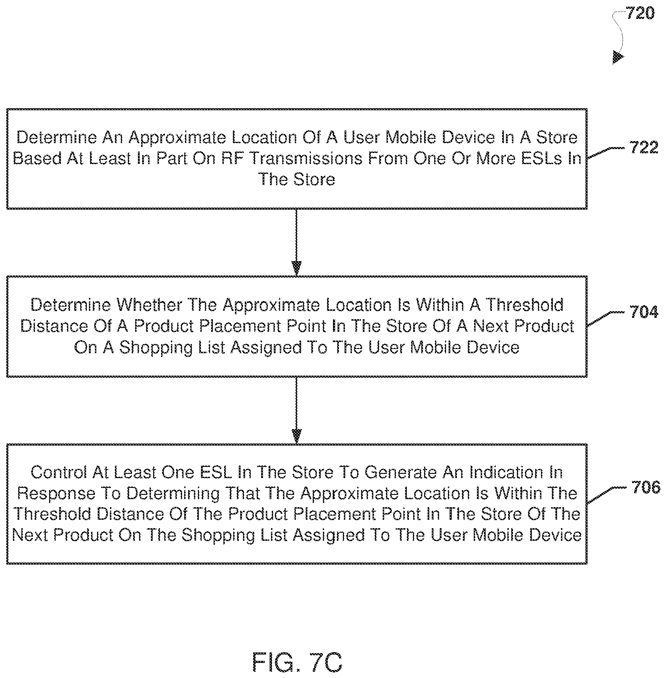

FIG. 7C is a process flow diagram illustrating a method 720 for supporting in-store product picking performed by a processor of a store management entity server in accordance with various embodiments. With reference to FIGS. 1A-7C, the method 720 may be implemented by a processor of a store management entity server (e.g., 150).

In block 722, the processor may perform operations including determining an approximate location of a user mobile device in a store based at least in part on RF transmissions from one or more ESLs in the store.

In blocks 704 and 706, the processor may perform operations of like numbered blocks of the method 700 as described to determine whether the approximate location of the user mobile device of a store picker is within a threshold distance of a product placement point in the store of a next product on a shopping list of a customer or assigned to the store picker and control at least one ESL in the store to generate an indication in response to determining that the approximate location is within the threshold distance of the product placement point in the store of the next product on the shopping list assigned to the user mobile device.

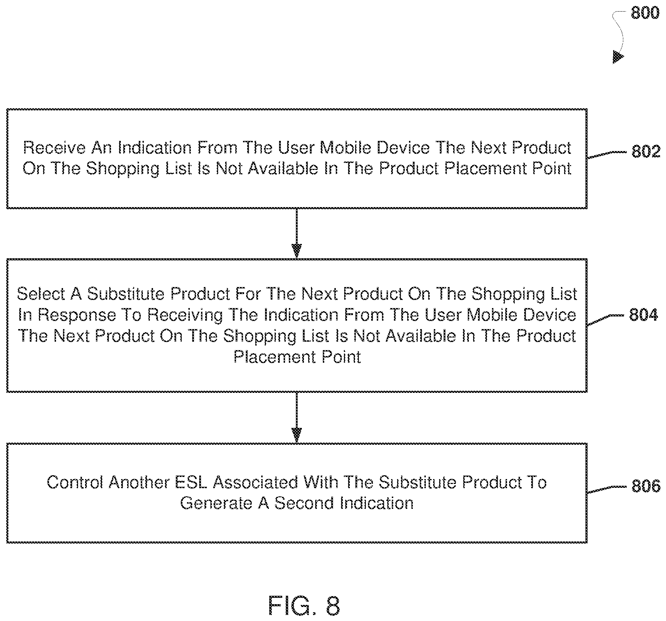

FIG. 8 is a process flow diagram illustrating a method 800 for supporting in-store product picking performed by a processor of a store management entity server in accordance with various embodiments. With reference to FIGS. 1A-8, the method 800 may be implemented by a processor of a store management entity server (e.g., 150).

In block 802, the processor may perform operations including receiving an indication from the user mobile device that the next product on the shopping list is not available in the product placement point.

In block 804, the processor may perform operations including selecting a substitute product for the next product on the shopping list in response to receiving the indication from the user mobile device that the next product on the shopping list is not available in the product placement point. As an example, the substitute product may be another product at a different location of the store and that different product may be appended to the current shopping list. As another example, the substitute product may be a product near the unavailable product and the processor may perform operations including selecting a substitute product for the next product on the shopping list having a second product placement point within the threshold distance to the approximate location in response to receiving the indication from the user mobile device that the next product on the shopping list is not available in the product placement point.

In block 806, the processor may perform operations including controlling another ESL associated with the substitute product to generate a second indication. In some embodiments, the second indication may be illuminating and/or flashing a light of the other ESL. In some embodiments, the indication is illuminating a light of the other ESL, flashing a light of the other ESL, a visual indication perceptible by a user of the user mobile device (e.g., visible to the store picker's plain view or displayed to the store picker through one or more augmented reality devices), and/or an audible indication perceptible by a user of the user mobile device. Alternatively or additionally, the indication may include an audio indication.

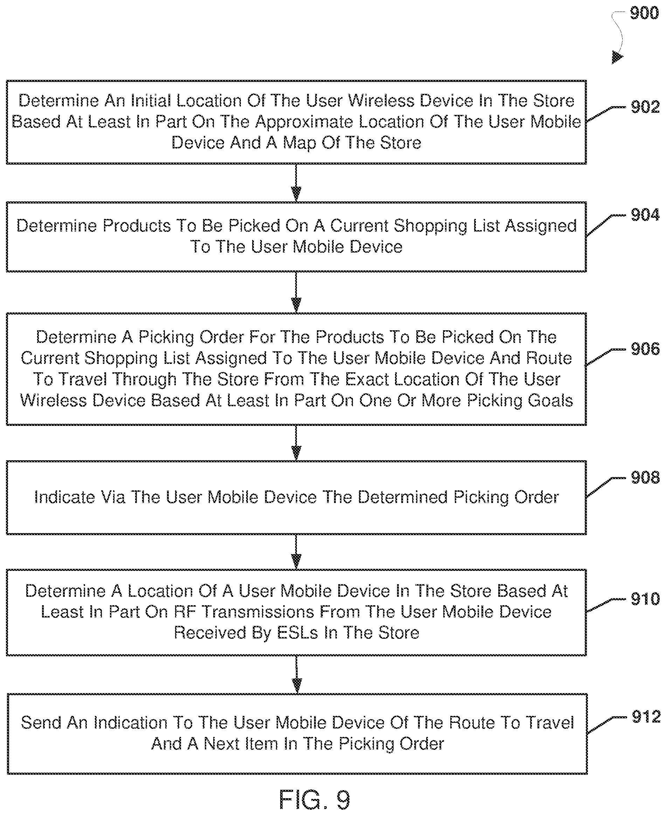

FIG. 9 is a process flow diagram illustrating a method 900 for supporting in-store product picking performed by a processor of a store management entity server in accordance with various embodiments. With reference to FIGS. 1A-9, the method 900 may be implemented by a processor of a store management entity server (e.g., 150).

In block 902, the processor may perform operations including determining an initial location of the user mobile device in the store based at least in part on the approximate location of the user mobile device and a map of the store.

In block 904, the processor may perform operations including determining products to be picked on a current shopping list assigned to the user mobile device.

In block 906, the processor may perform operations including determining a picking order for the products to be picked on the current shopping list assigned to the user mobile device and route to travel through the store from the exact location of the user mobile device based at least in part on one or more picking goals. In some embodiments, the one or more picking goals may include minimizing an overall distance. In some embodiments, the one or more picking goals may include avoiding other store pickers. In some embodiments, the one or more picking goals may include avoiding currently congested aisles. In some embodiments, the one or more picking goals may include avoiding other customers.

In block 908, the processor may perform operations including indicating via the user mobile device the determined picking order. Indicating the determined picking order by the user mobile device may include generating an audible reading of the determined picking order, displaying the determined picking order, generating a tactile indication of the determined picking order, or otherwise communicating the determined picking order in any manner.

In block 910, the processor may perform operations including determining a location of a user mobile device in the store based at least in part on RF transmissions from the user mobile device received by ESLs in the store.

In block 912, the processor may perform operations including sending an indication to the user mobile device of the route to travel and a next item in the picking order.

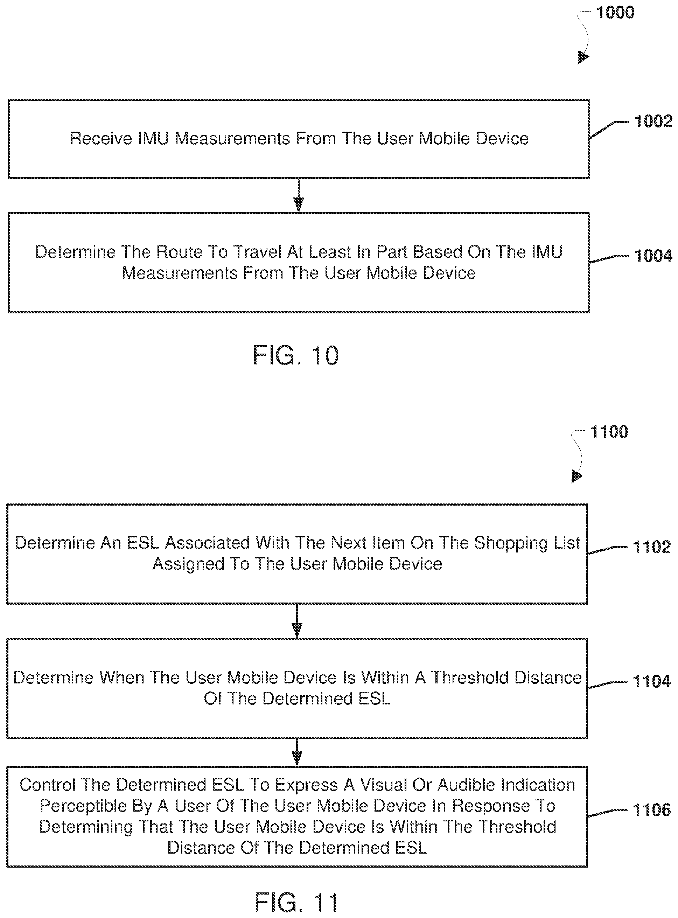

FIG. 10 is a process flow diagram illustrating a method 1000 for supporting in-store product picking performed by a processor of a store management entity server in accordance with various embodiments. With reference to FIGS. 1A-10, the method 1000 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368). Such sensors may be used by the store management entity server to determine a route for the store picker to travel.

In block 1002, the processor may perform operations including receiving inertial measurement unit (IMU) measurements from the user mobile device.

In block 1004, the processor may perform operations including determining a route to travel at least in part based on the IMU measurements from the user mobile device.

FIG. 11 is a process flow diagram illustrating a method 1100 for supporting in-store product picking performed by a processor of a store management entity server in accordance with various embodiments. With reference to FIGS. 1A-11, the method 1100 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 1102, the processor may perform operations including determining an ESL associated with the next item on the shopping list assigned to the user mobile device.

In block 1104, the processor may perform operations including determining when the user mobile device is within a threshold distance of the determined ESL.

In block 1106, the processor may perform operations including controlling the determined ESL to express a visual or audible indication perceptible by a user of the user mobile device in response to determining that the user mobile device is within the threshold distance of the determined ESL. In some embodiments, the expressed visual or audible indication may be illuminating and/or flashing a light of the ESL. In some embodiments, the expressed visual or audible indication is illuminating a light of the ESL, flashing a light of the ESL, a visual indication perceptible by a user of the user mobile device (e.g., visible to the store picker's plain view or displayed to the store picker through one or more augmented reality devices), and/or an audible indication perceptible by a user of the user mobile device.

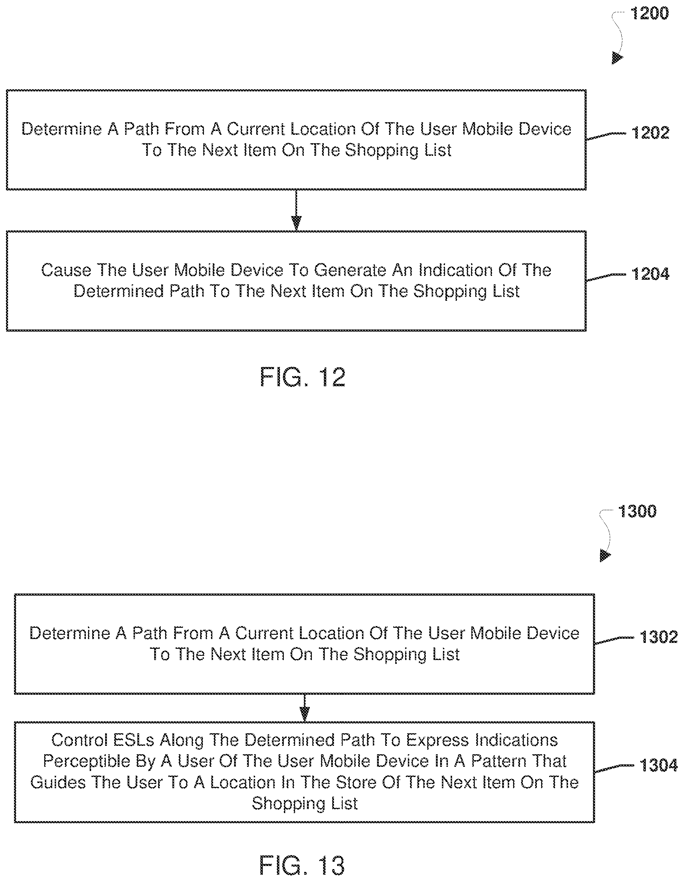

FIG. 12 is a process flow diagram illustrating a method 1200 for supporting in-store product picking performed by a processor of a store management entity server in accordance with various embodiments. With reference to FIGS. 1A-12, the method 1200 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 1202, the processor may perform operations including determining a path from a current location of the user mobile device to the next item on the shopping list.

In block 1204, the processor may perform operations including causing the user mobile device to generate an indication of the determined path to the next item on the shopping list. The indication may be a visual and/or audio indication, such as sound(s) and/or speech (e.g., instructions on where to go).

FIG. 13 is a process flow diagram illustrating a method 1300 for supporting in-store product picking performed by a processor of a store management entity server in accordance with various embodiments. With reference to FIGS. 1A-13, the method 1300 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 1302, the processor may perform operations including determining a path for the store picker to follow from a current location of the user mobile device to the next item on the shopping list.

In block 1304, the processor may perform operations including sending at least one active operation message to selected one or more of the ESLs in the store controlling ESLs relevant to (such as along) the determined path to enter an active operation mode, such as to express indications perceptible by a user of the user mobile device. For example, active operation messages may be sent to ESLs along the route for the store picker to travel through the store that are associated with products on the shopping list. As another example, the processor may send active operation messages relevant to the determined path in a pattern that guides the user (i.e., store picker) to a location in the store of the next item on the shopping list. In some embodiments, the expressed indication perceptible by the user may be illuminating and/or flashing a light of the ESL. In some embodiments, the expressed indication perceptible by the user is illuminating a light of the ESL, flashing a light of the ESL, a visual indication perceptible by a user of the user mobile device (e.g., visible to the store picker's plain view or displayed to the store picker through one or more augmented reality devices), and/or an audible indication perceptible by a user of the user mobile device.

To conserve power in ESLs, the processor may also perform operations including sending at least one passive operation message to cause ESLs to operate in a passive operation mode sent to ESLs that are not or no longer relevant to the determined route for the store picker to travel through the store. For example, such a passive operation message may be sent to ESLs that are associated with products that are not on the shopping list. As another example, such a passive operation mode may be sent to each ESL after the store picker has passed and presumably selected a product associated with the ESL. As another example, such a passive operation message may be sent to ESLs along the determined route after the store picker has passed the ESL and thus the ESL is no longer relevant to the determine route.

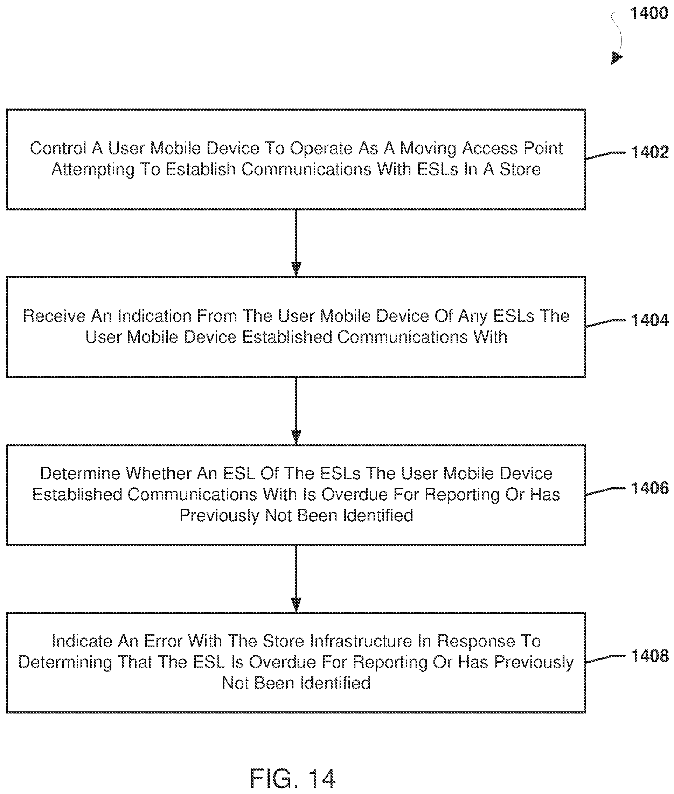

FIG. 14 is a process flow diagram illustrating a method 1400 for supporting in-store product picking performed by a processor of a store management entity server in accordance with various embodiments. With reference to FIGS. 1A-14, the method 1400 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 1402, the processor may perform operations including controlling a user mobile device to operate as a moving access point attempting to establish communications with ESLs in a store.

In block 1404, the processor may perform operations including receiving an indication from the user mobile device of any ESLs the user mobile device established communications with.

In block 1406, the processor may perform operations including determining whether an ESL, of the ESLs the user mobile device established communications with, is overdue for reporting or has previously not been identified.

In block 1408, the processor may perform operations including indicating an error with the store infrastructure in response to determining that the ESL is overdue for reporting or has previously not been identified.

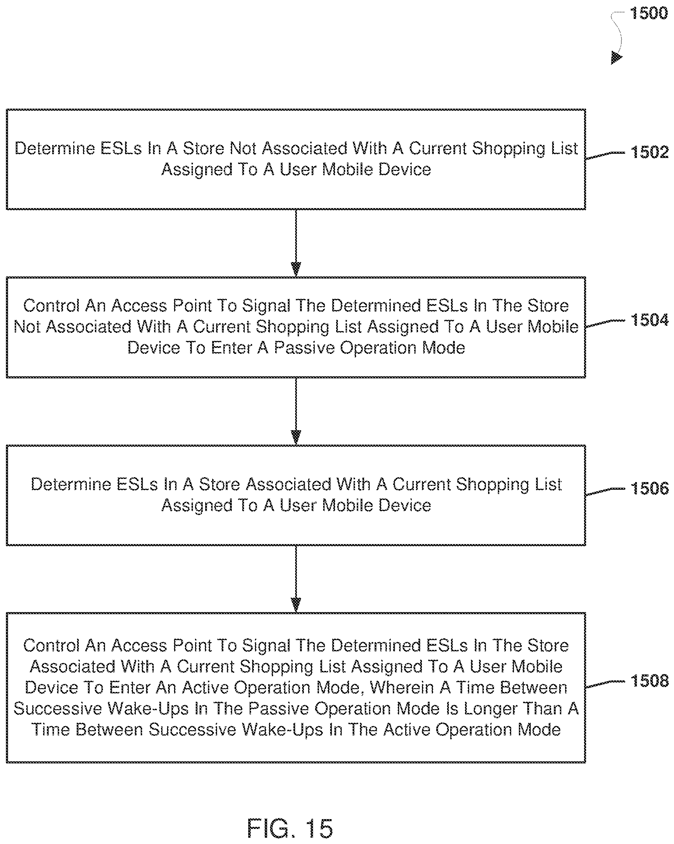

FIG. 15 is a process flow diagram illustrating a method 1500 for supporting in-store product picking performed by a processor of a store management entity server in accordance with various embodiments. With reference to FIGS. 1A-15, the method 1500 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 1502, the processor may perform operations including determining ESLs in a store not associated with a current shopping list assigned to a user mobile device. In some embodiments, the processor may identify the ESLs in the store that are not associated with the current shopping list assigned to the user mobile device may include those ESLs that are both ESLs of products not on the current shopping list. In some embodiments, the processor may identify the ESLs that not relevant to an initial route for the store picker to travel through the store, such as unlikely to be needed to assist in guiding the store picker using the user mobile device to products on the current shopping list. In some embodiments, the ESLs in the store not associated with the current shopping list assigned to the user mobile device may include only those ESLs that are ESLs of products not on the current shopping list.

In block 1504, the processor may perform operations including controlling an access point to signal (e.g., sending a passive operation message to) the determined ESLs in the store not associated with a current shopping list assigned to a user mobile device or not relevant to the route for the store picker to travel through the store to enter a passive operation mode.

In block 1506, the processor may perform operations including determining ESLs in a store associated with a current shopping list assigned to a user mobile device. For example, the processor may determine ESLs that are relevant to the initial route to travel through the store for picking one or more products on the shopping list and associated with products on the shopping list.

In block 1508, the processor may perform operations including sending an operation message controlling an access point to signal the determined ESLs in the store associated with a current shopping list assigned to a user mobile device to enter an active operation mode, wherein a time between successive wake-ups in the passive operation mode is longer than a time between successive wake-ups in the active operation mode. In an example discussed above, such operation messages may include sending an active operation message to operate in an active operation mode to ESLs relevant to the initial route to travel through the store for picking one or more products on the shopping list and associated with products on the shopping list.

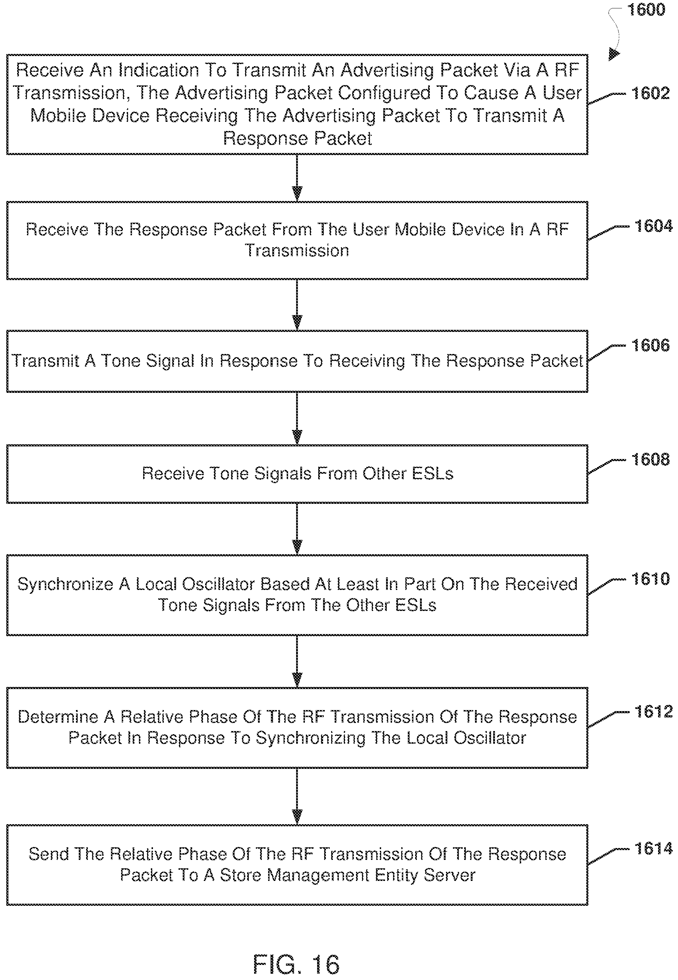

FIG. 16 is a process flow diagram illustrating a method 1600 for supporting in-store product picking performed by a processor of an ESL in accordance with various embodiments. With reference to FIGS. 1A-16, the method 1600 may be implemented by a processor of an ESL (e.g., 110) in conjunction with one or more sensors, such as an IMU, a proximity sensor, a light sensor, a microphone, a camera, a scale, a micro-electromechanical sensor, etc. (e.g., 368).

In block 1602, the processor may perform operations including receiving an indication to transmit an advertising packet via a RF transmission, the advertising packet configured to cause a user mobile device receiving the advertising packet to transmit a response packet.

In block 1604, the processor may perform operations including receiving the response packet from the user mobile device in a RF transmission.

In block 1606, the processor may perform operations including transmitting a tone signal in response to receiving the response packet.

In block 1608, the processor may perform operations including receiving tone signals from other ESLs.

In block 1610, the processor may perform operations including synchronizing a local oscillator based at least in part on the received tone signals from the other ESLs.

In block 1612, the processor may perform operations including determining a relative phase of the RF transmission of the response packet in response to synchronizing the local oscillator.

In block 1614, the processor may perform operations including sending the relative phase of the RF transmission of the response packet to a store management entity server.

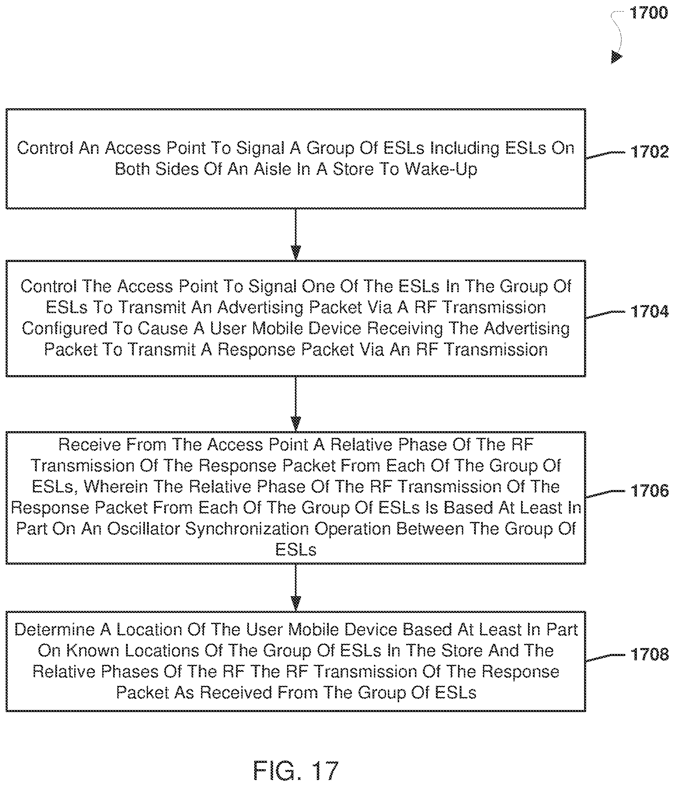

FIG. 17 is a process flow diagram illustrating a method 1700 for supporting in-store product picking performed by a processor of a store management entity server in accordance with various embodiments. With reference to FIGS. 1A-17, the method 1700 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 1702, the processor may perform operations including controlling an access point to signal a group of ESLs including ESLs on both sides of an aisle in a store to wake-up.

In block 1704, the processor may perform operations including controlling the access point to signal one of the ESLs in the group of ESLs to transmit an advertising packet via a RF transmission configured to cause a user mobile device receiving the advertising packet to transmit a response packet via an RF transmission.

In block 1706, the processor may perform operations including receiving from the group of ESLs, via the access point, a relative phase of the RF transmission of the response packet from each of the group of ESLs, wherein the relative phase of the RF transmission of the response packet from each of the group of ESLs is based at least in part on an oscillator synchronization operation between the group of ESLs. In some embodiments, the oscillator synchronization operation may include the ESLs in the group of ESLs each transmitting a respective tone, the ESLs in the group of ESLs each receiving the respective tone of all the other ESLs in the group of ESLs, and each ESL in the group of ESLs synchronizing its respective local oscillator based on the transmitted tone and the received tones. The access point may only play the role of an aggregator of responses from the ESL. The user mobile device may handle each ESL in turns. In some embodiments, the user mobile device may emit one or more audio tones, which may be picked up by a plurality of ESL concurrently.

In block 1708, the processor may perform operations including determining a location of the user mobile device based at least in part on known locations of the group of ESLs in the store and the relative phases of the RF the RF transmission of the response packet as received from the group of ESLs.

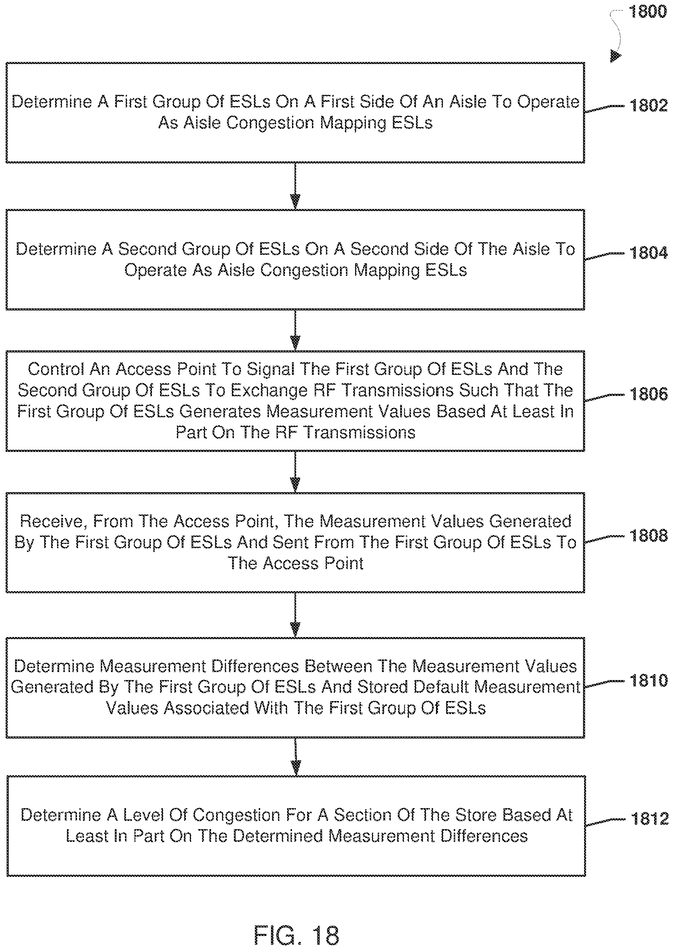

FIG. 18 is a process flow diagram illustrating a method 1800 performed by a processor of a store management entity server for controlling a network of ESLs in a store in accordance with various embodiments. With reference to FIGS. 1A-18, the method 1800 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 1802, the processor may perform operations including determining a first group of ESLs on a first side of an aisle to operate as aisle congestion mapping ESLs.

In block 1804, the processor may perform operations including determining a second group of ESLs on a second side of the aisle to operate as aisle congestion mapping ESLs.

In block 1806, the processor may perform operations including controlling an access point to signal the first group of ESLs and the second group of ESLs to exchange RF transmissions such that the first group of ESLs generates measurement values based at least in part on the RF transmissions from the second group of ESLs. Similarly, the second group of ESLs may generate measurement values based at least in part on the RF transmissions from the first group of ESLs. In some embodiments, controlling the access point to signal the first group of ESLs and the second group of ESLs to exchange RF transmissions may include periodically controlling the access point to signal the first group of ESLs and the second group of ESLs to exchange RF transmissions such that the first and/or second group of ESLs generates measurement values based at least in part on the RF transmissions.

In block 1808, the processor may perform operations including receiving, from the access point, the measurement values generated by the first and/or second group of ESLs. In some embodiments, the measurement values generated by the first group of ESLs may include Received Signal Strength Indicator (RSSI) values.

In block 1810, the processor may perform operations including determining measurement differences between the measurement values generated by the first group of ESLs and stored default measurement values associated with the first group of ESLs.

In block 1812, the processor may perform operations including determining a level of congestion for a section of the store based at least in part on the determined measurement differences.

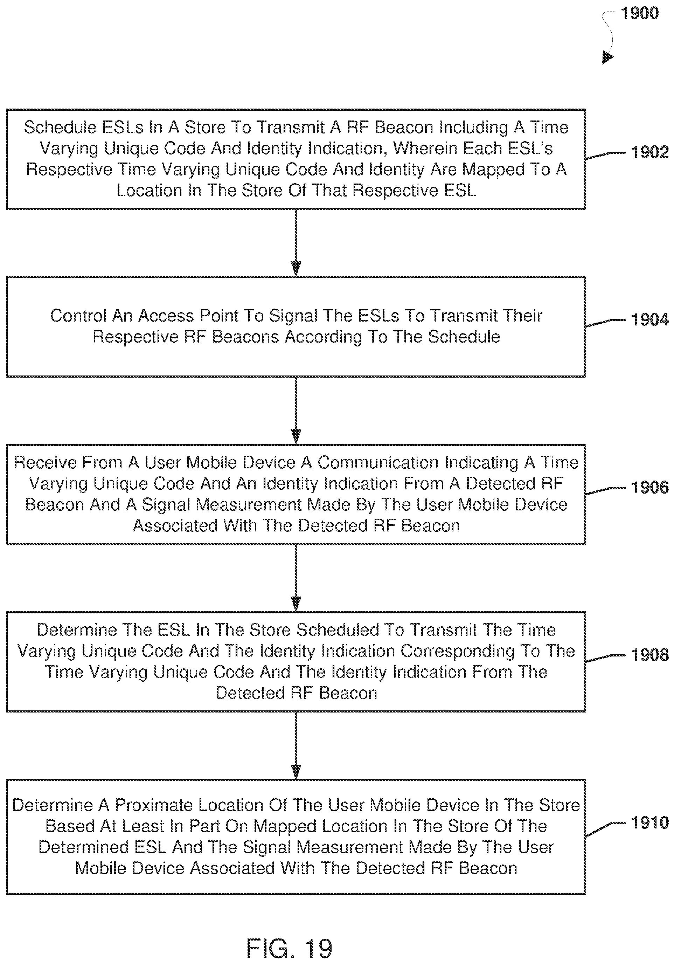

FIG. 19 is a process flow diagram illustrating a method 1900 for supporting in-store product picking performed by a processor of a store management entity server in accordance with various embodiments. With reference to FIGS. 1A-19, the method 1900 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 1902, the processor may perform operations including scheduling ESLs in a store to transmit an RF beacon including a time varying unique code and identity indication, wherein each ESL's respective time varying unique code and identity are mapped to a location in the store of that respective ESL.

In block 1904, the processor may perform operations including controlling an access point to signal the ESLs to transmit their respective RF beacons according to the schedule.

In block 1906, the processor may perform operations including receiving from a user mobile device a communication indicating a time varying unique code and an identity indication from a detected RF beacon and a signal measurement made by the user mobile device associated with the detected RF beacon. In various embodiments, the signal measurement made by the user mobile device associated with the detected RF beacon may be a Received Signal Strength Indicator (RSSI) measurement.

In block 1908, the processor may perform operations including determining the ESL in the store scheduled to transmit the time varying unique code and the identity indication corresponding to the time varying unique code and the identity indication from the detected RF beacon.

In block 1910, the processor may perform operations including determining a proximate location of the user mobile device in the store based at least in part on mapped location in the store of the determined ESL and the signal measurement made by the user mobile device associated with the detected RF beacon.

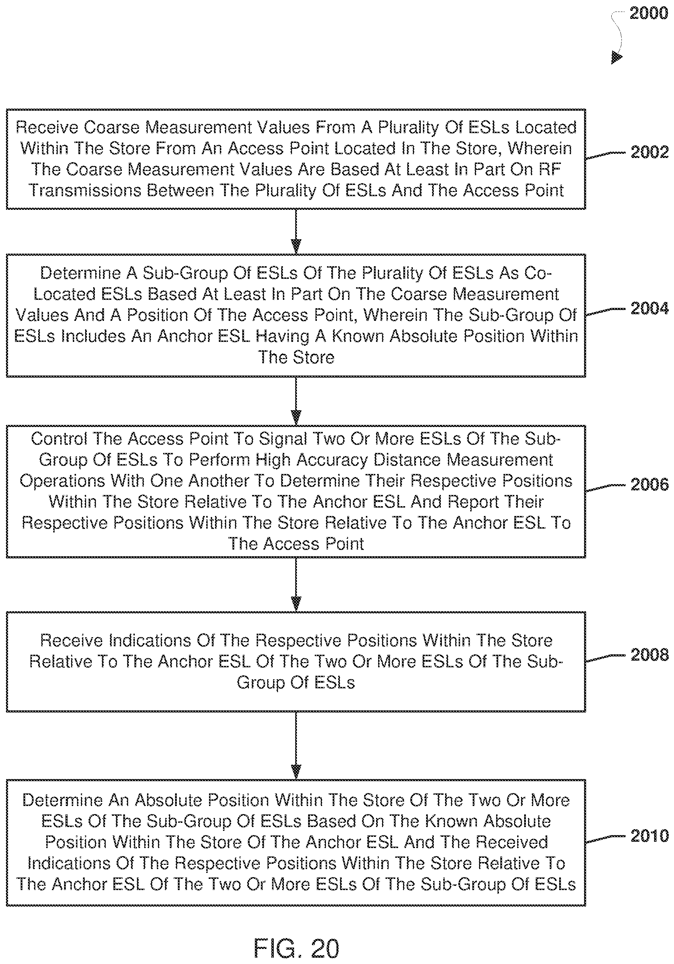

FIG. 20 is a process flow diagram illustrating a method 2000 performed by a processor of a store management entity server for controlling a network of ESLs in a store in accordance with various embodiments. With reference to FIGS. 1A-20, the method 2000 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 2002, the processor may perform operations including receiving coarse measurement values from a plurality of ESLs located within the store from an access point located in the store, wherein the coarse measurement values are based at least in part on RF transmissions between the plurality of ESLs and the access point. In some embodiments, the coarse measurement values may include Received Signal Strength Indicator (RSSI) values reported by the plurality of ESLs located within the store to the access point. In some embodiments, the access point may be a fixed access point within the store or the access point may be a user mobile device moving within the store.

In block 2004, the processor may perform operations including determining a sub-group of ESLs of the plurality of ESLs as neighboring ESLs based at least in part on the coarse measurement values and a position of the access point, wherein the sub-group of ESLs includes an anchor ESL having a known absolute position within the store. In some embodiments, neighboring ESLs may be co-located ESLs.

In block 2006, the processor may perform operations including controlling the access point to signal two or more ESLs of the sub-group of ESLs to perform high accuracy distance measurement operations with one another to determine their respective positions within the store relative to the anchor ESL and report their respective positions within the store relative to the anchor ESL to the access point. In some embodiments, the high accuracy distance measurement may be based at least in part on one or more of an angle-of-arrival (AOA) measurement by an ESL, an ultrasonic measurement by an ESL, an ultra-wideband (UWB) distance measurement by an ESL, a Received Signal Strength Indicator (RSSI) measurement by an ESL, a round trip phase (RTP) measurement by an ESL, RTP measurements based on infrared light based proximity and distance measurements, and a RTT measurement by an ESL. For example, including infrared capability in the ESL could provide a high-resolution short distance measurement with faster response time than other measurement techniques, which could help in measuring the proximity/distance from the ESL to a user mobile device (e.g., customer's or store picker's user mobile device), as well as help in proximity/distance measurements between ESLs and neighbor ESLs. In some embodiments, the two or more ESLs of the sub-group of ESLs may be configured to perform multiple high accuracy distance measurement operations with one another to determine their respective positions within the store relative to the anchor ESL in response to signaling from the access point.

In block 2008, the processor may perform operations including receiving indications of the respective positions within the store relative to the anchor ESL of the two or more ESLs of the sub-group of ESLs.

In block 2010, the processor may perform operations including determining an absolute position within the store of the two or more ESLs of the sub-group of ESLs based on the known absolute position within the store of the anchor ESL and the received indications of the respective positions within the store relative to the anchor ESL of the two or more ESLs of the sub-group of ESLs.

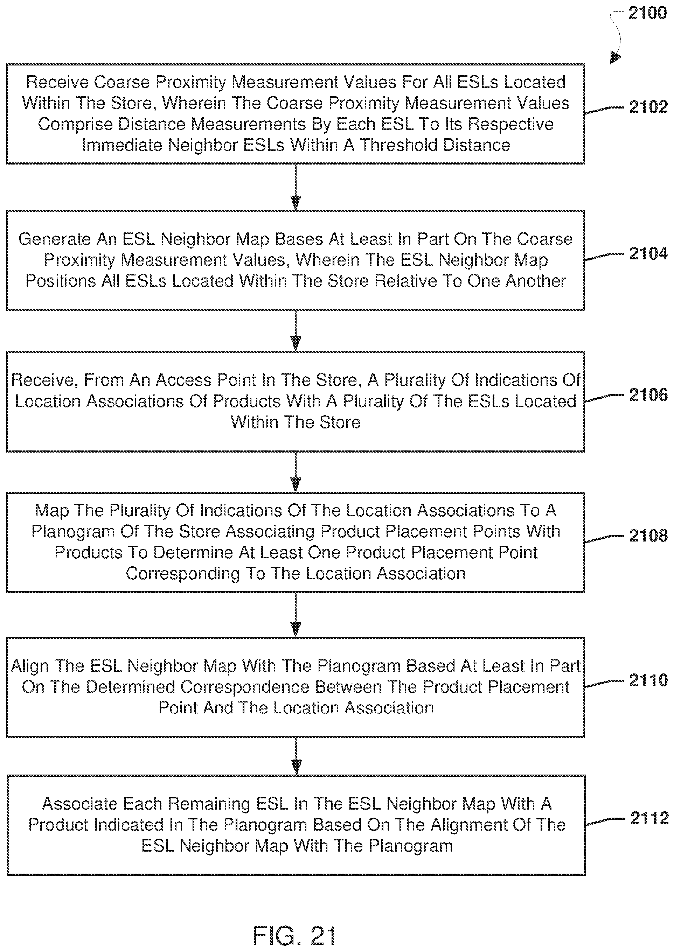

FIG. 21 is a process flow diagram illustrating a method 2100 performed by a processor of a store management entity server for controlling a network of ESLs in a store in accordance with various embodiments. With reference to FIGS. 1A-21, the method 2100 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 2102, the processor may perform operations including receiving coarse proximity measurement values for all ESLs located within the store, wherein the coarse proximity measurement values include distance measurements by each ESL to its respective immediate neighbor ESLs within a threshold distance.

In block 2104, the processor may perform operations including generating an ESL neighbor map based at least in part on the coarse proximity measurement values, wherein the ESL neighbor map positions all ESLs located within the store relative to one another.

In block 2106, the processor may perform operations including receiving, from an access point in the store, a plurality of indications of location associations of products with a plurality of the ESLs located within the store.

In block 2108, the processor may perform operations including mapping the plurality of indications of the location associations to a planogram of the store associating product placement points with products to determine at least one product placement point corresponding to the location association. In some embodiments, the product placement points may be aisle and shelf position indications.

In block 2110, the processor may perform operations including aligning the ESL neighbor map with the planogram based at least in part on the determined correspondence between the product placement point and the location association.

In block 2112, the processor may perform operations including associating each remaining ESL in the ESL neighbor map with a product indicated in the planogram based on the alignment of the ESL neighbor map with the planogram.

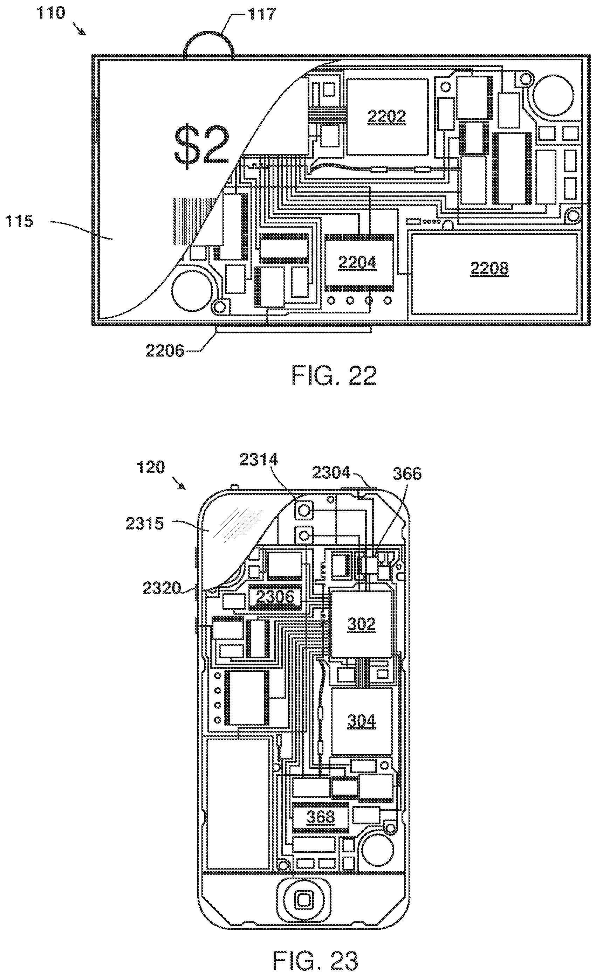

FIG. 22 is a component block diagram of an example of an ESL 110 suitable for use with various embodiments. With reference to FIGS. 1A-22, an ESL 110 may include a display 115 and an LED 117 (or other type of visible indicator) that our coupled to a processor 2202 that is configured with processor-executable instructions configured to cause the processor to perform operations of various embodiments. The processor 2202 may be coupled to a wireless transceiver 2204, such as a BLE transceiver or a combination BLE and Wi-Fi transceiver, that is coupled to an antenna 2206 for sending and receiving RF signals as described herein. An ESL 110 may be powered by a battery 2208, freeing the display from having to be connected to a wired power supply. Alternatively, the ESL 110 may be powered from an external source.

FIG. 23 is a component block diagram of a user mobile device 120 suitable for use as a user mobile device or a consumer UE when configured with processor executable instructions to perform operations of various embodiments. With reference to FIGS. 1A-23, the user mobile device 120 may include a first SOC 302 (e.g., a SOC-CPU) coupled to a second SOC 304 (e.g., a 5G capable SOC). The first and second SOCs 302, 304 may be coupled to internal memory 2306, a display 2315, and to a speaker 2314. Additionally, the user mobile device 120 may include an antenna 2304 for sending and receiving electromagnetic radiation that may be connected to a radio module 366 configured to support wireless local area network data links (e.g., BLE, Wi-Fi, etc.) and/or wireless wide area networks (e.g., cellular telephone networks) coupled to one or more processors in the first and/or second SOCs 302, 304. The user mobile device 120 typically also include menu selection buttons 2320 for receiving user inputs.

A typical user mobile device 120 may also include an inertial measurement unit (IMU) 368 that includes a number of micro-electromechanical sensor (MEMS) elements configured to sense accelerations and rotations associated movements of the device, and provide such movement information to the first SOC 302. Also, one or more of the processors in the first and second SOCs 302, 304, wireless transceiver 366 may include a digital signal processor (DSP) circuit (not shown separately).

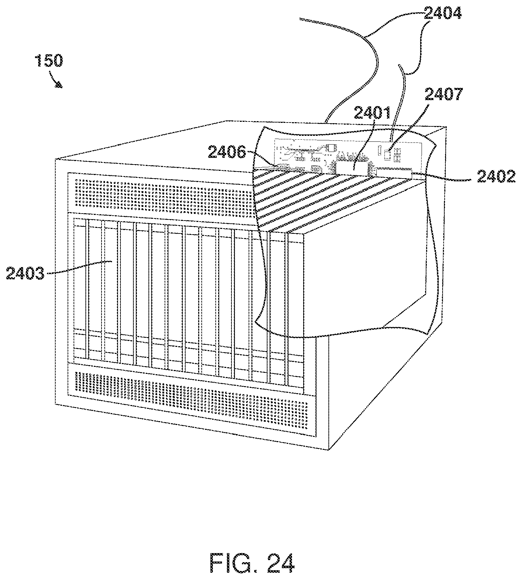

FIG. 24 is a component block diagram of a store management entity server 150 suitable for use with various embodiments. With reference to FIGS. 1A-24, the store management entity server 150 may typically include a processor 2401 coupled to volatile memory 2402 and a large capacity nonvolatile memory, such as a disk drive 2403. The store management entity server 150 may also include a peripheral memory access device, such as a floppy disc drive, compact disc (CD) or digital video disc (DVD) drive 2406 coupled to the processor 2401. The store management entity server 150 may also include network access ports 2404 (or interfaces) coupled to the processor 2401 for establishing data connections with a network, such as the Internet and/or a local area network coupled to other system computers and servers. The store management entity server 150 may include one or more antennas 2407 for sending and receiving electromagnetic radiation that may be connected to a wireless communication link. The store management entity server 150 may include additional access ports, such as USB, Firewire, Thunderbolt, and the like for coupling to peripherals, external memory, or other devices.

The processors of ESLs 110, the user mobile device 120, and the store management entity server 150 may be any programmable microprocessor, microcomputer or multiple processor chip or chips that can be configured by software instructions (applications) to perform a variety of functions, including the functions of the various embodiments described below. In some user mobile devices, multiple processors may be provided, such as one processor within an SOC 304 dedicated to wireless communication functions and one processor within an SOC 302 dedicated to running other applications. Typically, software applications may be stored in the memory 2306 before they are accessed and loaded into the processor. The processors may include internal memory sufficient to store the application software instructions.

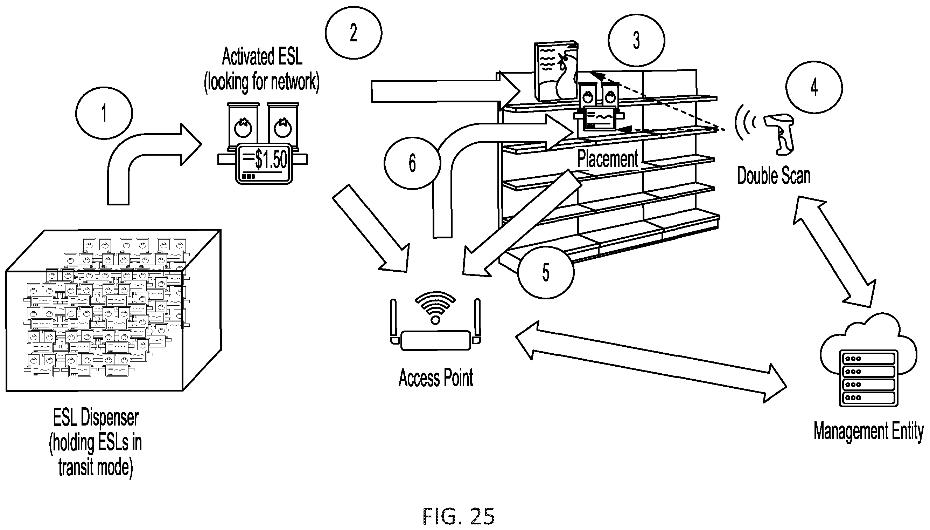

FIG. 25 illustrates aspects of deploying and setting up a store picker system, particularly with regard to the ESLs (e.g., 110), according to various embodiments. With reference to FIGs. 1A-25, the processes of deploying and setting up the ESLs may initially involve a phase of onboarding each ESL to the store (e.g., 10) in which the ESL is deployed.

The onboarding may involve a first aspect ("1") of removal of the ESL from a container (e.g., an ESL dispenser) in which it was transported. The ESL container may house one or more ESLs. A second aspect ("2") may include activation from an "off" or dormant state. The activation may enable the ESL to look for and connect to an available in-store network. Thereafter in a third aspect ("3"), the ESL must be placed on a select shelf, which location information may eventually be registered with a store management entity server (e.g., 150). In a fourth aspect ("4"), an installer, such as an employee of the store may physically place the ESLs on the shelves, may use a scanner (e.g., reading a QR-Code on a screen of the ESL or a bar code on the ESL case) to register the ESL. Additionally, since the ESL must be associated with a product, in a second part of the fourth aspect ("4"), the installer may also scan the product or a code for the product (e.g., reading a Product Bar-Code) intended to be associated with the ESL. Thus, with the ESL and the product located and scanned, in a fifth aspect ("5") the scanned ESL and product information may be communicated to the store management entity server, such as via an access point, for planogram reconciliation. Thereafter, in a sixth aspect ("6"), the store management entity server may close the loop by providing feedback or other information to the ESL via a local access point.

The deployment and setup of the ESLs using the aspects illustrated in FIG. 25 may be time consuming and involve some challenges. For example, in addition to the time-consuming process of scanning both ESLs and products, the store in which the ESLs are being deployed may have a congested radio frequency (RF) environment, making it more difficult for ESLs to recognize the appropriate access point or network with which to communicate. Congestion may cause an ESL to onboard with the incorrect network, a less than desirable access point, or fail to connect to any network. Accordingly, some embodiments may streamline the deployment and setup process for the ESLs by eliminating one or more of the six aspects. For example, some embodiments may avoid some of the deployment and setup aspects by pre-configuring, such as at the original equipment manufacturer (OEM) level, each ESL for the intended store/warehouse. However, pre-configuration may not always be an option.

A further embodiment may include a portable ESL dispenser that is configured to facilitate and simplify ESL setup in a store. Scanning a product barcode may trigger an ESL dispenser to dispense an ESL tag associated with the scanned product, which can be immediately applied to the shelf space holding the product. An employee may simply walk around the store scanning products and placing the dispensed ESL tags on the associated shelves. Such an ESL dispenser may be equipped with a barcode reader/scanner, a location sensing system (e.g., GPS, BLE beacon receiver, etc.), and Wi-Fi connectivity four exchanging data with the store management entity server . Such a portable ESL dispenser may simplify installation since only a single scan (i.e., of the product) would be needed to install the ESL on a shelf displaying product information. A Wi-Fi connection may enable product barcode-to-ESL associations to be recorded in the store management entity server, which may enable the server to check for planogram discrepancies, link ESLs to inventory records, etc. Positioning equipment within a portable ESL dispenser may be used to reconcile, validate or build the planogram for the store.

Some embodiments include an ESL dispenser that is portable and forms a retainer configured to hold and/or contain a set of ESLs. The ESL dispenser may be communicatively coupled to a scanner, which may in-turn be communicatively coupled to the management entity or the ESL dispenser may be coupled to the management entity through a local access point. Using the ESL dispenser, the installer at the store/warehouse may carry, use a cart, or otherwise transport the ESL dispenser to the shelf location for which a particular ESL is intended. Once at the intended shelf location, the installer may scan the product at that location and the ESL dispenser may be configured to automatically dispense an ESL that is now associated with that product (e.g., pricing, label, etc.), which association will be registered with the management entity. Additionally, the ESL may also be associated with the shelf location of that product. Further, the ESL may be associated with the in-store network information needed to properly communicate with the management entity. Also, the ESL dispenser may perform a validation of the ESL to ensure only functional ESLs are dispensed. In this way, the ESL dispenser may configure and dispense ESLs that are fully functional, configured, validated, and ready to display product information associated with the scanned product. Further, by already displaying product information (e.g., on the screen) when deployed, the dispensed ESLs may make it easier for the installer to install the configured ESL with the intended product in the correct location on the shelf. The installer may just look at the ESL display and match the image or information with the product on the shelf.

An ESL dispenser configured in accordance with various embodiments may streamline and ensure a proper deployment and setup of the store picker system. ESLs may be transported in a secure and radio-silent space within the ESL dispenser, such as with shielding. Using the ESL dispenser, ESLs may be associated with the correct (i.e., intended) store/warehouse. The on-boarding process may occur at an early stage (i.e., before the ESL is placed on the shelf). Thus, the ESL dispenser may eliminate one or more of the deployment aspects, such as the scanning aspect (e.g., no need to scan the ESL before putting it on the shelf). The ESL dispenser may be equipped with its own onboard systems that initiate particular image/data transfer to a selected ESL prior to dispensing (e.g., for the intended product). The ESL dispenser may be configured to check and validate ESLs, thus avoiding the distribution of broken, faulty, or unreliable ESLs. In addition, ESLs may optionally be charged by a battery in the ESL dispenser.

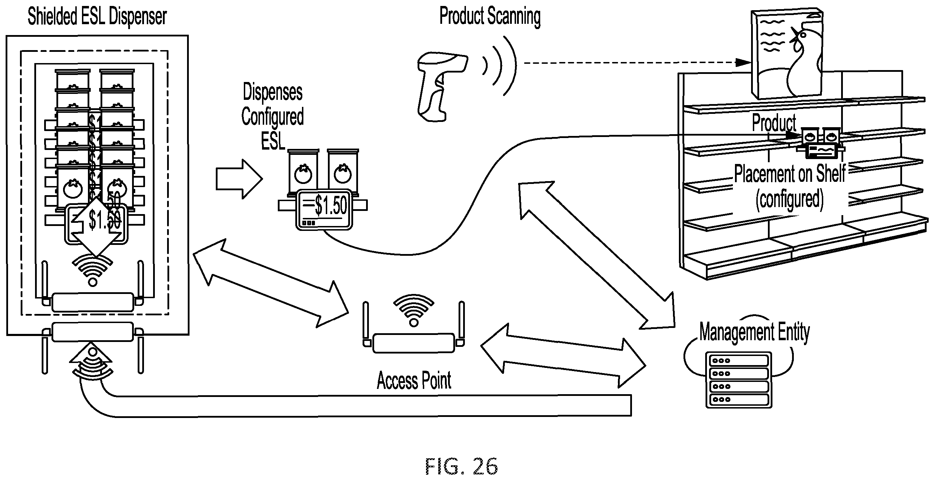

FIG. 26 illustrates an ESL dispenser used to deploy and setup a store picker system by configuring and dispensing the ESLs in accordance with some embodiments. With reference to FIGs. 1A-26, the ESL dispenser may contain a number of ESLs and include shielding to protect the ESLs from external RF signals until dispensed. By including internal barriers to RF signals, such as made of conductive or magnetic materials, the ESL dispenser may reduce or control the electromagnetic field inside, thus preventing outside RF signals from being received by the ESLs contained therein. Also, the internal barriers may ensure the ESLs are unable to communicate with a nearby network, at least until directed to do so.

In addition, the ESL dispenser may include separate internal and external transceivers. The external transceiver may be configured to communicate with the management entity, thus providing the ESL dispenser with information about the ESL in-store network supported by the management entity. The internal transceiver may be configured to communicate with the ESL held inside.

In some embodiments, the ESL dispenser may include one or more connectors inside the shielded chamber, which may provide a wired communication connection between a processor of the ESL dispenser and individual ones of the ESL held therein. That wired communication connection may be through a power supply line that not only supplies power to the ESLs but may also be used to communicate with the ESLs.

The in-store product scanner, which may communicate with the management entity through one or more local access points, may be configured to scan products or a code representing the products at a shelf location and use information to help set up an ESL in the ESL dispenser. When configuring and setting up an ESL for placement on the shelf, the product scanner may convey the product information obtained from the product scan to the management entity for configuring an ESL. In addition, the product scanner may convey a relationship maintained between the scanner and the ESL dispenser (e.g., identification information). The product scanner may designate which scanner is being used with which ESL dispenser. The management entity receiving the product information in this way is thus informed as to which product is to be associated with the next ESL to be dispensed from the ESL dispenser. The management entity receiving product information from the product scanner, as part of an ESL configuration routine, may supply configuration information to ESL dispenser so the next ESL to be dispensed may be fully configured. The ESL dispenser receiving the configuration information from the management entity may in-turn configure one of the ESLs stored therein and dispense the configured ESL. Once the ESL dispenser dispenses an ESL, the installer may place the configured ESL on the shelf in an appropriate location near the scanned product.

In some embodiments, the product scanner may scan multiple product barcodes (e.g., the products on five different shelve locations). In accordance with some embodiments, the appropriate configuration information may then be supplied to the ESL dispenser to support configuring and dispensing a series of ESLs. Such a serial scanning of products and dispensing of ESLs may save time during the deployment and setup of numerous ESLs. Since serial dispensing may cause errors if the installer loses track of which ESL goes where, some embodiments of the ESL display may provide product information that shows to which product that ESL is associated to help the installer locate the ESL correctly.

In some embodiments, the ESL dispenser may include an ancillary installation management module, which may operate as a local management entity and perform early onboarding (e.g., even before the ESL dispenser enters the store). The ESL dispenser may then establish a connection, communicate, and synchronize with a global management entity once in a particular store of that management entity. The management entity (i.e., the global management entity) may use the local management entity of the ESL dispenser as a cache, providing product display details like art work, prices, and messaging. In addition, once the ESL dispenser associates a particular ESL with a product, the ESL dispenser may report the association between the product and the selected ESL to the management entity.

The ancillary installation management module may also include the failure detection functions for checking ESLs and ensuring ESLs are configured and operate correctly. Alternatively, the failure detection functions may be separate from the ancillary installation management module. The failure detection function may report the state of the next ESL being dispensed. For example, the failure detection function may report that an ESL is "Rejected" due to some detected fault or error status identified for the next ESL. Alternatively, the failure detection function may report that an ESL is "Operational" if no faults or no significant faults are detected (i.e., proper RF, LED, and screen operation functions). The failure detection function may check LEDs and/or detailed display capabilities, as well as communications, processing, and battery levels, for example.

Once an ESL is considered operational, the ESL dispenser may associate the ESL with an intended product, as indicated by the management entity following a product scan. The management entity may have provided instructions and/or protocols for joining the synchronization transmissions from the appropriate access point. Alternatively, the management entity may only provide an access point address, allowing the dispensed ESL to start scanning for an onboarding broadcast from the access point. In a further alternative, the dispensed ESL may not be associated with a particular access point initially, but have knowledge of store/warehouse ID. Using the store/warehouse ID, the dispensed ESL may select the relevant onboarding broadcast after entering a roaming state and finding the most suitable access point.

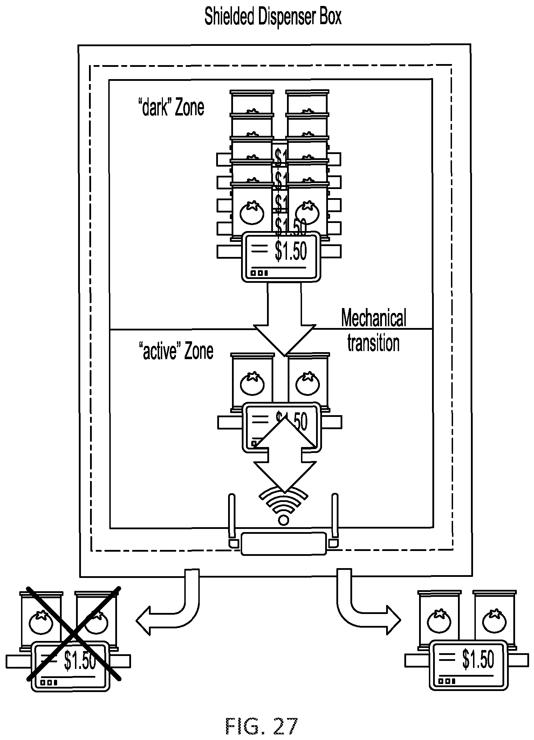

FIG. 27 illustrates an ESL dispenser according to various embodiments. With reference to FIGs. 1A-27, the ESL dispenser may include an internal "inactive" zone and an internal "active" zone. The inactive and active zones may be two physically separate areas or chambers within the ESL dispenser. The inactive zone may maintain the ESLs therein in a dormant state (i.e., a minimum power consumption state). In a dormant state, the transceiver(s) of the ESLs may be turned off to conserve power. In contrast, the active zone may allow the ESLs therein to activate the transceiver(s) and listen for RF signals that may allow the individual ESL being dispensed to perform some or all onboarding activities, as well as further configuration activities before being dispensed.

The ESL dispenser may include distinct chambers that separate the inactive and active zones, but may also include a gate or door connecting the two chambers. In addition, the ESL dispenser may include an internal track or rail system configured to mechanically transition ESLs through the internal door from the inactive zone to the active zone. Once moved to the active zone, the ESL dispenser may perform various operations on the ESLs, such as failure detection and/or onboarding, prior to dispensing the ESL. Entering the active zone may trigger those operations. For example, in some embodiments, a magnetic reed switch in each ESL may detect the ESL has been moved into the active zone, thus triggering the ESL to awaken. Alternatively, in some embodiments, the active zone may expose the ESLs therein to some artificial or external light, triggering a light dependent resistor (LDR) to awaken the ESLs. As a further alternative in some embodiments, the LDR may be used to trigger operations or functions of the ESL only after being fully dispensed from the ESL dispenser (i.e., exiting the internal chambers and shielding).

In some embodiments, the ESL dispenser may flag a broken or malfunctioning ESL. Validation of the functional state of any ESL may occur as early as insertion into the box or as late as onboarding or association in active zone. Validation at the time each ESL is inserted into the ESL dispenser may avoid the problem of the ESL dispenser potentially holding one or more malfunctioning ESLs.

In some embodiments, providing a local management entity in the ESL dispenser may speed the rate at which ESLs may be dispensed from the ESL dispenser. The local management entity may act as a cache for the global management entity of the store. The local management entity may reduce latencies that would otherwise exist between the scanner and the ESL dispenser; between the ESL dispenser and the global management entity; between the global management entity and the ESL dispenser; and between the ESL dispenser and the individual ESLs. By storing and maintaining information provided by the global management entity, the local management entity may be pre-loaded with an entire planogram or subset of a planogram of the store. In this way, the local management entity may be configured to dispense ESLs in more fully configured state, more quickly than the ESLs could otherwise be configured by the global management entity more directly. The communications associating products to each ESL may occur at a later stage, with less time critical communication constraints. Also, the global management entity may determine the information to cache in the local management entity based on the physical location of the ESL dispenser with respect to the planogram. Thus, only a subset of store information needs to be cached in the local management entity of the ESL dispenser.

In some embodiments, the ESL dispenser may include a power supply configured to charge the ESLs therein. The ESL dispenser may have a much larger and/or more substantial power supply than the individual ESLs, which may enable ESLs powered by the ESL dispenser battery to be active and use higher levels of power to be configured more rapidly. In addition, an ESL dispenser with a power supply may not need both inactive and active zones, since active ESLs being powered by the ESL dispenser's power supply will not consume ESL battery power that may be needed when the ESL is mounted on a shelf. Further, the power supply onboard the ESL dispenser may be used as a communication conduit, providing a direct wired connection between the ESL dispenser and the ESLs, eliminating the need for an internal transceiver that communicates between the ESL dispenser and the ESLs housed therein.

In some embodiments, the ESL dispenser may include a sensing and positioning system. The sensing and positioning system may provide an automatic determination of product location to the ESL, allowing for an automated reconciliation with a planogram or conversely providing feedback back to the management entity with respect to reconciliation of product and position. The sensing may be enhanced by gyroscopes or other location sensing devices, providing finer grain location detection. Optionally, the sensing and positioning system may serve as a backup and/or replacement to the scanner, and hence assist in the compilation and maintenance of a planogram for the store. For example, once a product is scanned, the sensing and positioning system in the ESL dispenser may validate product locations against an existing planogram.

In some embodiments, the sensing and positioning system in the ESL dispenser may provide location information along with the product information obtained in a scan of a product that may enable the management entity to confirm that the product is where it is supposed to be, such as accordingly to an existing planogram. In some embodiments, the sensing and positioning system in the ESL dispenser may provide information the management entity to enable calibration and refinement of an existing planogram. For example, the specific extent of products in a planogram section (e.g., 'cereals') may be updated or confirmed by the management entity based on product and location information received from ESL dispensers during the deployment of ESLs. In some embodiments, the sensing and positioning system in the ESL dispenser may be used to establish an initial planogram or section of a planogram as part of a product location system. In some embodiments, the sensing and positioning system in the ESL dispenser may facilitate the determination of the nearest access point for assignment to an ESL being dispensed. In some embodiments, the sensing and positioning system may work with or supplement positional determinations made by individual ESLs or a group of ESLs working together, each providing portions used for positional determinations.

In some embodiments, the ESL dispenser sensing and positioning system may use dead reckoning techniques for determining a specific location of the ESL dispenser within the store. Sensors may include, for example, an inertial measurement unit or a revolution counter. In some embodiments, the sensing and positioning system may include GPS, pseudolites, 5G, Wi-Fi, UWB, or other RF positioning system.

Positioning may be either relative within a store or absolute with respect to some reference frame (such as an earth-fixed terrestrial reference system and geodetic datum (e.g., WGS84)). Determining an absolute reference frame may enable the ESL dispenser to recognize not only its location within a store, but to also determine in which store it is located. Positioning determinations may also be enhanced if a position of the scanner relative to the dispenser is known or may be determined. Determining a position of the scanner relative to the ESL dispenser may be achieved using a combination of ultrasound, pressure sensor(s), and/or camera(s). One constraint on properly determining the location of the product and/or the shelf location of the product is that the scanning of the product may need to be done in close proximity to the ESL dispenser or the relative position between the ESL dispenser and the scanner may need to be known.

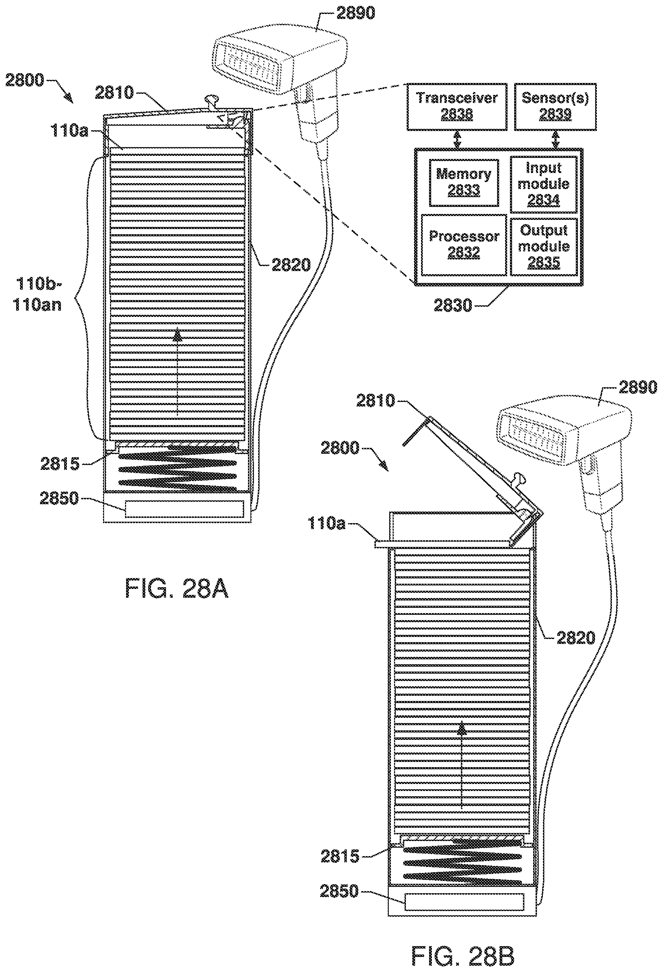

FIGS. 28A and 28B illustrate an ESL dispenser according to some embodiments. With reference to FIGs. 1A-28B, the ESL dispenser may form or include an ESL cartridge 2800. The ESL cartridge 2800 may house a limited number of ESLs 110a-110an. In some embodiments, some or all functions and options described above with regard to the ESL dispenser may be included or provided with the ESL cartridge 2800. The ESL cartridge 2800 may include a dispenser cap 2810 and a dispenser housing 2820. The dispenser housing 2820 may be configured to hold a stack of ESLs on a spring-loaded base 2815. The spring-loaded base may bias the stack of ESLs toward the dispenser cap 2810. The dispenser cap 2810 may be pivotally secured to a dispensing end of the dispenser housing 2820. Also, the dispenser cap 2810 may be configured to push and/or slide the top ESL 110a at least partially out of the dispenser housing 2820 for an installer to grab and remove from the ESL cartridge 2800. Once the top ESL 110a is removed from the ESL cartridge 2800, the spring-loaded base 2815 will push the next ESL 110b toward the top, making that next ESL 110b the new top ESL.

The ESL cartridge 2800 may include a control unit 2830, which may include various circuits and devices used to control operations thereof. In the example illustrated in FIGS. 28A and 28B, the control unit 2830 may include a processor 2832, memory 2833, an input module 2834, and an output module 2835. In addition, the control unit 2830 may be coupled to a transceiver 2838 for transmitting and/or receiving wireless communications (e.g., such as with the management entity computing device or the ESLs) and one or more sensors 2839.

The ESL cartridge 2800 may be communicatively coupled to a scanner 2890. In the embodiment shown in FIGS. 28A and 28B, the scanner 2890 has a wired connection to the dispenser housing 2820, which may be internally coupled to the control unit 2830. Alternatively, the scanner 2890 may have a wireless connection to the control unit 2830, via the transceiver 2838.

In some embodiments, the position of the dispensing end of the ESL110a may correspond to an active zone, while the lower positions correspond to an inactive zone in which the ESLs remain dormant. Once an ESL reaches the dispensing position, that ESL may be ready to be programmed by the processor 2832. The ESL 110a in the dispensing position, which is ready to be programmed, may receive the product information needed to be displayed by the ESL 110a when a product is scanned by the scanner 2890. In some embodiments, the processor 2832 may partially configure the ESL 110a in the dispensing position before receiving product information from the scanner, such as with information to communicate with a particular network access point or to provide other provisioning for communicating with a remote management entity computing device after the ESL 110a is dispensed. In some embodiments, the ESL 110a in the dispensing position may be tested by the ESL dispenser or the cartridge 2800 to verify that the ESL operates correctly before being dispensed for placement on a shelf.

In response to receiving product information from the scanner 2890, the ESL 110a in the dispensing position may be configured with information associated with a product on a shelf. For example, once a product is scanned by the scanner 2890, the ESL may be loaded with price information, ejected from the dispenser housing 2820 ready to be placed on the shelf.

In some embodiments, the scanner 2890 may be associated with the ESL cartridge 2800, which may be configured to provide the management entity function from a local management entity module therein. In some embodiments, the ESL cartridge 2800 may include a positioning system configured to determine a location of the ESL cartridge 2800, a scanned product, or a shelf or portion of a shelf on which the scanned product is located. Thus, when a product is scanned, the top ESL 110a may be immediately configured accordingly and released.

The ESL cartridge 2800 may include a power supply 2850, which may be configured to provide power to the components of the control unit 2830. The ESLs 110a-110an may be prevented from drawing power from their individual onboard batteries, at least until reaching the dispensing position. In addition, the power supply 2850 may provide power to the scanner 2890. Optionally, the power supply 2850 may charge or supply power to the ESLs 110a-110an. As an additional option, when power or control information is provided to the ESLs using a wired connection, a mechanism may be included that breaks the wired connection before dispensing, including closing off any exposed contacts from which a conductive path was maintained. The mechanism may close an exterior panel on an outer casing of the ESL, melt a portion of the casing, or add resin to seal off the ESL before the dispensing operation.

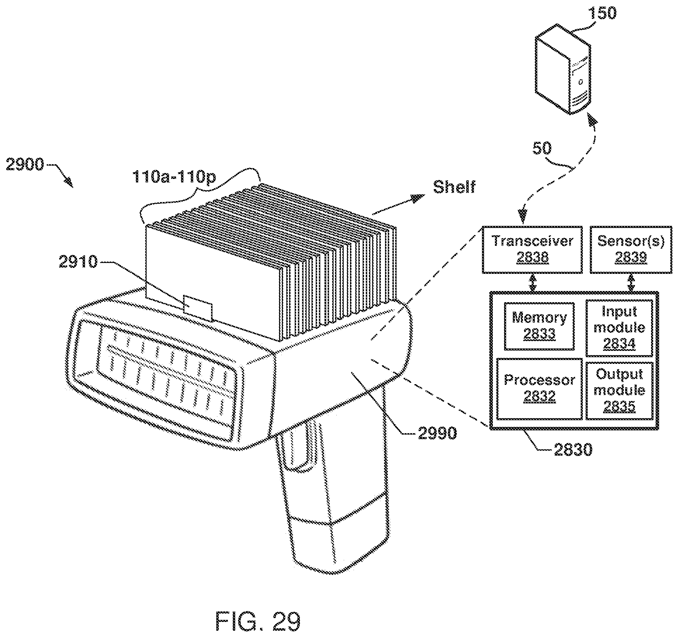

FIG. 29 illustrates an ESL dispenser according to some embodiments. With reference to FIGs. 1A-29, the ESL dispenser 2900 includes a scanner body 2990 and a micro-cartridge 2910 retaining a plurality of thin ESLs 110a-110p. Many of the functions and options described above with regard to the ESL dispenser and the ESL cartridge 2800 may be included with or provided by the ESL cartridge 2900. In this embodiment of the ESL dispenser 2900, the largest element may be the scanner body 2990, while the micro-cartridge 2910 functions as a clip that fastens the ultra-thin ESLs 110a-110p onto the scanner body 2990, at least until an ESL is ready to be dispensed. The micro-cartridge 2910 may include a series of clips, seats, or ESL stations for receiving and holding the ultra-thin ESLs 110a-110p. The series of clips, seats, or ESL stations on the micro-cartridge 2910 may be configured to not only hold the ESLs but also maintain them in an inactive state, such as with a magnetic or RF switch maintaining the ESLs in a desired state.

The ESL cartridge 2900 may include a control unit 2830, which may include various circuits and devices used to control operations thereof. The control unit 2830 may include a processor 2832, memory 2833, an input module 2834, and an output module 2835. In addition, the control unit 2830 may be coupled to a transceiver 2838 for transmitting and/or receiving wireless communications 50 (e.g., such as with the management entity computing device 150 or the ESLs 110a-110p) and one or more sensors 2839.

The scanner body 2990 may be associated with a management entity computing device 150 and provided with an identifier for the given store - thus disambiguating various available ESL networks. In some embodiments, once the micro-cartridge 2910 is loaded on the scanner body 2990, the ESLs may be onboarded. For example, an active ESL may be supplied with general management entity information (e.g., store ID, local network connection information, etc.).

In some embodiments, one ESL position on the micro-cartridge 2910, such as the rear-most position in the configuration shown in FIG. 29, may be configured for dispensing. In some embodiments, from the rear-most position the ESL may be directly mounted onto a particular position on a shelf (e.g., near the scanned product) and that ESL may automatically be released from the micro-cartridge 2910.

In some embodiments, a final location of the installed ESL may be directly determined by the management entity and/or the ESL dispenser, such as the ESL dispenser 2900, through an additional measurement once the ESL is placed on a shelf. If the installed ESL location, including which shelf, is known, then sufficient positioning information may be available to eliminate any constraint on how or where products are scanned relative to the ESL dispenser or the installed ESL location. Detection of the location of an installed ESL may be included within the scanner (e.g., scanner body 2990). For example, the ESL may be carried by the scanner, which may then be used to clip the ESLs onto the shelves, directly from the scanner.

In some embodiments, the operator may wear a positioning wristband on the wrist of the hand using the scanner. The positioning wristband may then provide location information as the installer uses the wristband-wearing hand to remove ESLs from the ESL dispenser and place the ESL on the shelf. Like the scanner, such as a wristband may use standard techniques for relative positioning with respect to the ESL dispenser via a combination of sensors.

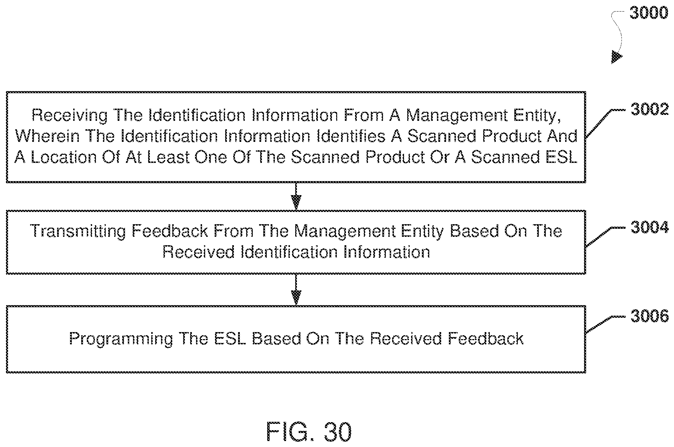

FIG. 30 is a process flow diagram illustrating a method 3000 for using an ESL dispenser in accordance with some embodiments. With reference to FIGS. 1A-30, the method 3000 may be implemented by a processor of an ESL dispenser (e.g., 2800, 2900) in conjunction with one or more sensors, such as an IMU, a proximity sensor, a light sensor, a microphone, a camera, a scale, a micro-electromechanical sensor, etc. (e.g., 368).

In block 3002, the processor may receive product identification information from a management entity. The product identification information may identify a scanned product and a location of at least one of the scanned product or an ESL being dispensed. In this way, the location of the scanned product, the ESL, or both the scanned product and the ESL may be identified.

In block 3004, the processor may perform operations including transmitting feedback to the management entity based on the received product identification information and/or the ESL being dispensed. The transmitted feedback may include the collected information, such as the information associating the product and the ESL.

In block 3006, the processor may perform operations including programming the ESL based on the received product identification information.

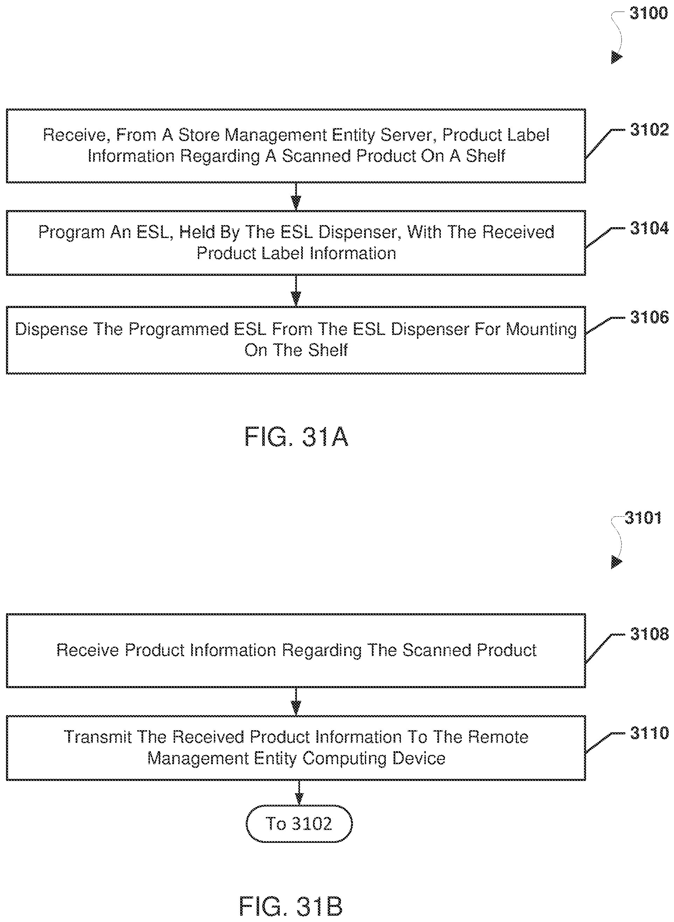

FIG. 31A is a process flow diagram illustrating a method 3100 for using an ESL dispenser in accordance with some embodiments. With reference to FIGS. 1A-31A, the method 3100 may be implemented by a processor of an ESL dispenser (e.g., 2800, 2900) in conjunction with one or more sensors, such as an IMU, a proximity sensor, a light sensor, a microphone, a camera, a scale, a micro-electromechanical sensor, etc. (e.g., 368).

In block 3102, the processor may receive, from a store management entity server, product label information regarding a scanned product on a shelf.

In block 3104, the processor may perform operations including programming an ESL held by the ESL dispenser with the received product label information.

In block 3106, the processor may perform operations including dispensing the programmed ESL from the ESL dispenser for mounting on the shelf.

In some embodiments, the received product label information may include at least one of a location, image, price, or network access point information associated with the scanned product. In some embodiments, programming the ESL may include configuring the ESL to communicate with a particular network access point.

In some embodiments, receiving product label information regarding the scanned product on the shelf may include receiving product label information regarding a series of products on the shelf. some embodiments, programming the ESL with the received product label information may include programming each of a series of ESLs with distinct product label information corresponding to different ones of the series of products on the shelf in response to receiving the product label information regarding the series of products. some embodiments, dispensing the programmed ESL may include dispensing the series of ESL programmed with the respective product label information.

FIG. 31B is a process flow diagram illustrating a method 3101 for using an ESL dispenser in accordance with some embodiments. With reference to FIGS. 1A-31B, the method 3101 may be implemented by a processor of an ESL dispenser (e.g., 2800, 2900) in conjunction with one or more sensors, such as an IMU, a proximity sensor, a light sensor, a microphone, a camera, a scale, a micro-electromechanical sensor, etc. (e.g., 368).

In block 3108, the processor may receive product information regarding the scanned product. The product information may be received from a scanner when scanning the product.

In block 3110, the processor may perform operations including transmitting the received product information to the remote management entity computing device.

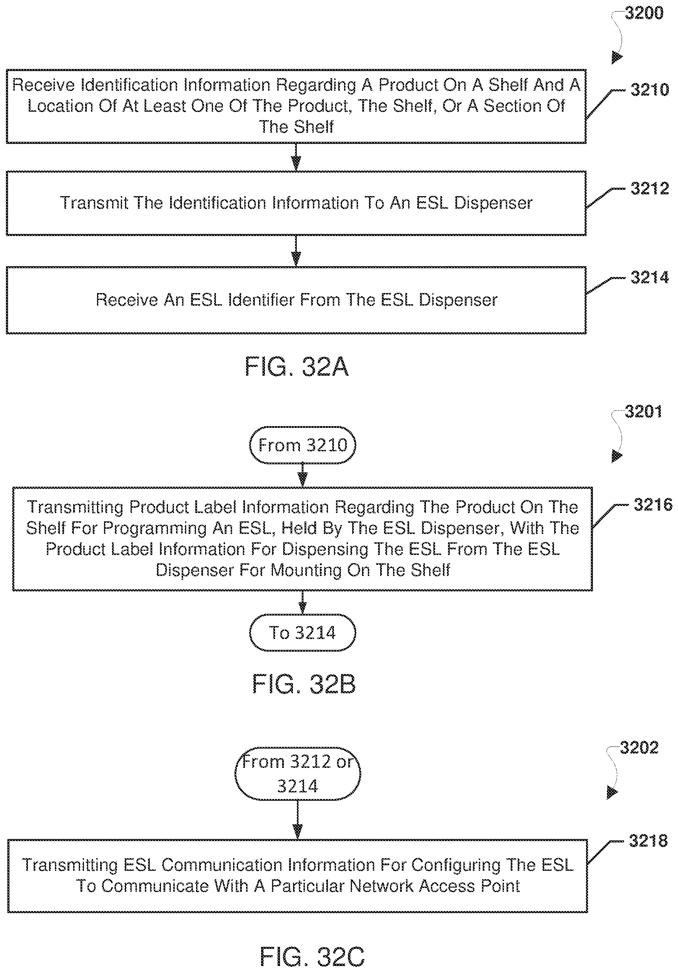

FIGs. 32A is a process flow diagram illustrating methods for supporting in-store product picking performed by a processor of a store management entity server in accordance with various embodiments. With reference to FIGs. 1A-32A, a method 3200 is illustrated, which may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 3210, the processor may perform operations including receiving identification information regarding a product on a shelf and a location of at least one of the product, the shelf, or a section of the shelf.

In block 3212, the processor may perform operations including transmitting the identification information, received in block 3210, to an ESL dispenser. In some embodiments, the processor may transmit the identification information to the ESL dispenser using one or more transceivers.

In block 3214, the processor may perform operations including receiving an ESL identifier from the ESL dispenser. The ESL identifier may uniquely identify a selected ESL that has been associated with the product on the shelf.

FIG. 32B is a process flow diagram illustrating a method 3201 for supporting in-store product picking performed by a processor of a store management entity server in accordance with various embodiments. With reference to FIGS. 1A-32B, the method 3201 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

Following the operations in block 3210 of the method 3200, the processor may perform operations in block 3216 including transmitting product label information regarding the product on the shelf for programming an ESL, held by the ESL dispenser, with the product label information for dispensing the ESL from the ESL dispenser for mounting on the shelf. In some embodiments, the processor may transmit the product label information to the ESL dispenser using one or more transceivers. Following the operations in block 3216, the processor may perform the operations in block 3214 of the method 3200 as described.

FIG. 32C is a process flow diagram illustrating a method 3202 for supporting in-store product picking performed by a processor of a store management entity server in accordance with various embodiments. With reference to FIGS. 1A-32C, the method 3202 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

Following the operations in block 3212 or 3214 of the method 3200, the processor may perform operations in block 3218 including transmitting ESL communication information for configuring the ESL to communicate with a particular network access point. In some embodiments, the processor may transmit the ESL communication information to the ESL dispenser using one or more transceivers.

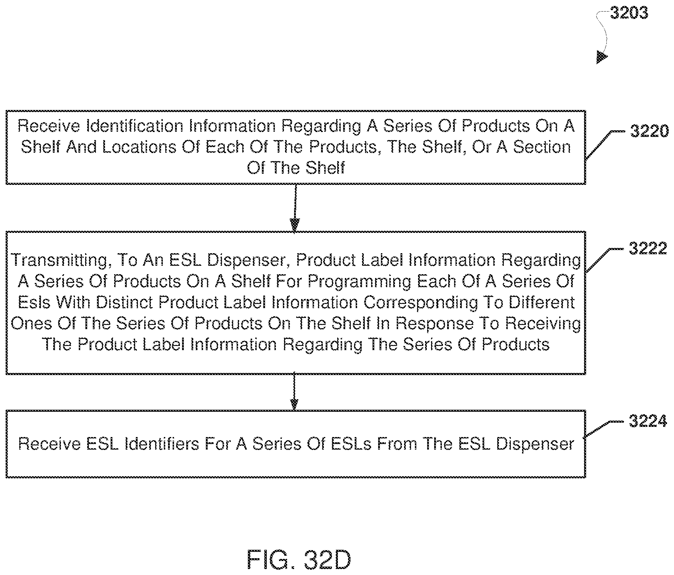

FIG. 32D is a process flow diagram illustrating a method 3203 for supporting in-store product picking performed by a processor of a store management entity server in accordance with various embodiments. With reference to FIGS. 1A-32D, the method 3203 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 3220, the processor may perform operations including receiving identification information regarding a series of products on a shelf and locations of each of the products, the shelf, or a section of the shelf.

In block 3222, the processor may perform operations including transmitting, to an ESL dispenser, product label information regarding a series of products on a shelf for programming each of a series of ESLs with distinct product label information corresponding to different ones of the series of products on the shelf in response to receiving the product label information regarding the series of products. In some embodiments, the processor may transmit the ESL communication information to the ESL dispenser using one or more transceivers.

In block 3224, the processor may perform operations including receiving ESL identifiers for a series of ESLs from the ESL dispenser. The ESL identifiers may uniquely identify each of a series of selected ESLs that have been associated with the identified products on the shelf.

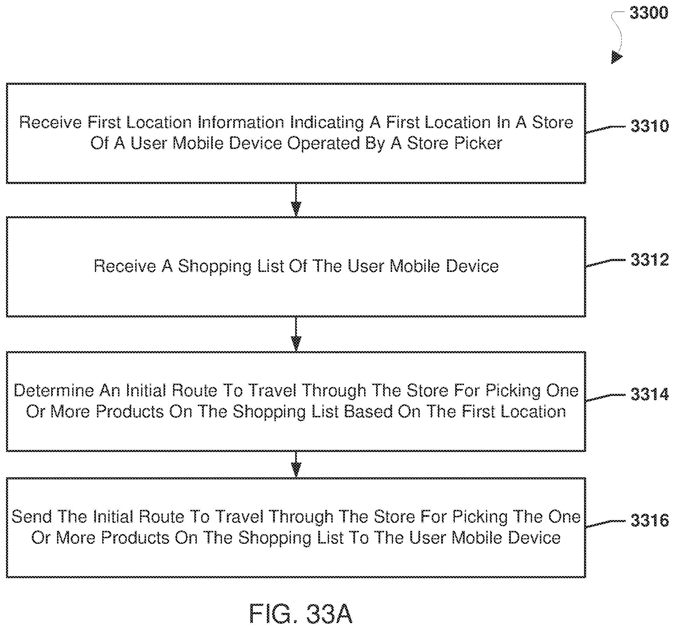

FIG. 33A is a process flow diagram illustrating a method 3300 for supporting in-store product picking performed by a processor of a store management entity server in accordance with various embodiments. With reference to FIGS. 1A-33A, the method 3300 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

In block 3310, the processor may perform operations including receiving first location information indicating a first location in a store of a user mobile device operated by a store picker. In some embodiments, at least part of the first location information may be received from one or more electronic shelf labels (ESLs) in the store. In some embodiments, the first location information may be received from the user mobile device and include inertial measurement unit (IMU) measurements. In some embodiments, the process may receive raw measurement information (e.g. RSSIs and associated BD_ADDR from ESLs) from the user mobile device, allowing a position to be calculated by the store management entity server and/or a dedicated location server. Alternatively, the process may receive actual location information (e.g., coordinates, aisle and shelf coordinates, etc.) from the user mobile device, an ESL, an access point, or other intermediate computing device, which may have been computed by the user mobile device, ESL, access point, or other intermediate computing device.

In block 3312, the processor may perform operations including receiving a shopping list of the user mobile device.

In block 3314, the processor may perform operations including determining an initial route to travel through the store for picking one or more products on the shopping list based on the first location. In some embodiments, determining the initial route to travel through the store for picking one or more products on the shopping list may be based at least in part on one or more picking goals including at least one of minimizing an overall distance traveled within the store by the user mobile device, avoiding other store pickers, avoiding currently congested aisles, or avoiding other customers. In some embodiments, the initial route may include multiple routes for the store picker to travel through the store for picking one or more products on the shopping list. Each of the multiple routes may be based on a different criteria (e.g., least distance, fastest, least contact with others, etc.).

In block 3316, the processor may perform operations including sending the initial route to travel through the store for picking the one or more products on the shopping list to the user mobile device. In some embodiments, multiple routes may be sent to the user mobile device for selection by the user.

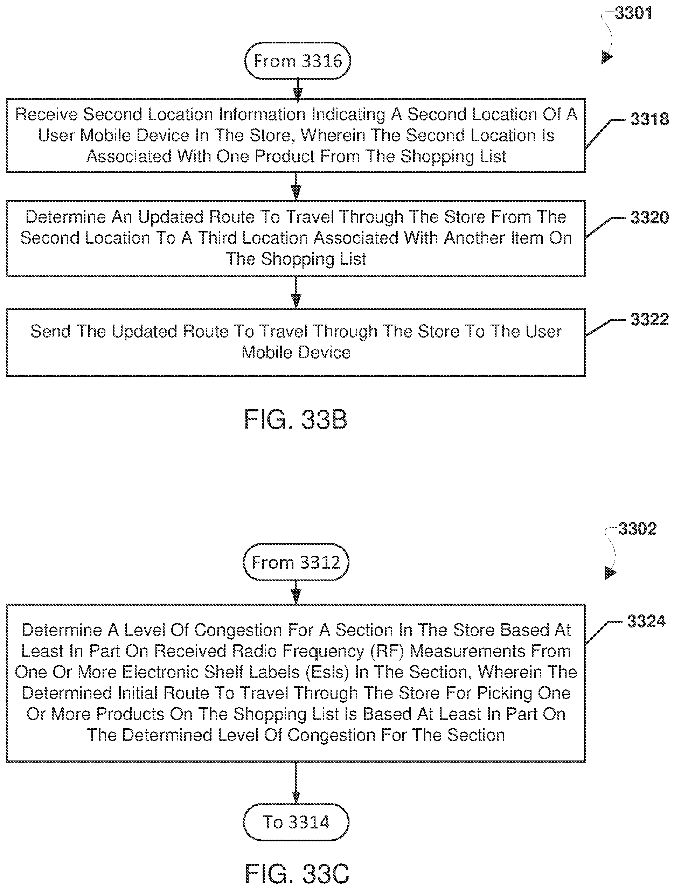

FIG. 33B is a process flow diagram illustrating a method 3301 for supporting in-store product picking performed by a processor of a store management entity server in accordance with various embodiments. With reference to FIGS. 1A-33B, the method 3301 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

Following the operations in block 3316 of the method 3300, the processor may perform operations in block 3318 including receiving second location information indicating a second location of a user mobile device in the store, wherein the second location is associated with one product from the shopping list.

In block 3320, the processor may perform operations including determining an updated route to travel through the store from the second location to a third location associated with another item on the shopping list.

In block 3322, the processor may perform operations including sending the updated route to travel through the store to the user mobile device.

FIG. 33C is a process flow diagram illustrating a method 3302 for supporting in-store product picking performed by a processor of a store management entity server in accordance with various embodiments. With reference to FIGS. 1A-33C, the method 3302 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

Following the operations in block 3316 of the method 3300, the processor may perform operations in block 3324 including determining a level of congestion for a section in the store based at least in part on received radio frequency (RF) measurements from one or more electronic shelf labels (ESLs) in the section of the store, and determining the initial route to travel through the store for picking one or more products on the shopping list based at least in part on the determined level of congestion for the section of the store. Following the operations in block 3324, the processor may perform the operations in block 3314 of the method 3300 as described.

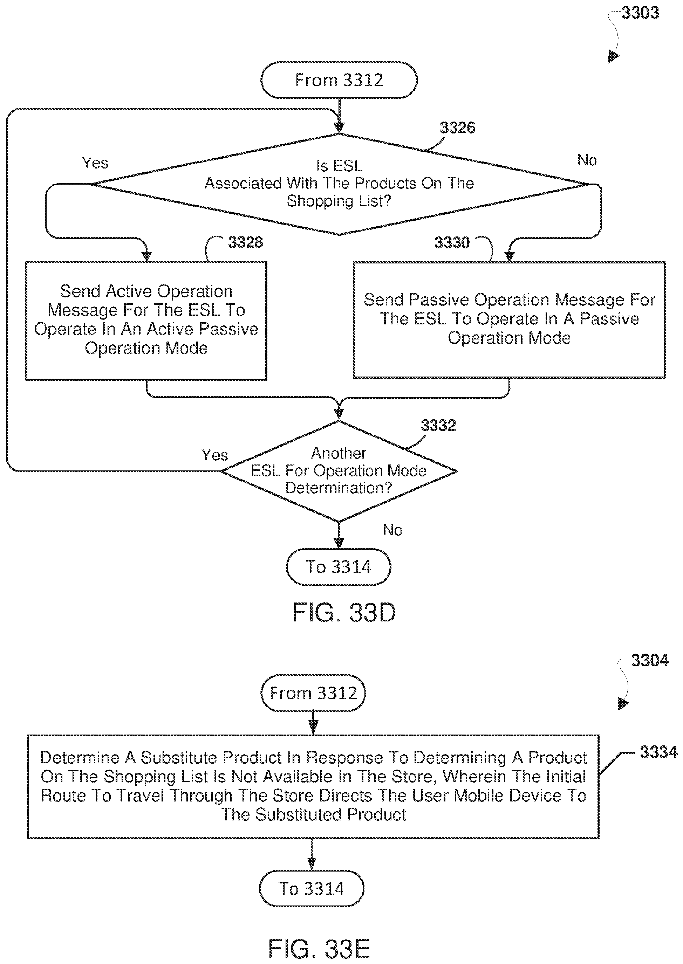

FIG. 33D is a process flow diagram illustrating a method 3303 for supporting in-store product picking performed by a processor of a store management entity server in accordance with various embodiments. With reference to FIGS. 1A-33D, the method 3303 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

Following the operations in block 3312 of the method 3300, the processor may perform operations in determination block 3326 including determining whether the ESL is associated with one or more of the products on the shopping list received in block 3312 of the method 3300. The ESL may be one in a series of ESLs for which the determination in determination block 3326 is made.

In response to the processor determining that the ESL is associated with one or more products on the shopping list (i.e., determination block 3326 = "Yes"), the processor may perform operations in block 3328 including sending an operation message to at least one ESL. In this case, the operation message may include an active operation message for the ESL to operate in an active operation mode. The operations in block 3328 may be similar to the operations in block 1508 of the method 1500.

In response to the processor determining that the ESL is not associated with the products on the shopping list (i.e., determination block 3326 = "No"), the processor may perform operations in block 3330 including sending an operation message to at least one ESL. In this case, the operation message may include a passive operation message for the ESL to operate in a passive operation mode. The operations in block 3330 may be similar to the operations in block 1504 of the method 1500 as described.

Following the operations of blocks 3328 and 3330, in determination block 3332 the processor may determine whether another ESL needs to be considered for the operation mode determination in determination block 3326.

In response to the processor determining that another ESL needs to be considered for the operation mode determination (i.e., determination block 3332 = "Yes"), the processor may again perform the operations of determination block 3326 with regard to another ESL. In response to the processor determining that no other ESL needs to be considered for the operation mode determination (i.e., determination block 3332 = "No"), the processor may perform the operations in block 3314 of the method 3300 as described.

FIG. 33E is a process flow diagram illustrating a method 3304 for supporting in-store product picking performed by a processor of a store management entity server in accordance with various embodiments. With reference to FIGS. 1A-33E, the method 3304 may be implemented by a processor of a store management entity server (e.g., 150) in conjunction with one or more sensors, such as an IMU, a proximity sensor, a light sensor, a microphone, a camera, a scale, a micro-electromechanical sensor, etc. (e.g., 368).

Following the operations in block 3312 of the method 3300, the processor may perform operations in block 3334 including determining a substitute product in response to determining a product on the shopping list is not available in the store and updating the route to travel through the store to direct the user mobile device to the substituted product. The operations in block 3334 may be similar to the operations in block 804 of the method of the method 800 as described. Following the operations in block 3334, the processor may perform the operations in block 3314 of the method 3300 as described.

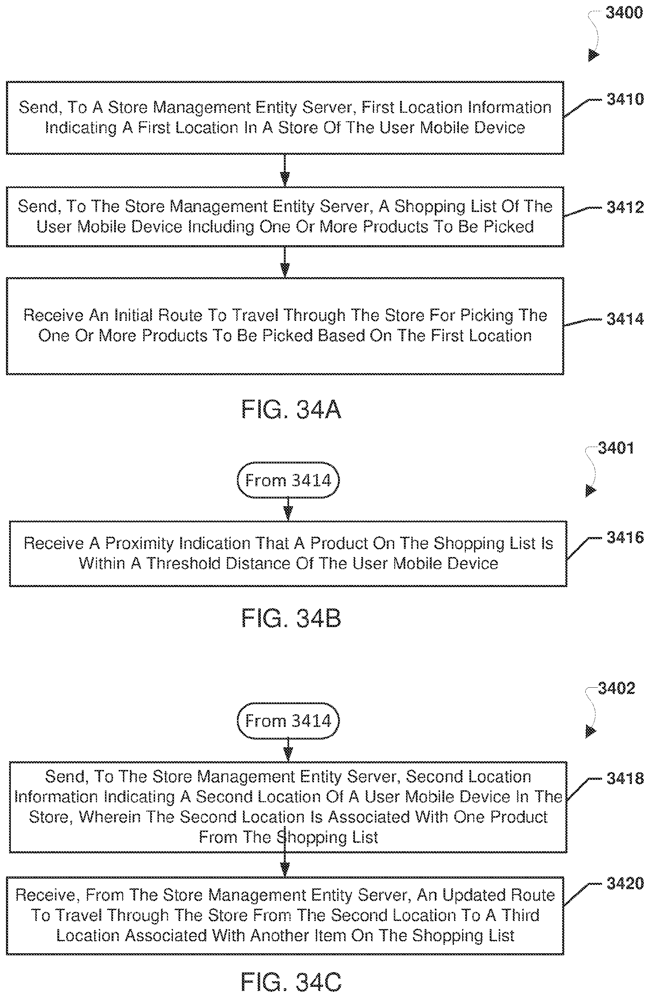

FIG. 34A is a process flow diagram illustrating a method 3400 for supporting in-store product picking performed by a processor of a store management entity server in accordance with various embodiments. With reference to FIGS. 1A-34A, the method 3400 is illustrated, which may be implemented by a processor of a user mobile device (e.g., 120) in conjunction with one or more sensors, such as an IMU, a proximity sensor, a light sensor, a microphone, a camera, a scale, a micro-electromechanical sensor, etc. (e.g., 368).

In block 3410, the processor may perform operations including sending, to a store management entity server, first location information indicating a first location in a store of the user mobile device. In some embodiments, sending the first location information may include sending a proximity message to an ESL (e.g., associated with at least one product) in a section of the store. Similar location information may be sent to the store management entity server from other ESLs. The transmission of such location information from multiple ESLs may be coordinated (e.g., transmitted at approximately the same time or within a short span of time). In some embodiments, sending the first location information may include sending inertial measurement unit (IMU) measurements.

In block 3412, the processor may perform operations including sending, to the store management entity server, a shopping list of the user mobile device including one or more products to be picked.

In block 3414, the processor may perform operations including receiving an initial route to travel through the store for picking the one or more products to be picked based on the first location. Once the initial route to travel is received, the processor may perform operations including displaying the initial route to travel through the store on a display on or coupled to the mobile device for viewing by the user of the mobile device. In some embodiments, the user mobile device may include a display screen and the processor may display the initial route on the display, such as in the form of a map. In some embodiments, the user mobile device may be coupled to a separate display, such as smart glasses, augmented reality glasses or goggles, or other wearable displays, and the processor may transmit graphical information to the separate display for rendering images showing the initial route, such as in the form of a map, arrows, virtual paths and/or forms of visual guidance.

FIG. 34B is a process flow diagram illustrating a method 3401 for supporting in-store product picking performed by a processor of a store management entity server in accordance with various embodiments. With reference to FIGS. 1A-34B, the method 3401 may be implemented by a processor of a user mobile device (e.g., 120) in conjunction with one or more sensors, such as an IMU, a proximity sensor, a light sensor, a microphone, a camera, a scale, a micro-electromechanical sensor, etc. (e.g., 368).

Following the operations in block 3414 of the method 3400, the processor may perform operations in block 3416 including receiving a proximity indication that a product on the shopping list is within a threshold distance of the user mobile device. In some embodiments, the receipt of the proximity indication may be coordinated with one or more LEDs near the product that are made to light up.

FIG. 34C is a process flow diagram illustrating a method 3402 for supporting in-store product picking performed by a processor of a store management entity server in accordance with various embodiments. With reference to FIGS. 1A-34C, the method 3402 may be implemented by a processor of a user mobile device (e.g., 120) in conjunction with one or more sensors, such as an IMU, a proximity sensor, a light sensor, a microphone, a camera, a scale, a micro-electromechanical sensor, etc. (e.g., 368).

Following the operations in block 3414 of the method 3400, the processor may perform operations in block 3418 including sending, to the store management entity server, second location information indicating a second location of a user mobile device in the store in which the second location is associated with one product from the shopping list.

In block 3420, the processor may perform operations including receiving, from the store management entity server, an updated route to travel through the store from the second location to a third location associated with another item on the shopping list.

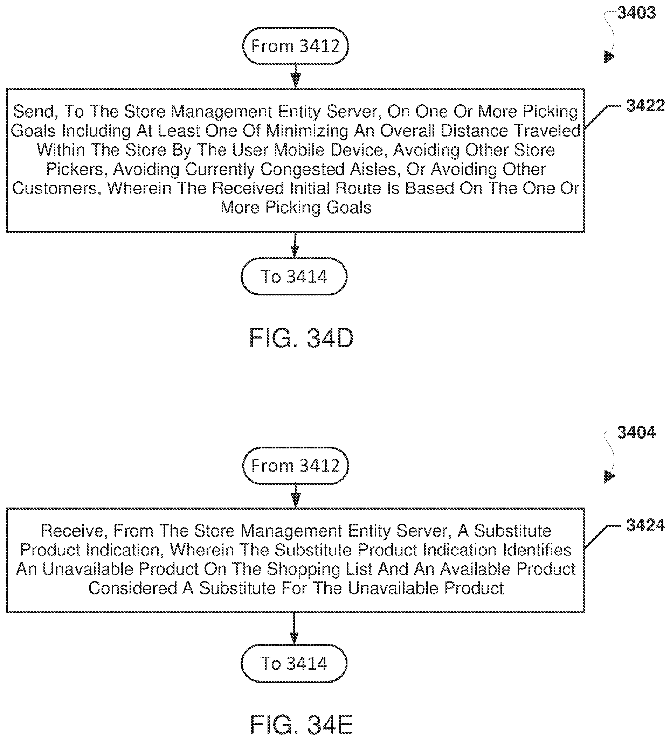

FIG. 34D is a process flow diagram illustrating a method 3403 for supporting in-store product picking performed by a processor of a store management entity server in accordance with various embodiments. With reference to FIGS. 1A-34D, the method 3403 may be implemented by a processor of a user mobile device (e.g., 120) in conjunction with one or more sensors, such as an IMU, a proximity sensor, a light sensor, a microphone, a camera, a scale, a micro-electromechanical sensor, etc. (e.g., 368).

Following the operations in block 3412 of the method 3400, the processor may perform operations in block 3422 including sending, to the store management entity server, one or more picking goals including at least one of minimizing an overall distance traveled within the store by the user mobile device, avoiding other store pickers, avoiding currently congested aisles, or avoiding other customers. In such embodiments, the received initial route may be based in part on the one or more picking goals. Following the operations in block 3422, the processor may perform the operations in block 3414 of the method 3400 as described.

FIG. 34E is a process flow diagram illustrating a method 3404 for supporting in-store product picking performed by a processor of a store management entity server in accordance with some embodiments. With reference to FIGS. 1A-34E, the method 3404 may be implemented by a processor of a user mobile device (e.g., 120) in conjunction with one or more sensors, such as an IMU, a proximity sensor, a light sensor, a microphone, a camera, a scale, a micro-electromechanical sensor, etc. (e.g., 368).

Following the operations in block 3412 of the method 3400, the processor may perform operations in block 3424 including receiving, from the store management entity server, a substitute product indication in which the substitute product indication identifies an unavailable product on the shopping list and an available product considered a substitute product for the unavailable product, and in which the initial route to travel through the store for picking the one or more products includes a route to the substitute product. Following the operations in block 3424, the processor may perform the operations in block 3414 of the method 3400 to receive an initial route to travel through the store for picking the one or more products in which the initial route to travel through the store includes a route to the substitute product.

Various embodiments illustrated and described are provided merely as examples to illustrate various features of the claims. However, features shown and described with respect to any given embodiment are not necessarily limited to the associated embodiment and may be used or combined with other embodiments that are shown and described. Further, the claims are not intended to be limited by any one example embodiment. For example, one or more of the operations of the methods 700, 710, 720, 800, 900, 1000, 1100, 1200, 1300, 1400, 1500, 1600, 1700, 1800, 1900, 2000, 2100, 3000, 3100, 3101, 3200, 3201, 3202, 3203, 3300, 3301, 3302, 3303, 3304, 3400, 3401, 3402, and/or 3404 may be substituted for or combined with one or more operations of the methods 700, 710, 720, 800, 900, 1000, 1100, 1200, 1300, 1400, 1500, 1600, 1700, 1800, 1900, 2000, 2100, 3000, 3100, 3101, 3200, 3201, 3202, 3203, 3300, 3301, 3302, 3303, 3304, 3400, 3401, 3402, and/or 3404.

Implementation examples are described in the following paragraphs. While some of the following implementation examples are described in terms of example methods, further example implementations may include: the example methods discussed in the following paragraphs implemented by a store management entity server, an ESL, and/or a user mobile device, including a processor configured to perform operations of the example methods; the example methods discussed in the following paragraphs implemented by a store management entity server, an ESL, and/or a user mobile device, including means for performing functions of the example methods; the example methods discussed in the following paragraphs implemented in a processor use in a store management entity server, an ESL, and/or a user mobile device that is configured to perform the operations of the example methods; and the example methods discussed in the following paragraphs implemented as a non-transitory processor-readable storage medium having stored thereon processor-executable instructions configured to cause a processor or modem processor to perform the operations of the example methods.

A number of different cellular and mobile communication services and standards are available or contemplated in the future, all of which may implement and benefit from the various aspects. Such services and standards may include, e.g., third generation partnership project (3GPP), long term evolution (LTE) systems, third generation wireless mobile communication technology (3G), fourth generation wireless mobile communication technology (4G), fifth generation wireless mobile communication technology (5G), global system for mobile communications (GSM), universal mobile telecommunications system (UMTS), 3GSM, general packet radio service (GPRS), code division multiple access (CDMA) systems (e.g., cdmaOne, CDMA1020TM), EDGE, advanced mobile phone system (AMPS), digital AMPS (IS-136/TDMA), evolution-data optimized (EV-DO), digital enhanced cordless telecommunications (DECT), Worldwide Interoperability for Microwave Access (WiMAX), wireless local area network (WLAN), Wi-Fi Protected Access I & II (WPA, WPA2), integrated digital enhanced network (iDEN), C-V2X, V2V, V2P, V2I, and V2N, etc. Each of these technologies involves, for example, the transmission and reception of voice, data, signaling, and/or content messages. It should be understood that any references to terminology and/or technical details related to an individual telecommunication standard or technology are for illustrative purposes only, and are not intended to limit the scope of the claims to a particular communication system or technology unless specifically recited in the claim language.

The foregoing method descriptions and the process flow diagrams are provided merely as illustrative examples and are not intended to require or imply that the operations of various embodiments must be performed in the order presented. As will be appreciated by one of skill in the art the order of operations in the foregoing embodiments may be performed in any order. Words such as "thereafter," "then," "next," etc. are not intended to limit the order of the operations; these words are used to guide the reader through the description of the methods. Further, any reference to claim elements in the singular, for example, using the articles "a," "an," or "the" is not to be construed as limiting the element to the singular.

Various illustrative logical blocks, modules, components, circuits, and algorithm operations described in connection with the embodiments disclosed herein may be implemented as electronic hardware, computer software, or combinations of both. To clearly illustrate this interchangeability of hardware and software, various illustrative components, blocks, modules, circuits, and operations have been described above generally in terms of their functionality. Whether such functionality is implemented as hardware or software depends upon the particular application and design constraints imposed on the overall system. Skilled artisans may implement the described functionality in varying ways for each particular application, but such embodiment decisions should not be interpreted as causing a departure from the scope of the claims.

The hardware used to implement various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of receiver smart objects, e.g., a combination of a DSP and a microprocessor, a plurality of microprocessors, one or more microprocessors in conjunction with a DSP core, or any other such configuration. Alternatively, some operations or methods may be performed by circuitry that is specific to a given function.

In one or more embodiments, the functions described may be implemented in hardware, software, firmware, or any combination thereof. If implemented in software, the functions may be stored as one or more instructions or code on a non-transitory computer-readable storage medium or non-transitory processor-readable storage medium. The operations of a method or algorithm disclosed herein may be embodied in a processor-executable software module or processor-executable instructions, which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, 7PROM, FLASH memory, CD-ROM or other optical disk storage, magnetic disk storage or other magnetic storage smart objects, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

The preceding description of the disclosed embodiments is provided to enable any person skilled in the art to make or use the claims. Various modifications to these embodiments will be readily apparent to those skilled in the art, and the generic principles defined herein may be applied to other embodiments within the scope of the claims. Thus, the present disclosure is not intended to be limited to the embodiments shown herein but is to be accorded the widest scope consistent with the following claims.

## Claims

1. A method for supporting in-store product picking performed by a processor of a store management entity server, comprising:
receiving (3310) first location information indicating a first location in a store of a user mobile device operated by a store picker;
receiving (3312) a shopping list of the user mobile device;
determining (3314) an initial route for the store picker to travel through the store for picking one or more products on the shopping list based on the first location; and
sending (3316) the initial route to travel through the store for picking the one or more products on the shopping list to the user mobile device;
determining a level of congestion for a section of the store based at least in part on received radio frequency, RF, measurements from one or more electronic shelf labels, ESLs, in the section of the store, wherein the initial route to travel through the store for picking one or more products on the shopping list is based at least in part on the determined level of congestion for the section of the store.

2. The method of claim 1, further comprising:
identifying one or more electronic shelf labels, ESLs, in relation to the initial route to travel through the store; and
sending at least one operation message to selected one or more ESL in the store, wherein the at least one operation message sent to selected one or more of the ESLs comprises:
an active operation message to operate in an active operation mode sent to ESLs relevant to the initial route to travel through the store and associated with products on the shopping list.

3. The method of claim 2, wherein the at least one operation message sent to selected one or more of the ESLs comprises:
a passive operation message for the ESL to operate in a passive operation mode sent to ESLs not or no longer relevant to the initial route to travel through the store.

4. The method of claim 1, wherein at least part of the first location information is received from one or more electronic shelf labels, ESLs, in the store.

5. The method of claim 1, wherein the first location information is received from the user mobile device.

6. The method of claim 1, further comprising:
receiving second location information indicating a second location of a user mobile device in the store, wherein the second location is associated with one product from the shopping list;
determining an updated route to travel through the store from the second location to a third location associated with another item on the shopping list; and
sending the updated route to travel through the store to the user mobile device.

7. The method of claim 1, wherein determining the initial route to travel through the store for picking one or more products on the shopping list is based at least in part on one or more picking goals including at least one of minimizing an overall distance traveled within the store by the user mobile device, avoiding other store pickers, avoiding currently congested aisles, or avoiding other customers.

8. The method of claim 1, further comprising:
determining a substitute product in response to determining a product on the shopping list is not available in the store, wherein the initial route to travel through the store directs the user mobile device to the substituted product.

9. A method for supporting in-store product picking performed by a processor of a user mobile device operated by a store picker, comprising:
sending (3410), to a store management entity server, first location information indicating a first location in a store of the user mobile device;
sending (3412), to the store management entity server, a shopping list of the user mobile device including one or more products to be picked; and
receiving (3414) an initial route, determined by the store management entity server according to the method of claim 1, to travel through the store for picking the one or more products to be picked based on the first location; and
displaying the initial route to travel through the store.

10. A store management entity server (150), comprising:
a transceiver; and
a processor coupled to the transceiver, wherein the processor is configured with processor-executable instructions to:
receive first location information indicating a first location in a store of a user mobile device operated by a store picker;
receive a shopping list of the user mobile device;
determine an initial route for the store picker to travel through the store for picking one or more products on the shopping list based on the first location; and
send the initial route to travel through the store for picking the one or more products on the shopping list to the user mobile device., wherein the processor is further configured with processor-executable instructions to: determine a level of congestion for an aisle in the store based at least in part on received radio frequency, RF, measurements from one or more electronic shelf labels, ESLs, in the aisle, wherein the initial route to travel through the store for picking one or more products on the shopping list is based at least in part on the determined level of congestion for the aisle.

11. The store management entity server of claim 10, wherein the processor is further configured with processor-executable instructions to:
identify one or more electronic shelf labels, ESLs, in relation to the initial route to travel through the store for picking one or more products on the shopping list ; and
send at least one operation message to selected one or more ESLs in the store, wherein the at least one operation message sent to selected one or more of the ESLs comprises an active operation message to operate in an active operation mode sent to ESLs relevant to the initial route to travel through the store for picking one or more products on the shopping list and associated with products on the shopping list.

12. The store management entity server of claim 11, wherein the processor is further configured with processor-executable instructions such that the at least one operation message sent to selected one or more of the ESLs comprises a passive operation message for the ESL to operate in a passive operation mode sent to ESLs not or no longer relevant to the initial route to travel through the store for picking one or more products on the shopping list.

13. The store management entity server of claim 12, wherein the processor is further configured with processor-executable instructions such that at least part of the first location information is received from one or more electronic shelf labels, ESLs, in the store.

14. A user mobile device (120), comprising:
a transceiver; and
a processor coupled to the transceiver, wherein the processor is configured with processor-executable instructions to:
send, to a store management entity server, first location information indicating a first location in a store of the user mobile device;
send, to the store management entity server, a shopping list of the user mobile device including one or more products to be picked; and
receive an initial route, determined by the store management entity server according to claim 10, to travel through the store for picking the one or more products to be picked based on the first location; and
display the initial route to travel through the store.

15. A non-transitory processor-readable storage medium having stored thereon processor-executable instructions configured to cause a processor to perform the steps of any one of the methods of the claims 1 to 9.

## Patentansprüche

1. Verfahren zum Unterstützen von In-Store-Produktpicking, ausgeführt von einem Prozessor eines Filialmanagement-Servers, das Folgendes beinhaltet:
Empfangen (3310) erster Standortinformationen, die einen ersten Standort eines von einem Picker bedienten Benutzermobilgeräts in einem Laden angeben;
Empfangen (3312) einer Einkaufsliste des Benutzermobilgeräts;
Bestimmen (3314), auf der Basis des ersten Standorts, einer anfänglichen Route, die der Picker durch den Laden zurücklegen soll, um ein oder mehrere Produkte auf der Einkaufsliste zu picken; und
Senden (3316) der anfänglichen Route durch den Laden zum Picken der ein oder mehreren Produkte auf der Einkaufsliste zu dem Benutzermobilgerät;
Bestimmen eines Überlastungsgrads für einen Bereich des Ladens zumindest teilweise auf der Basis von empfangenen RF-(Radio Frequency)-Messwerten von einem oder mehreren ESLs (Electronic Shelf Labels) in diesem Bereich des Ladens, wobei die anfängliche Route durch den Laden zum Picken eines oder mehrerer Produkte auf der Einkaufsliste zumindest teilweise auf dem bestimmten Überlastungsgrad für diesen Bereich des Ladens basiert.

2. Verfahren nach Anspruch 1, das ferner Folgendes beinhaltet:
Identifizieren eines oder mehrerer ESLs (Electronic Shelf Labels) in Bezug auf die anfängliche Route durch den Laden; und
Senden mindestens einer Betriebsnachricht zu ausgewählten ein oder mehreren ESL im Laden, wobei die mindestens eine zu ausgewählten ein oder mehreren der ESL gesendete Betriebsnachricht Folgendes umfasst:
eine aktive Betriebsnachricht zum Arbeiten in einem aktiven Betriebsmodus, die zu ESLs gesendet wird, die für die anfängliche Route durch den Laden relevant und mit Produkten auf der Einkaufsliste assoziiert sind.

3. Verfahren nach Anspruch 2, wobei die mindestens eine zu ausgewählten ein oder mehreren der ESL gesendete Betriebsnachricht Folgendes umfasst:
eine passive Betriebsnachricht, damit die ESL in einem passiven Betriebsmodus arbeitet, die zu ESLs gesendet wird, die für die anfängliche Route durch den Laden nicht oder nicht mehr relevant sind.

4. Verfahren nach Anspruch 1, wobei zumindest ein Teil der ersten Standortinformationen von einem oder mehreren ESLs (Electronic Shelf Labels) in dem Laden empfangen wird.

5. Verfahren nach Anspruch 1, wobei die ersten Standortinformationen vom Benutzermobilgerät empfangen werden.

6. Verfahren nach Anspruch 1, das ferner Folgendes beinhaltet:
Empfangen zweiter Standortinformationen, die einen zweiten Standort eines Benutzermobilgeräts in dem Laden angeben, wobei der zweite Standort mit einem Produkt aus der Einkaufsliste assoziiert ist;
Bestimmen einer aktualisierten Route durch den Laden vom zweiten Standort zu einem mit einem anderen Artikel auf der Einkaufsliste assoziierten dritten Standort; und
Senden der aktualisierten Route durch den Laden zu dem Benutzermobilgerät.

7. Verfahren nach Anspruch 1, wobei das Bestimmen der anfänglichen Route durch den Laden zum Picken eines oder mehrerer Produkte auf der Einkaufsliste zumindest teilweise auf einem oder mehreren Picking-Zielen basiert, darunter mindestens eines von Minimieren der vom Benutzermobilgerät in dem Laden zurückgelegten Gesamtdistanz, Vermeiden anderer Picker, Vermeiden derzeit überfüllter Gänge oder Vermeiden anderer Kunden.

8. Verfahren nach Anspruch 1, das ferner Folgendes beinhaltet:
Bestimmen eines Ersatzprodukts als Reaktion auf die Feststellung, dass ein Produkt auf der Einkaufsliste im Laden nicht verfügbar ist, wobei die anfängliche Route durch den Laden das Benutzermobilgerät zu dem Ersatzprodukt leitet.

9. Verfahren zum Unterstützen von In-Store-Picking, ausgeführt von einem Prozessor eines von einem Picker bedienten Benutzermobilgeräts, das Folgendes beinhaltet:
Senden (3410), zu einem Filialmanagement-Server, erster Standortinformationen, die einen ersten Standort des Benutzermobilgeräts in einem Laden angeben;
Senden (3412), zu dem Filialmanagement-Server, einer Einkaufsliste des Benutzermobilgeräts, die ein oder mehrere zu pickende Produkte enthält; und
Empfangen (3414) einer anfänglichen Route, bestimmt vom Filialmanagement-Server gemäß dem Verfahren nach Anspruch 1, durch den Laden zum Picken der ein oder mehreren zu pickenden Produkte auf der Basis des ersten Standorts; und
Anzeigen der anfänglichen Route durch den Laden.

10. Filialmanagement-Server (150), der Folgendes umfasst:
einen Transceiver; und
einen mit dem Transceiver gekoppelten Prozessor, wobei der Prozessor mit prozessorausführbaren Befehlen konfiguriert ist zum:
Empfangen erster Standortinformationen, die einen ersten Standort eines von einem Picker bedienten Benutzermobilgeräts in einem Laden angeben;
Empfangen einer Einkaufsliste des Benutzermobilgeräts;
Bestimmen, auf der Basis des ersten Standorts, einer anfänglichen Route, die der Picker durch den Laden zurücklegen soll, um ein oder mehrere Produkte auf der Einkaufsliste zu picken; und
Senden der anfänglichen Route durch den Laden zum Picken der ein oder mehreren Produkte auf der Einkaufsliste zu dem Benutzermobilgerät, wobei der Prozessor ferner konfiguriert ist mit prozessorausführbaren Befehlen zum:
Bestimmen eines Überlastungsgrads für einen Gang in dem Laden zumindest teilweise auf der Basis von empfangenen RF-(Radio Frequency)-Messwerten von einem oder mehreren ESLs (Electronic Shelf Labels) in dem Gang, wobei die anfängliche Route durch den Laden zum Picken eines oder mehrerer Produkte auf der Einkaufsliste zumindest teilweise auf dem bestimmten Überlastungsgrad für den Gang basiert.

11. Filialmanagement-Server nach Anspruch 10, wobei der Prozessor ferner mit prozessorausführbaren Befehlen konfiguriert ist zum:
Identifizieren eines oder mehrerer ESLs (Electronic Shelf Labels) in Bezug auf die anfängliche Route durch den Laden zum Picken eines oder mehrerer Produkte auf der Einkaufsliste; und
Senden mindestens einer Betriebsnachricht zu ausgewählten ein oder mehreren ESL im Laden, wobei die mindestens eine zu ausgewählten ein oder mehreren der ESLs gesendete Betriebsnachricht eine aktive Betriebsnachricht zum Arbeiten in einem aktiven Betriebsmodus umfasst, die zu ESLs gesendet wird, die für die anfängliche Route durch den Laden zum Picken eines oder mehrerer Produkte auf der Einkaufsliste relevant und mit Produkten auf der Einkaufsliste assoziiert sind.

12. Filialmanagement-Server nach Anspruch 11, wobei der Prozessor ferner mit prozessorausführbaren Befehlen konfiguriert ist, so dass die mindestens eine zu ausgewählten ein oder mehreren ESLs gesendete Betriebsnachricht eine passive Betriebsnachricht umfasst, damit das ESL in einem passiven Betriebsmodus arbeitet, die zu ESLs gesendet wird, die für die anfängliche Route durch den Laden zum Picken eines oder mehrerer Produkte auf der Einkaufsliste nicht oder nicht mehr relevant sind.

13. Filialmanagement-Server nach Anspruch 12, wobei der Prozessor ferner mit prozessorausführbaren Befehlen konfiguriert ist, so dass zumindest ein Teil der ersten Standortinformationen von einem oder mehreren ESLs (Electronic Shelf Labels) in dem Laden empfangen wird.

14. Benutzermobilgerät (120), das Folgendes umfasst:
einen Transceiver; und
einen mit dem Transceiver gekoppelten Prozessor, wobei der Prozessor mit prozessorausführbaren Befehlen konfiguriert ist zum:
Senden, zu einem Filialmanagement-Server, erster Standortinformationen, die einen ersten Standort des Benutzermobilgeräts in einem Laden angeben;
Senden, zu dem Filialmanagement-Server, einer Einkaufsliste des Benutzermobilgeräts, die ein oder mehrere zu pickende Produkte enthält; und
Empfangen einer anfänglichen Route, bestimmt vom Filialmanagement-Server gemäß dem Verfahren nach Anspruch 10, durch den Laden zum Picken der ein oder mehreren zu pickenden Produkte auf der Basis des ersten Standorts; und
Anzeigen der anfänglichen Route durch den Laden.

15. Nichtflüchtiges, prozessorlesbares Speichermedium, auf dem prozessorausführbare Befehle gespeichert sind, die zum Veranlassen eines Prozessors zum Ausführen der Schritte eines der Verfahren nach den Ansprüchen 1 bis 9 konfiguriert sind.

## Revendications

1. Procédé de prise en charge de la collecte d'articles en magasin par un processeur d'un serveur d'entité de gestion de magasin, comprenant :
la réception (3310) de premières informations d'emplacement indiquant un premier emplacement dans un magasin d'un dispositif utilisateur mobile exploité par un préposé à la collecte en magasin ;
la réception (3312) d'une liste d'achats du dispositif utilisateur mobile ;
la détermination (3314) d'un itinéraire initial du préposé à la collecte en magasin à travers le magasin pour collecter un ou plusieurs articles de la liste d'achats en fonction du premier emplacement ; et
l'envoi (3316) de l'itinéraire initial à travers le magasin pour collecter les un ou plusieurs articles de la liste d'achats au dispositif utilisateur mobile ;
la détermination d'un niveau d'encombrement d'une section du magasin sur la base au moins en partie de mesures de fréquence radio, RF, reçues, à partir d'une ou plusieurs étiquettes électroniques d'étagères, ESL, dans la section du magasin, dans lequel l'itinéraire initial à travers le magasin afin de collecter un ou plusieurs articles de la liste d'achats est basé au moins en partie sur le niveau déterminé d'encombrement de la section du magasin.

2. Procédé selon la revendication 1, comprenant en outre :
l'identification d'une ou plusieurs étiquettes électroniques d'étagères, ESL, relativement à l'itinéraire initial à travers le magasin ; et
l'envoi d'au moins un message de fonctionnement à une ou plusieurs ESL sélectionnées dans le magasin, dans lequel l'au moins un message de fonctionnement envoyé à une ou plusieurs ESL sélectionnées des ESL comprend :
un message de fonctionnement actif afin de fonctionner dans un mode de fonctionnement actif envoyé à des ESL pertinentes pour l'itinéraire initial à travers le magasin et associé à des articles de la liste d'achats.

3. Procédé selon la revendication 2, dans lequel l'au moins un message de fonctionnement envoyé à une ou plusieurs ESL sélectionnées comprend :
un message de fonctionnement passif de l'ESL pour fonctionner dans un mode de fonctionnement passif envoyé à des ESL qui ne sont pas ou plus pertinentes pour l'itinéraire initial à travers le magasin.

4. Procédé selon la revendication 1, dans lequel au moins une partie des premières informations d'emplacement est reçue à partir d'une ou plusieurs étiquettes électroniques d'étagères, ESL, dans le magasin.

5. Procédé selon la revendication 1, dans lequel les premières informations d'emplacement sont reçues à partir du dispositif utilisateur mobile.

6. Procédé selon la revendication 1, comprenant en outre :
la réception de secondes informations d'emplacement indiquant un second emplacement d'un dispositif utilisateur mobile dans le magasin, dans lequel le second emplacement est associé à un article de la liste d'achats ;
la détermination d'un itinéraire à travers le magasin mis à jour du deuxième emplacement à un troisième emplacement associé à un autre article de la liste d'achats ; et
l'envoi de l'itinéraire à travers le magasin mis à jour au dispositif utilisateur mobile.

7. Procédé selon la revendication 1, dans lequel la détermination de l'itinéraire initial à travers le magasin afin de collecter un ou plusieurs articles de la liste d'achats est basé au moins en partie sur un ou plusieurs objectifs de collecte comportant au moins une minimisation d'une distance totale parcourue à l'intérieur du magasin par le dispositif utilisateur mobile, l'évitement d'autres préposés à la collecte en magasin, l'évitement d'allées fortement encombrées ou l'évitement d'autres clients.

8. Procédé selon la revendication 1, comprenant en outre :
la détermination d'un produit de substitution en réponse à la détermination qu'un article de la liste d'achats n'est pas disponible en magasin, dans lequel l'itinéraire initial à travers le magasin oriente le dispositif utilisateur mobile vers le produit de substitution.

9. Procédé de prise en charge de la collecte d'articles en magasin réalisé par un processeur d'un dispositif utilisateur mobile exploité par un préposé à la collecte en magasin, comprenant :
l'envoi (3410), à un serveur d'entité de gestion de magasin, de premières informations d'emplacement indiquant un premier emplacement dans un magasin du dispositif utilisateur mobile ;
l'envoi (3412), au serveur d'entité de gestion du magasin, d'une liste d'achats du dispositif utilisateur mobile comportant un ou plusieurs articles à collecter ; et
la réception (3414) d'un itinéraire initial, déterminé par le serveur d'entité de gestion de magasin conformément au procédé selon la revendication 1, à travers le magasin pour collecter les un ou plusieurs articles à collecter sur la base du premier emplacement ; et
l'affichage de l'itinéraire initial à travers le magasin.

10. Serveur d'entité de gestion de magasin (150), comprenant :
un émetteur-récepteur ; et
un processeur couplé à l'émetteur-récepteur, dans lequel le processeur est configuré avec des instructions exécutables par processeur pour :
recevoir des premières informations d'emplacement indiquant un premier emplacement dans un magasin d'un dispositif utilisateur mobile exploité par un préposé à la collecte en magasin ;
recevoir une liste d'achats de dispositif utilisateur mobile ;
déterminer un itinéraire initial à travers le magasin du collecteur à la collecte afin de collecter un ou plusieurs articles de la liste d'achats sur la base du premier emplacement ; et
envoyer l'itinéraire initiale à travers le magasin afin de collecter les un ou plusieurs articles sur la liste d'achats au dispositif utilisateur mobile, dans lequel le processeur est configuré en outre avec des instructions exécutables par processeur pour :
déterminer un niveau d'encombrement d'une allée dans le magasin sur la base au moins en partie de mesures de fréquence radio, RF, reçues à partir d'une ou plusieurs étiquettes électroniques d'étagères, ESL, dans l'allée, dans lequel l'itinéraire initial à travers le magasin afin de collecter un ou plusieurs articles de la liste d'achats est basé au moins en partie sur le niveau d'encombrement déterminé dans l'allée.

11. Serveur d'entité de gestion de stockage selon la revendication 10, dans lequel le processeur est configuré en outre avec des instructions exécutables par processeur pour :
identifier une ou plusieurs étiquettes électroniques d'étagères, ESL, relativement à l'itinéraire initial à travers le magasin afin de collecter un ou plusieurs articles de la liste d'achats ; et
envoyer au moins un message de fonctionnement à une ou plusieurs ESL sélectionnées dans le magasin, dans lequel l'au moins un message de fonctionnement envoyé à une ou plusieurs ESL sélectionnées des ESL comprend un message de fonctionnement actif pour fonctionner dans un mode de fonctionnement actif envoyé à des ESL pertinentes pour l'itinéraire initial à travers le magasin afin de collecter un ou plusieurs articles sur la liste d'achats et associé à des articles sur la liste d'achats.

12. Serveur d'entité de gestion de stockage selon la revendication 11, dans lequel le processeur est configuré en outre avec des instructions exécutables par processeur de telle sorte que l'au moins un message de fonctionnement envoyé à une ou plusieurs ESL sélectionnées des ESL comprennent un message de fonctionnement passif permettant à l'ESL de fonctionner dans un mode de fonctionnement passif envoyé à des ESL qui ne sont pas ou plus pertinentes pour l'itinéraire initial à travers le magasin afin de collecter un ou plusieurs articles sur la liste d'achats.

13. Serveur d'entité de gestion de stockage selon la revendication 12, dans lequel le processeur est configuré en outre avec des instructions exécutables par processeur de telle sorte qu'au moins une partie des premières informations d'emplacement soit reçue à partir d'une ou plusieurs étiquettes électroniques d'étagères, ESL, dans le magasin.

14. Dispositif utilisateur mobile (120), comprenant :
un émetteur-récepteur ; et
un processeur couplé au récepteur, dans lequel le processeur est configuré avec des instructions exécutables par processeur pour :
envoyer, à un serveur d'entité de gestion de magasin, des premières informations d'emplacement indiquant un premier emplacement dans un magasin du dispositif utilisateur mobile ;
envoyer, au serveur d'entité de gestion du magasin, une liste d'achats du dispositif utilisateur mobile comportant un ou plusieurs articles à collecter ; et
recevoir un itinéraire à travers le magasin initial déterminé par le serveur d'entité de gestion de magasin conformément au procédé selon la revendication 1, afin de collecter un ou plusieurs articles à collecter sur la base du premier emplacement ; et
afficher l'itinéraire initial à travers le magasin.

15. Support de stockage non transitoire lisible par processeur transitoire contenant des instructions exécutables par processeur configurées pour amener un processeur à réaliser les étapes selon l'un quelconque des procédés des revendications 1 à 9.
